# EUROPEAN PATENT APPLICATION

(11) **EP 1 605 363 A1**
(43) Date of publication of application: **14.12.2005**
(21) Application number: 04721681.7
(22) Date of filing: 18.03.2004
(51) Int. Cl.: G06F 13/00, G06F 12/00, H04N 7/173

(54) **INFORMATION OUTPUT DEVICE AND METHOD, INFORMATION RECEPTION DEVICE AND METHOD, INFORMATION PROVIDING DEVICE AND METHOD, RECORDING MEDIUM, INFORMATION PROVIDING SYSTEM, AND PROGRAM**

(30) Priority: 20.03.2003 JP 2003077623
(71) Applicant: OMRON CORPORATION, Kyoto-shi, Kyoto 600-8530 (JP)
(72) Inventor: ANDO, Tannichi, 801, Minamifudodo-cho, Kyoto-shi, Kyoto 6008530 (JP)
(74) Representative: Calderbank, Thomas Roger
(86) International application number: PCT/JP2004/003676
(87) International publication number: WO 2004/084079

(57) **Abstract**

The present invention enables the continuous output of appropriate information at an appropriate timing and in appropriate order with minimal operation. The master control unit 451 controls the output of an aggregate based on an event response control program associated with the aggregate which contains the information being output, of the event response control programs having described therein a command for an event associated with each of the aggregates, and in correspondence with the event. The play list reader 452 controls the output of the information contained in the aggregate based on ordinal data associated with the aggregate, the output of which has been instructed by the master control unit 451, of the ordinal data having described therein the output order of the information associated with each of the aggregates. The present invention may be applied to an in-car information provision terminal device.

## Description

### TECHNICAL FIELD

The present invention generally relates to an information output device and method, an information reception device and method, an information provision device and method, a recording medium, an information provision system, and a program, and in particular to an information output device and method, an information reception device and method, an information provision device and method, a recording medium, an information provision system, and a program for handling information to be provided to a user.

### BACKGROUND ART

In the broadcasting sector, such as in BS (Broadcasting Satellite) digital broadcasts, program details and information such as news are being provided separately from the main image information based on operations with a remote controller.

In the communications sector, pursuant to the advancement of network technology, data communication requiring a broadband communication path as in conventional radio broadcasts or TV broadcasts is now possible via the Internet. In recent years, conventional broadcast-type services, such as the distribution of image data, are being provided at various places in the communications sector utilizing the Internet or the like. Further, using a web browser and acquiring various types of information from across the globe is widely prevalent and has become common.

Nevertheless, since these are being provided with individual technologies or services, a user is required to properly use the respective schemes. This will raise a significant problem from the perspective of convenience.

In light of the existing circumstances described above, a system capable of realizing a service that blends the characteristics of both broadcasting and communication is being strongly desired.

As a specific example, although it is common to listen to FM (Frequency Modulation) radio while driving a vehicle, the driver is only able to listen to information being provided in real time by the broadcasting station. In other words, since a music program may be on the air when the [driver] actually wishes to listen to the weather forecast, or news may be on the air when the [driver] actually wishes to listen to traffic information, the broadcast is not providing a service that enables the [listener] to listen to information of one's choice at any time one pleases.

Meanwhile, when installing and using a personal computer having a wireless connection means for connection to the Internet in a car, although it is possible to operate the web browser and acquire all information accessible via the Internet, it is impossible to operate such [personal computer] with the existing user interface while driving a vehicle.

A user is not wishing to individually take advantage of various devices to obtain any and all information regarding all subjects of one's interest, but is rather wishing to receive necessary information when needed.

In day-to-day life, when the main action is to acquire information in a situation of watching a drama on TV, there is no significant problem in the distribution of programs even with the existing system.

Nevertheless, when the main action is the operation of a vehicle such as driving a car, it could be said that the act of listening to news, weather forecast or traffic information from an FM radio, operating a car audio system with a CD (Compact Disc) changer to play music, and acquiring route guide information while watching the display of the car navigation device is an extremely dangerous act from the perspective of the [driver's] attention being diverted from the driving operation.

A situation requiring the acquisition of information being sent from the outside via a network, such as with an Internet information service, network-type operation management system, portable phone, or email, while engaging in the main action of driving or operation, has increased rapidly in recent years. In the foregoing case, diverting one's attention from the main action needlessly raises problems in terms of safety as described above.

Moreover, it could be said that a user focusing one's consciousness to the acts listed below is under a situation wherein it is difficult to pay attention to a plurality of information sources at the same time:
- Driving or operation of a vehicle, aircraft or ship;
- Desk work, assembly, packaging or various operations of machines, devices or equipment servicing;
- Appreciation of movies or music;
- Work, studying or reading; and
- Conversation with others during servicing, meetings or presentations.

In addition, a user focusing one's consciousness to the acts listed below will have problems in terms of safety when paying attention to a plurality of information sources at the same time:
- Act of operating transports such as a vehicle, motorcycle, aircraft, ship or train in a particularly dangerous situation;
- Operation of a crane;
- Operation or handling of dangerous objects at high places; and
- Other operations requiring a high level of concentration.

In order to enable the [user] to focus one's consciousness to the main action, the [user] must be able to collectively acquire necessary information with minimal operation. In order to realize this, the following requirements are necessary:
(A) Information sources are integrated, and it is not necessary to pay attention to a plurality of information sources at the same time;
(B) It is possible to designate which information is necessary;
(C) Concentration will not be lost even upon performing the operation for obtaining information;
(D) There is hardly any unnecessary information in the presented information;
(E) Relationship of the information is organized and presented;
(F) Appropriate information is provided at an appropriate timing and in appropriate order;
(G) Information requiring renewal is automatically renewed;
(H) It is possible to prevent the user from overlooking necessary information; and
(I) Information is provided with an appropriate provision method according to the situation.

As described below, all requirements (A) to (I) must be satisfied in order to "reliably provide information in an appropriate amount as required by a user at an appropriate timing and in appropriate order and enable the effective use thereof to such user who is under a situation where it is difficult to pay attention to a plurality of information sources at the same time as a result of engaging in a main action other than obtaining information".

When any one of the requirements is not satisfied, it is not possible to sufficiently achieve the object since the user's attention will be diverted from the main action.

Requirements (A) to (I) are explained in detailed below.

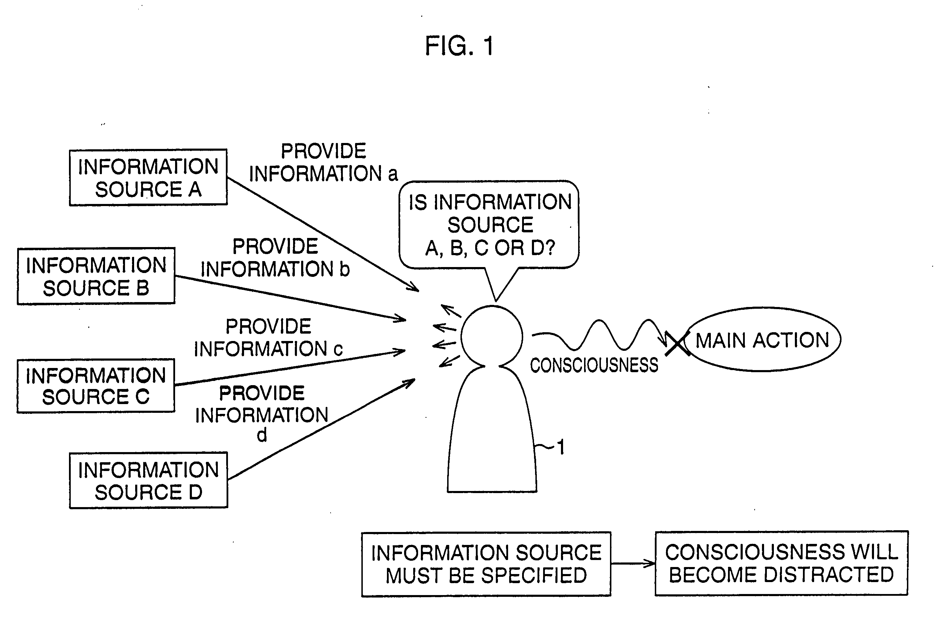

When requirement (A) is not satisfied, as shown in Fig. 1, if a plurality of information sources for acquiring information is dispersed, the user 1, in order to receive information, must pay attention to each information source, confirm the type of information that has arrived, and sort out the necessary information.

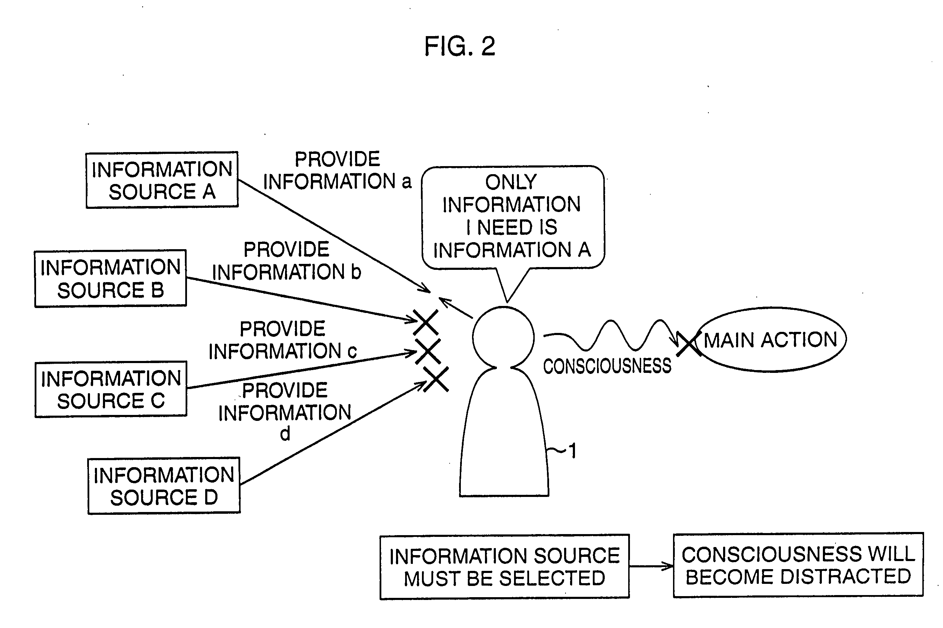

When requirement (B) is not satisfied, as shown in Fig. 2, if it is not possible to designate the necessary information, the user 1 will also receive unnecessary information in addition to the necessary information, and, since the user 1 will have to sort out the necessary information among the presented information, attention will be diverted from the main action.

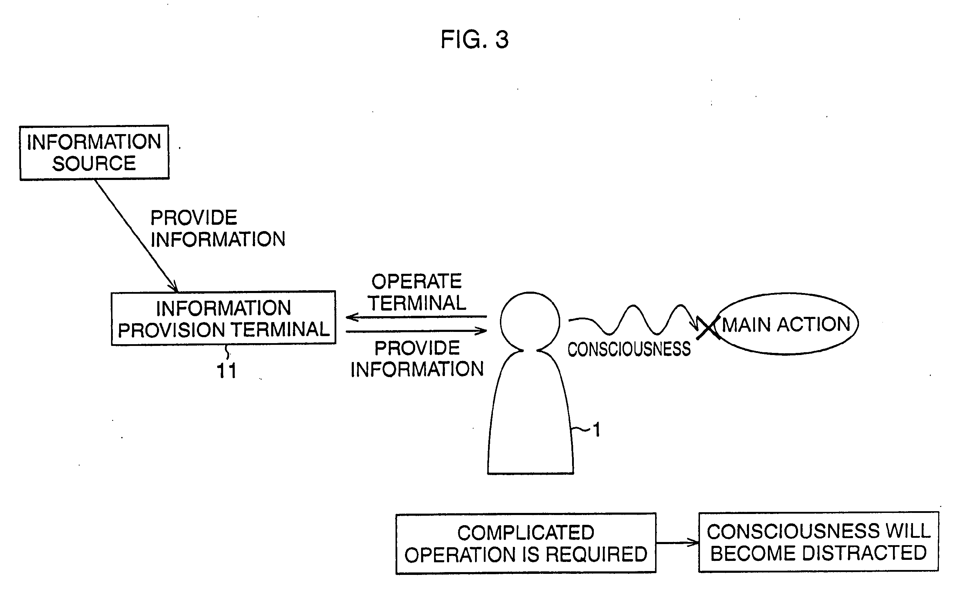

When requirement (C) is not satisfied, as shown in Fig. 3, if numerous operations are required in the information provision device 11 for acquiring information, since the user 1 will be distracted by the operation of the terminal, attention will be diverted from the main action.

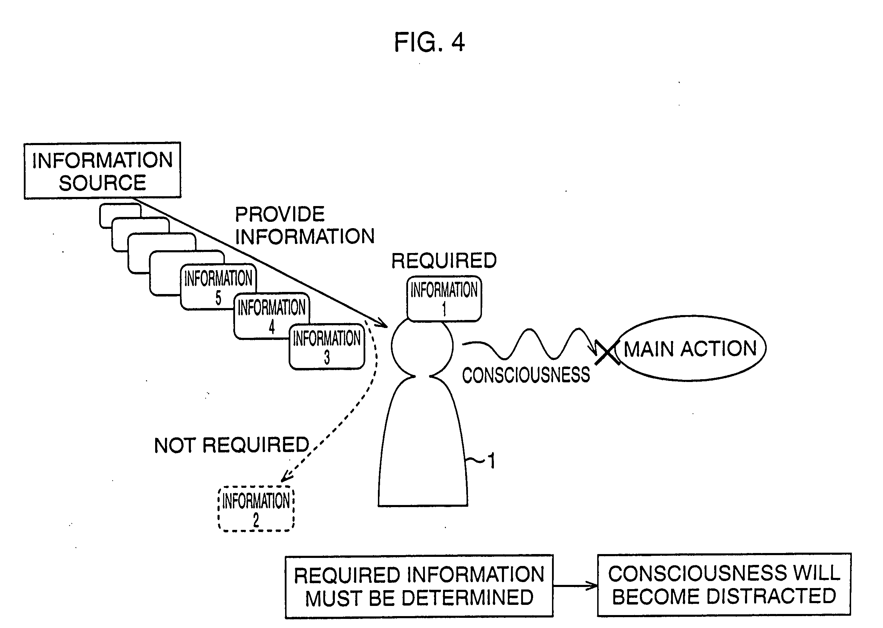

When requirement (D) is not satisfied, as shown in Fig. 4, if there is much unnecessary information among the presented information, since the user 1 will have to sort out the necessary information among the presented information, attention will be diverted from the main action.

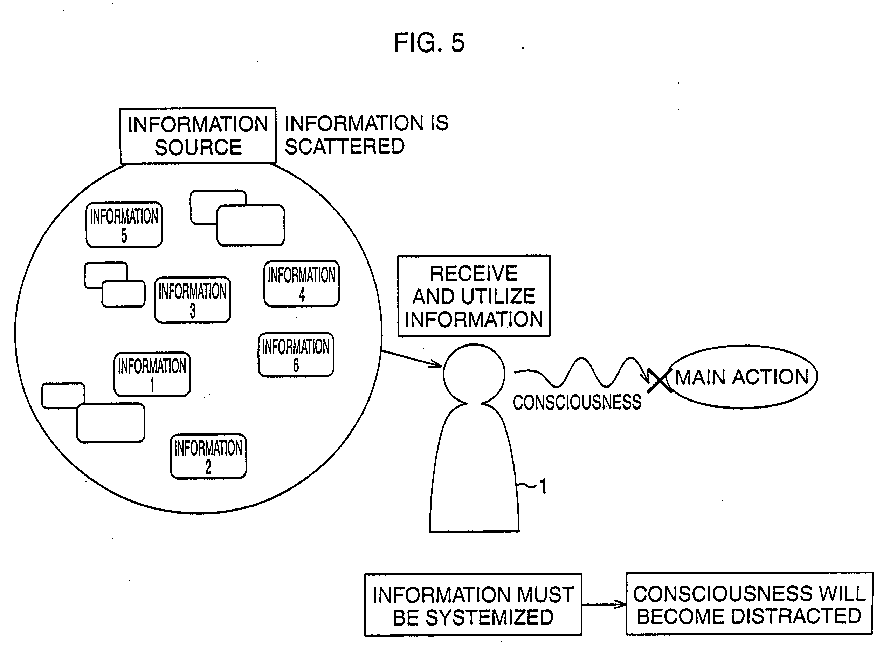

When requirement (E) is not satisfied, as shown in Fig. 5, if information is presented in an unorganized manner when the user 1 wishes to receive various types of information, since the [user 1] will focus on receiving and utilizing information, attention will be diverted from the main action.

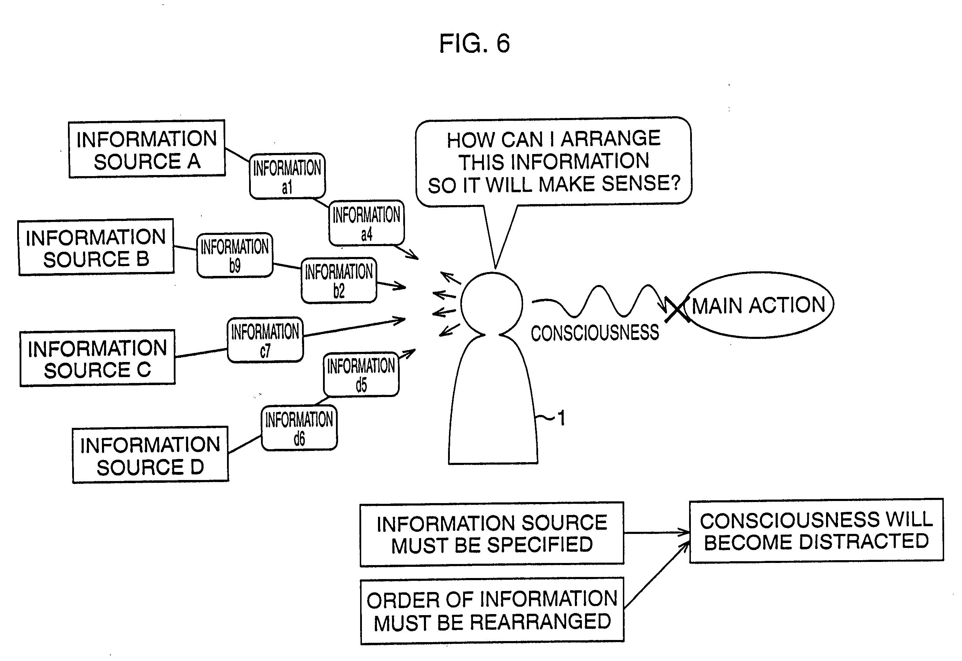

When requirement (F) is not satisfied, as shown in Fig. 6, if appropriate information is not provided at an appropriate timing and in appropriate order, since the user 1 will have to understand the plurality of types of information provided at the same time and select the necessary information, switch to another information source to search for the necessary information, or perform operations for switching the order, attention will be diverted from the main action.

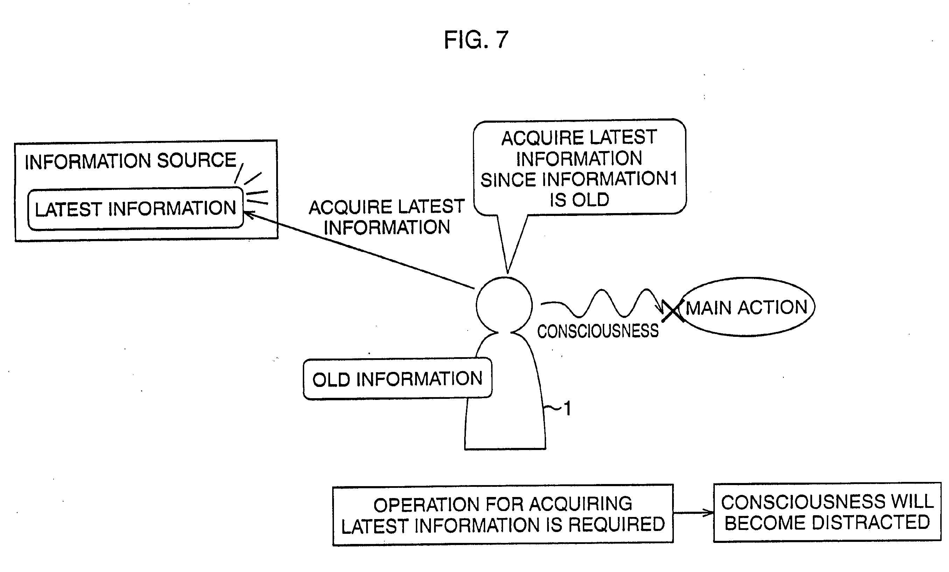

When requirement (G) is not satisfied, as shown in Fig. 7, it is necessary to renew the information to be provided in correspondence to the change of the user 1 or the change in the environment. When [information] is not automatically renewed, since the user 1 will have to check to see whether the information was renewed, attention will be diverted from the main action.

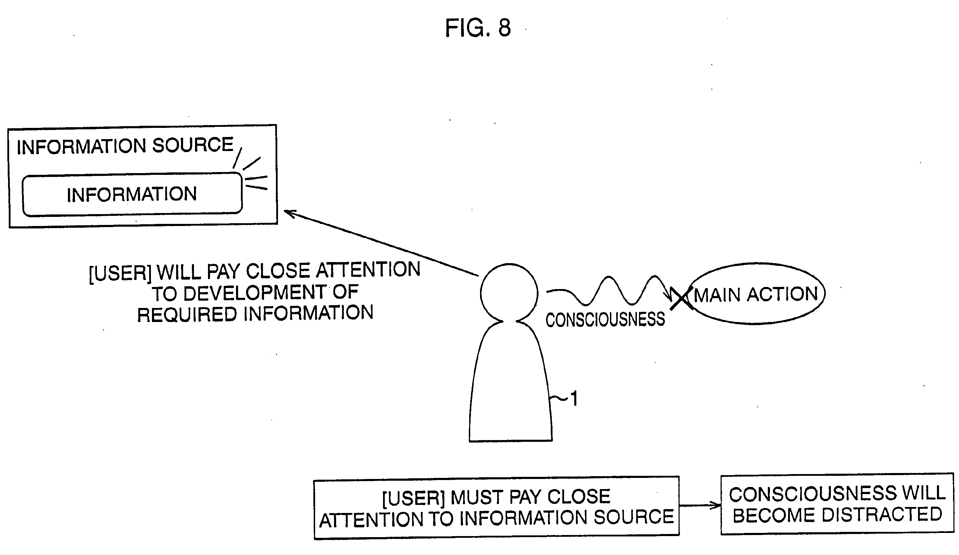

When requirement (H) is not satisfied, a shown in Fig. 8, in a case where the user 1 may be unaware and overlook the information presented from the information source, since the user 1 will have to pay attention so as not to overlook important information, attention will be diverted from the main action.

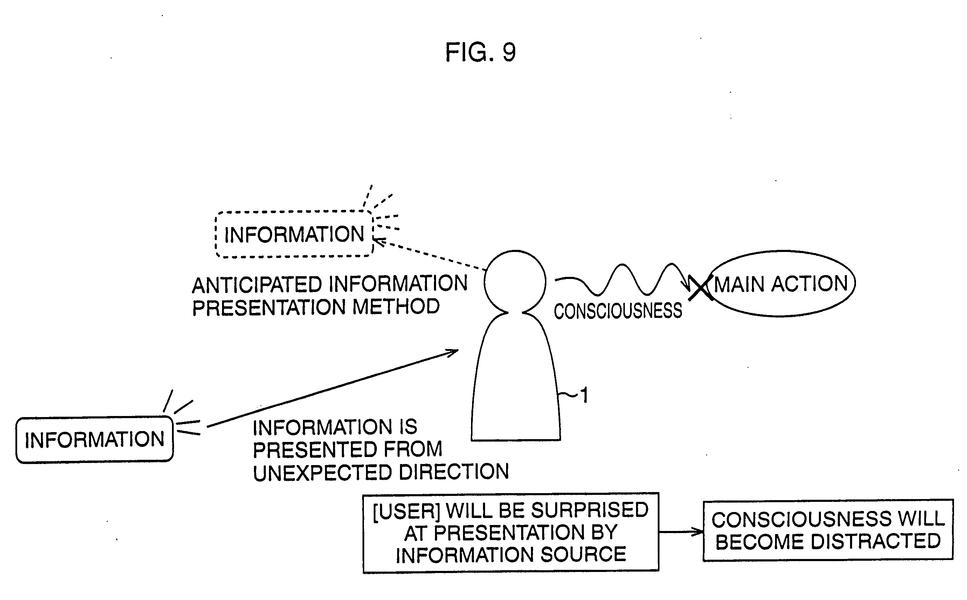

When requirement (I) is not satisfied, as shown in Fig. 9, if the method of providing information to the user 1 is inappropriate when information is presented from the information source, attention of the user will be diverted from the main action.

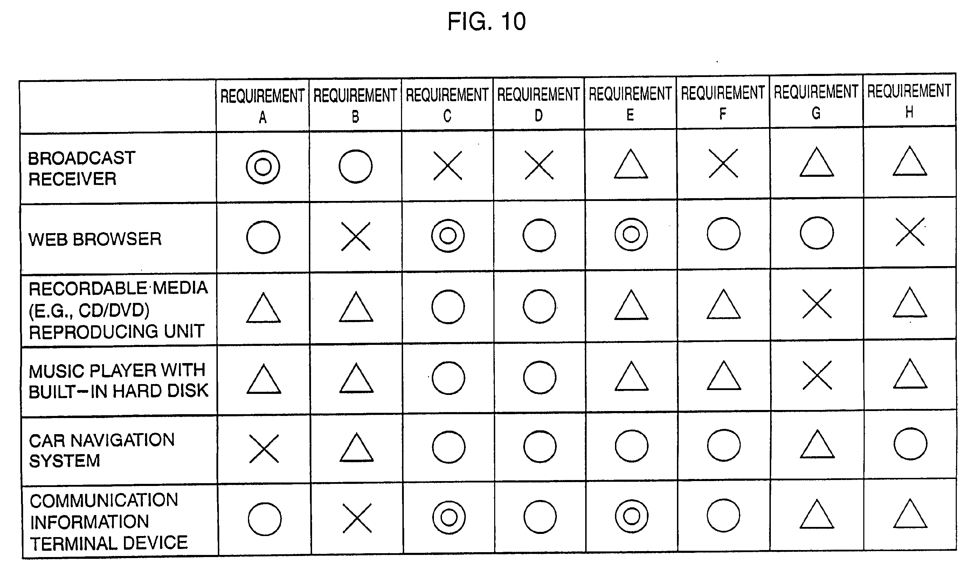

Fig. 10 is a diagram showing whether the conventional information provision systems satisfy the respective requirements (A) to (I). In Fig. 10, a double circle shows that it is favorable, and a circle shows that it is somewhat favorable. In Fig. 10, a triangle shows that it is somewhat inferior, and an X shows that it is inferior.

Although there have been numerous methods for providing information to users from the past, all of these methods only satisfy a part of the requirements (A) to (I), and there was no method that satisfied all of the above.

The following is an examination of the individual methods.

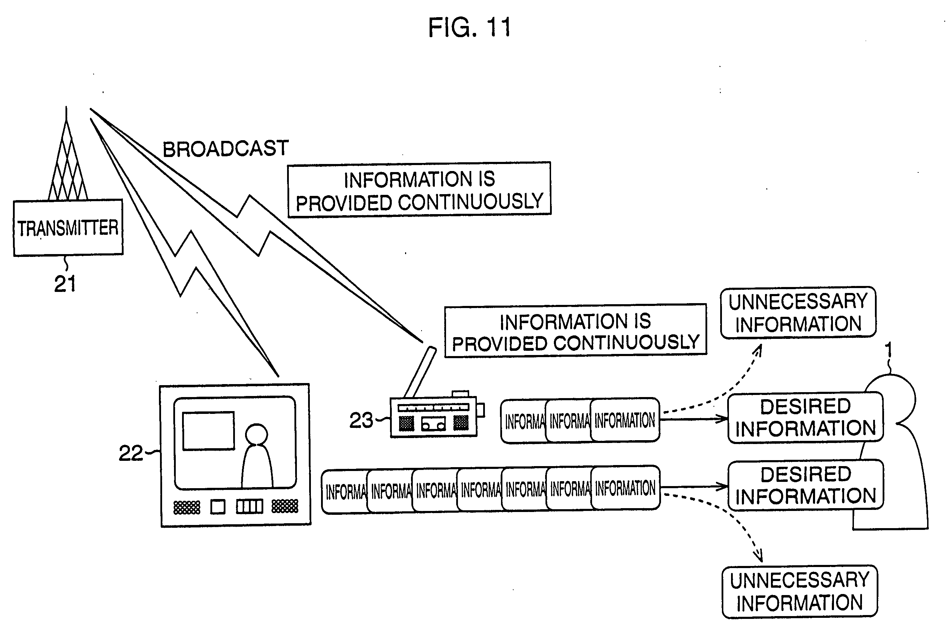

Fig. 11 is a diagram for explaining the problems in contents distribution employing a broadcast receiver such as a TV set or a radio broadcast receiver. In other words, Fig. 11 is a diagram for explaining the problems upon acquiring information from a transmission medium such as a TV broadcast or radio broadcast.

In a transmission medium such as a TV broadcast or radio broadcast, information predetermined based on the day of the week or the time slot is continuously provided to the user. The user 1, once turning on the power of the TV set 22 or the radio broadcast receiver 23, will be able to continuously and constantly receive information without having to make any complicated operation in particular.

Nevertheless, information from the TV set 22 or radio broadcast receiver 23 is determined based on the convenience or intention of the information provider side (transmitter 21), and the user 1 cannot necessarily acquire one's desired information at an appropriate timing.

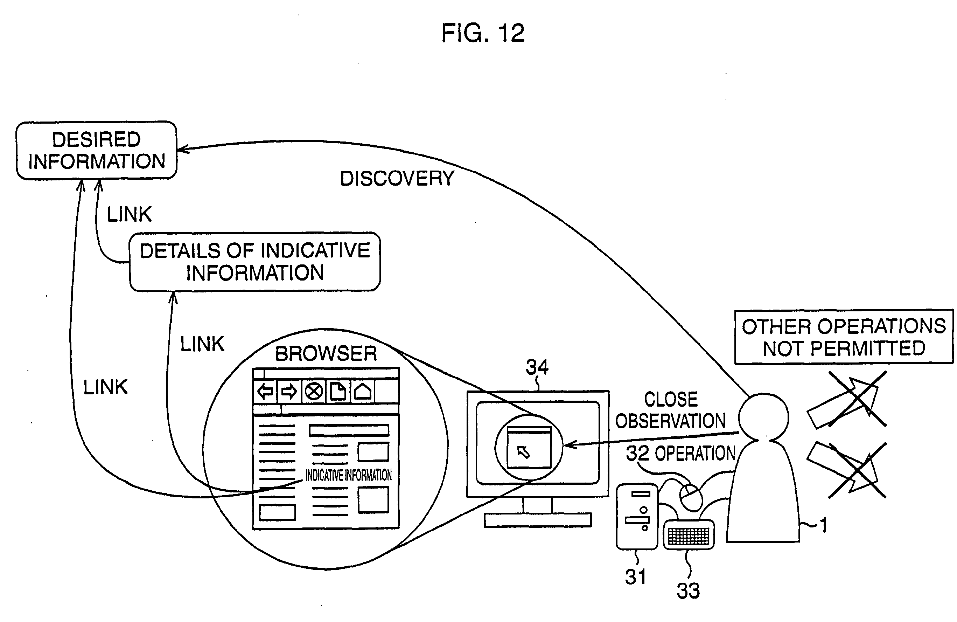

Fig. 12 is a diagram for explaining the problems in contents distribution employing a web browser device. The referral relationship of information is sufficiently managed in contents distribution via the Internet, and the user 1 is able to operate a PC (Personal Computer) or the like with one's intention to acquire one's desired information.

Nevertheless, in order to acquire information, the user 1 will have to operate an input device such as a mouse 32 or keyboard 33 of an information terminal device 31 such as a PC and view the image displayed on a monitor 34. In other words, since the [user 1] will have to pay close attention to this operation, even if there are other items of interest, it is difficult to implement two or more acts concurrently. Further, in order to acquire information, since the user 1 will have to actively operate the information terminal, the user 1 is not able to continuously acquire information as with the TV set 22 or radio broadcast receiver 23.

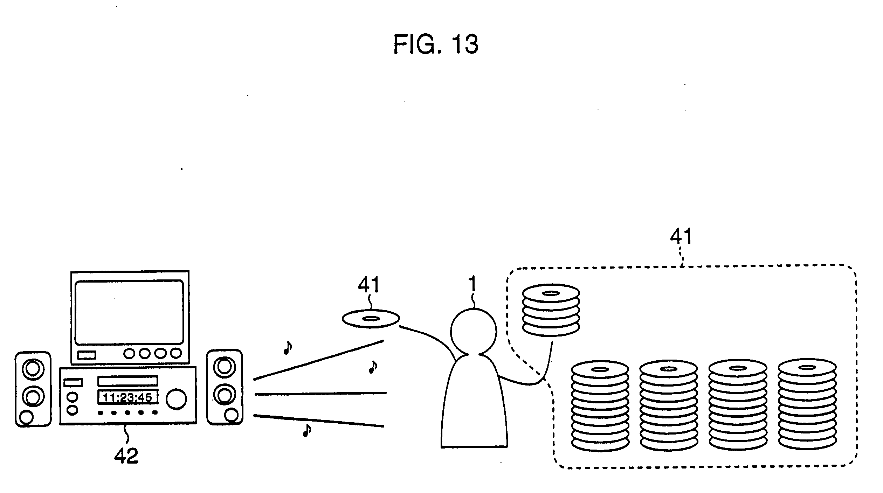

Fig. 13 is a diagram for explaining the problems in contents distribution employing a recording media (e.g., CD or DVD (Digital Versatile Disc)) reproduction device.

A recording media 41 such as a CD or DVD has recorded thereon information required by the user 1. Information recorded on the recording media 41 is fixed. The user 1 may listen to (view) the contents of one's choice stored in the recording media.

Nevertheless, when wishing to listen to (view) something other than the contents that are currently being played, an operation of searching for a desired CD or DVD and replacing the disc in the player 42 will become necessary on a case-by-case basis. Further, since the contents stored in the recording media are fixed, when listening to (viewing) new contents, it is necessary to purchase such [new contents] at a shop (outlet store).

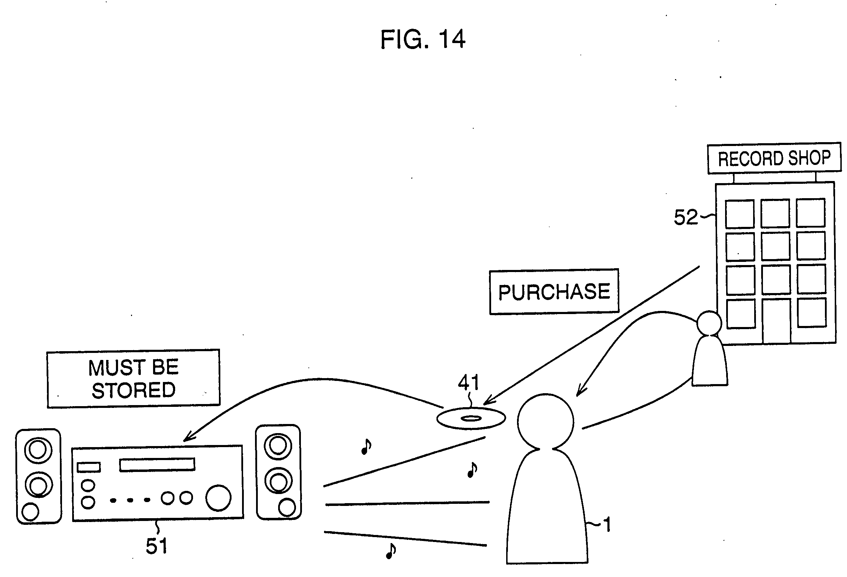

Fig. 14 is a diagram for explaining the problems in contents distribution employing a music player with a built-in hard disk.

A music player 51 with a built-in hard disk is able to store large volumes of data, and continuously provide music of the user's choice without the user 1 having to make any particular operation.

Nevertheless, since music will not be automatically renewed, unless new music is stored in the hard disk, the same music will be continuously played. If so, the user 1 will become bored of the music that is repeatedly played, and the same problem as playing a CD will arise. In other words, in order to play new music, it is necessary to store data in the hard disk, and the operation thereof will become required. Unless this operation is performed, the user 1 will become bored of the music that is repeatedly played, and the same problem as playing a CD will arise.

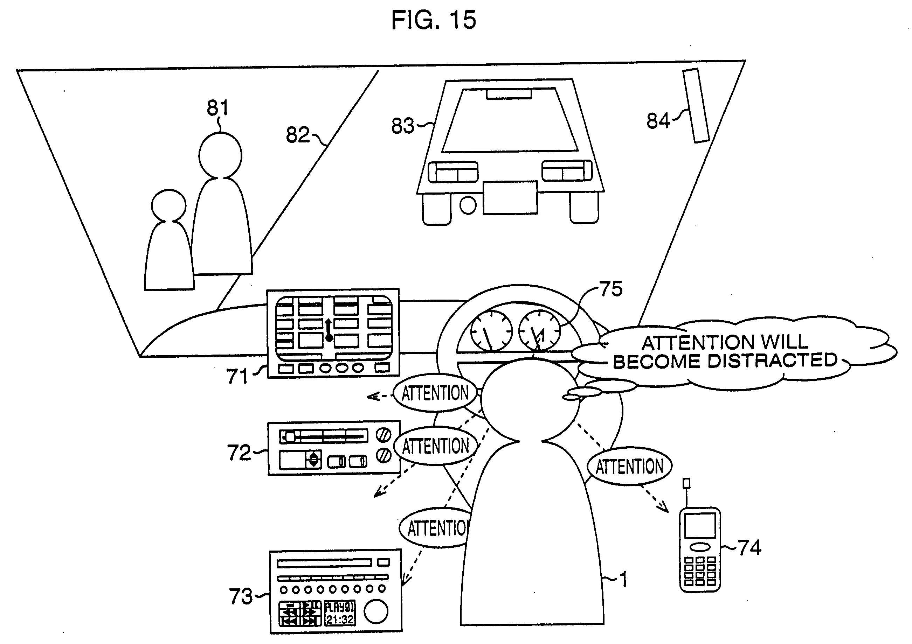

Fig. 15 is a diagram for explaining the problems in contents distribution employing a car navigation system.

A car navigation system 71 provides information to become the judgment material for determining the route based on positional information. From this perspective, the car navigation system 71 is able to promptly provide appropriate information.

Nevertheless, operation of the car navigation system 71 is complicated, and the driver as the user 1 while driving the vehicle will have to divert one's attention and line of sight from driving, and it is highly likely that this will lead to a dangerous situation. Further, inside a vehicle, there may also be cases where the operation of other devices such as an air conditioner 72, car audio system 73 or portal phone 74 becomes necessary, and it is also necessary to pay attention to a meter panel 75, pedestrian 81, sidewalk 82, preceding vehicle 83 and traffic lane 84. Thus, operation of the car navigation system 71 is a difficult operation for a driver while driving a vehicle. In recent years, although there is a car navigation system 71 that can be operated by voice activation, since information is acquired among countless menus, it cannot be said that accurate information can be provided in just proportion with only the voice command.

Moreover, since a portable phone, facsimile, email transmitter/receiver terminal device and Internet phone require numerous operations, the use of these devices is the most difficult for a user engaged in some kind of activity.

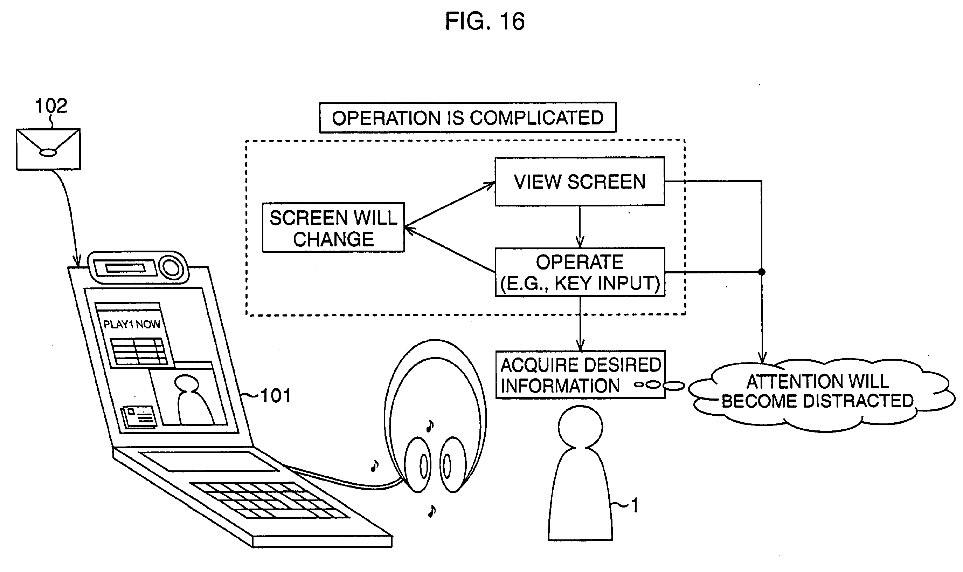

Fig. 16 is a diagram for explaining the problems in contents distribution employing a communication information terminal device.

When the user 1 using a communication information terminal device 101 receives an email 102, since such [user 1] must view the screen, perform operations such as key input, and confirm the changing screen, it is not possible to perform such operations while engaged in another activity.

Although it is possible to receive and send emails by setting a communication module in a personal portable information terminal device such as a PDA (Personal Digital Assistant), the constitution is such that the operation is made with a touch panel or keyboard, and this is not a simple operation that can be performed while engaged in another activity.

Certain car navigation systems have realized the transmission and reception of emails with operations similar to PDAs.

Nevertheless, for instance, a system of consolidating all functions in a car navigation system, displaying menus for performing these operations on the screen, and the user performing such operations while viewing the screen will require extremely complicated operations, and, since it will take much time just to look over the menus, the [user] will have no choice but to focus on the operation of the car navigation system. It is impossible to engage in other activities while performing such operations.

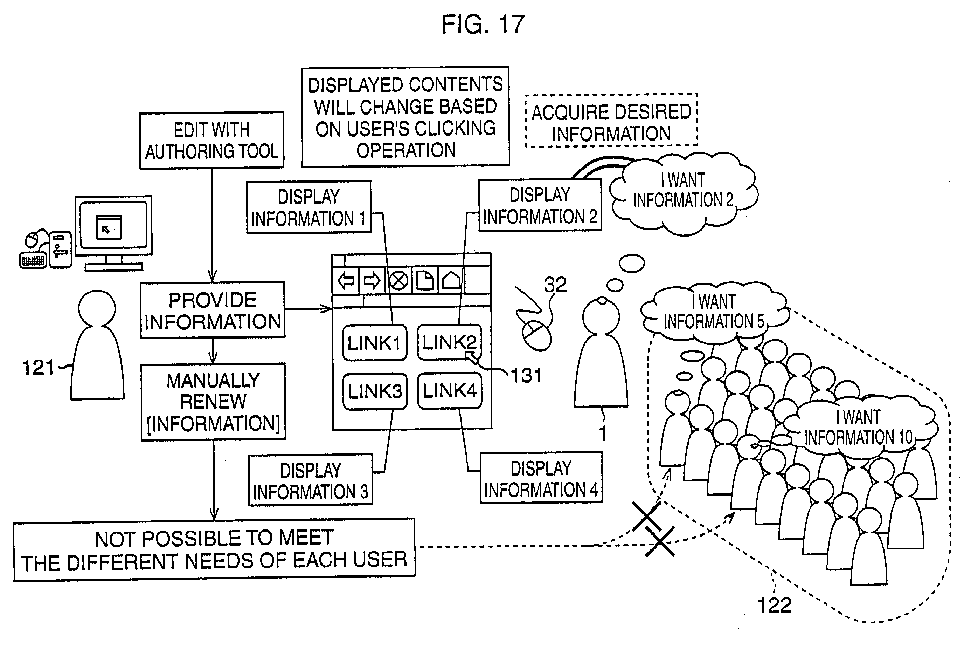

Fig. 17 is a diagram for explaining the problems in contents distribution employing a web browser device and Internet.

A contents producer 121 edits the contents (information) with an authoring tool, and provides the contents to the user 1. The contents producer 121 manually renews the contents.

The user 1 operates the mouse 32 on the web browser, moves the mouse pointer 131 on the screen and clicks the [mouse 32] to display one's desired information on the screen. Even if only one type of contents is provided from the contents producer 121, the web browser will display a screen with different types of information based on the operation by the user 1.

Nevertheless, with only one type of contents, when this is viewed by a plurality of users 122, it will not be possible to meet the different needs of each user 122.

Further, as a result of using a multimedia authoring tool (e.g., FLASH (trademark) of Macromedia), it is possible to provide a service that changes dynamically by detecting an event such as the operation of the keyboard 33 or clicking of the mouse 32 and switching the contents displayed on the screen.

Nevertheless, the subject matter to be changed in accordance with the event must be described in the contents in advance. Therefore, the subject matter of the contents will not change unless the contents producer 121 manually renews the subject matter of the contents. As with the case illustrated in Fig. 17, the contents prepared in advance can only be changed within the scope that the contents were created at the time of editing; i.e., at the preparatory stage.

In order to prepare in advance the contents meeting the needs of the users 122 in the respective terminals as separate data for each user 122, the contents producer 121 needs to use the multimedia authoring tool and prepare multimedia data in advance for each user 122. In a case where there are more than several hundred users 122, it is entirely unrealistic to prepare multimedia contents for each user 122 in advance.

Moreover, the gazette of Japanese Patent Laid-Open Publication No. 2000-215211 discloses guiding scripts having time information and placing information for guides and guide information and describing an instruction sequence capable of expressing those information by a time sequence by using a mark-up language are prepared in a center or a medium, wherein a script conversion unit converts a guiding script selected by an operation input unit into structured data for guide and transfers the converted data to an instruction processing unit, and the processing unit executes an instruction coincident with current time or a current position obtained from a state acquiring unit based on the structured data and a guide output unit outputs a guide.

An object of the present invention is to enable the acquisition of information in a state of focusing on the main action.

Conventional technology can be analyzed as follows.

As an example of "reliably providing information in an appropriate amount as required by a user at an appropriate timing and in appropriate order to such user who is under a situation where it is difficult to pay attention to a plurality of information sources at the same time as a result of engaging in a main action other than obtaining information", there is a service to be provided to a driver driving a car.

Under the existing circumstances, there are various devices inside a vehicle, and since each of these [devices] is operated independently, the user is required to simultaneously use the plurality of devices while driving the vehicle.

For example, in addition to the operation of driving the vehicle and viewing the peripheral environment or meter panel of the vehicle, the [driver] will have to pay attention to the operation of the air conditioner, incoming calls and emails of the portable phone, operation of the CD changer, traffic information of the FM radio, route guide of the car navigation system, screen of the car navigation system and so on, and, while personally judging which information is necessary and utilizing such necessary information, the [driver] will have to conduct extremely difficult activities such as adjusting the volume, operating the air conditioner and opening/closing the window.

To pay attention to numerous items while driving a vehicle will lead to the attention being diverted from the driving operation, and there is a significant problem in terms of safety. Further, since the user's operation will be extremely complicated, there is also a problem in terms of convenience. A similar situation will arise to a rider riding a motorcycle, a worker engaged in work operations, and a pedestrian trying to do something in an unfamiliar location, and this is similar to the situation encountered by a driver driving a vehicle.

As a common problem to be resolved for "a user who is under a situation where it is difficult to pay attention to a plurality of information sources at the same time as a result of engaging in a main action other than obtaining information", it is necessary to "reliably provide information in an appropriate amount as required by a user at an appropriate timing and in appropriate order".

As a result of resolving this problem, "information will be effectively utilized" under the foregoing conditions.

By merely consolidating the functions of every terminal into a single terminal, operations of the user for selecting which function to use will increase, and this may have the opposite effect of increasing the burden of the user. Thus, it is essential to devise a scheme for reducing the operations of the user.

Next, the technical problems will be examined in detail.

Since it is not possible to resolve the problem merely be individually resolving requirements (A) to (I) described above, the following technical problems must be resolved.

Foremost, the problem regarding the integration of schemes for providing information will be examined.

If the presentation of information is not integrated, information will be provided in bits and pieces independently and in parallel from the respective information sources, and the user will have to simultaneously pay attention to information from the respective information sources to select and use the necessary information, and will not be able to focus one's consciousness or attention to the main action.

Nevertheless, by merely consolidating all functions into a single terminal, the user will have to select the function to be used for outputting information upon receiving information, and the goal cannot be achieved since numerous operations and judgments other than the main action will be required.

For example, in a web browser portal service, although a wide range of pages will be linked on the Internet and various types of information can be extracted from a single screen, a [user] will have to repeat the operation of clicking somewhere on the screen to display the next screen, clicking somewhere on such next screen to display the subsequent screen and so on. Thus, the user will have no choice but to concentrate on the operation of extracting information, and will not be able to focus on the main action.

The integration of information will be insufficient if all information is merely integrated such that it can be followed from a single screen, and must be integrated so as to simultaneously satisfy requirements (A) to (I).

As a task related to operations, it is necessary to deal with scenes that require operations and scenes that do not require operations.

There are scenes where the user will have to operate the information provision device, and scenes where the user will not have to operate such information provision device. If it is not possible to deal with both scenes according to the condition of usage, the user will not be able to focus on the main action. Even in cases where operation is required, it is desirable that such operation be kept to a minimum.

For example, in a situation of continuously listening to music, an operation will not be required if there is no change in the user's mood or environmental status. Under this kind of situation, it is desirable that operation is not required in any way. Thus, when new information arises, it is undesirable to interrupt the contents being reproduced without condition and to request the user's operation.

Meanwhile, in a situation where operation was not required at a certain point in time, necessary information will change if the user's mood or purpose changes, and since this is something that only the user will know, the state will change to a situation requiring some kind of operation.

It is necessary that the user is able to perform such operation in accordance with the foregoing change of state.

It is desirable that the scheme enables the user to know whether operation is possible.

Next, response of the contents in relation to the operation is explained.

This implies that required is a scheme capable of flexibly dealing with the operation method to match the user's demand and content of the information to be provided in correspondence with the constantly changing situation. Since new information is constantly being generated, it is difficult to deal with this situation with a scheme in which the movement in relation to the operation is static.

In many cases, only the provider of information will know what kind of movement is required in accordance with the user's operation. Further, in order to enable the user to perform the operation naturally, it is effective to employ a presentation according to the situation, and it is desirable to provide a scheme enabling the person producing the contents to make such presentation.

Therefore, it is necessary to provide a scheme in which the system for distributing the contents conveys to the information provision terminal the movement directive in relation to the operation reflecting the productive intention when the information provider creates the contents to be distributed.

Next, the task relating to the provision of information is explained.

In order to "reliably provide information in an appropriate amount as required by a user at an appropriate timing and in appropriate order and enable the effective use thereof", there are the following tasks relating to the scheme for providing information.

These tasks must be resolved in a form of satisfying requirements (A) to (I).

Foremost, there is the task relating to the selection of information. The selection of information, when required, must be enabled with minimal operation. This task relates closely to the task relating to the operation.

Next, there is the task relating to the amount of [information] to be provided. Information to be provided must be provided in an appropriate amount within a scope as required by the user. If information is distributed in excess of the amount required by the user, unwanted traffic will occur in the network, and the memory area of the terminal will not be effectively utilized.

And, there is the task relating to the timing of providing information. It is necessary to provide information when it is utilizable by the user. If [information] is provided when the user is not able to use such information, it may interrupt the user's main action or the user may forget the provided information.

Further, there is the task relating to the order of providing information. It is necessary that notifications be provided to the user in appropriate order.

Moreover, there is the task relating to notification. It is necessary that a notification be made at an appropriate timing with an appropriate means. It is desirable to integrate the information to be notified as much as possible.

In addition, there is the task regarding the position of the information provider.

Since there is a plurality of information providers for many users, it is necessary to be able to handle information provided from a plurality of information providers.

In order to realize the above, it is necessary to integrate information. With a system of individually providing information provided from a plurality of information providers, information will be provided in bits and pieces independently and in parallel from the respective information sources, and the user will have to simultaneously pay attention to information from the respective information sources to select and use the necessary information, and will not be able to focus one's consciousness or attention to the main action.

Accordingly, even in cases where information is provided from a plurality of information providers, it is necessary that information be provided according to the user's needs from an integrated scheme. Since each information provider has a goal of providing information, it is desirable to achieve the goal of the information provider, in addition to the goal of the user.

Further, there is the demand of information providers. Information providers are engaged in a business of offering services of providing information and receiving consideration therefor. A contents producer creates contents by using information provided by the information provider. In order for the information provider to achieve its goal, it is desirable that the overall contents distribution system and terminal satisfy the following requirements as an overall system:
(i) To provide [information] to users desiring the provision of information;
(ii) To provide [information] when the user needs such information;
(iii) To provide information with an effective presentation; and
(iv) To provide information while preventing the unauthorized use thereof.

Requirements (i) and (ii) can be achieved by satisfying requirements (A) to (I). Requirement (iii) can be achieved by providing a means enabling the information provider to manage the contents inside the terminal. Requirement (iv) can be achieved by employing a constitution capable of preventing the unauthorized access to the contents data stored in the information provision terminal device.

Further, there is the task relating to the fusion of broadcasting and communication. In the existing individual service provision methods, there are the following respective tasks.

With a broadcasting-type service, it is not possible to provide a different service for each individual user or the state of use.

With a communication-type service, since individual services are integrated in an uncoordinated fashion, the user's operation will become complicated.

It is necessary to integrate a cumulative-type service and operational feeling.

Further still, there is the task in a functional service. In a functional service such as tools and business applications provided with personal computers and PDAs, since the user will have to make numerous operations, it is difficult for a user engaged in another activity to simultaneously use such functional service.

In addition, if there is a separate terminal device for providing such functional service and the device requests the user to perform an operation, since the user's attention will be directed to such device, there will be a significant influence on the main action.

Accordingly, it is desirable to provide a function where the functional service will not trouble the user.

The present invention was devised based on the result of the foregoing analysis.

### DISCLOSURE OF THE INVENTION

An object of the present invention is to reliably provide information in an appropriate amount as required by a user at an appropriate timing and in appropriate order and enable the effective use thereof to such user who is under a situation where it is difficult to pay attention to a plurality of information sources at the same time as a result of engaging in a main action other than obtaining information.

In other words, an object of the present invention is to enable the continuous output of necessary information at an appropriate timing and in appropriate order with minimal operation.

Another object of the present invention is to enable the continuous reception of necessary information at an appropriate timing and in appropriate order with minimal operation.

The information output device according to the present invention comprises: an aggregate output control means for controlling the output of the aggregate based on an event response control program associated with the aggregate, which contains the information being output, of the event response control programs having described therein a command for an event associated with each of the aggregates, and in correspondence with the event; and an information output control means for controlling the output of the information contained in the aggregate based on ordinal data associated with the aggregate, the output of which has been instructed by the aggregate output control means, of the ordinal data having described therein the output order of the information associated with each of the aggregates.

In the information output device of the present invention, an event response control program associated with an aggregate containing information being output is read, output of the aggregate is controlled based on the read event response control program and in correspondence with the event, and output of the information containing the aggregate is controlled based on the ordinal data associated with the aggregate the output of which has been instructed.

When the aggregate to which the information being output belongs is replaced, the event response control program to be read is also replaced, and, even if the same event is input, the content to be controlled will change. And, according to the output order of information described in the ordinal data associated with the aggregate the output of which has been instructed, information contained in the aggregate the output of which has been instructed will be output.

As a result, by appropriately describing the event response control program and ordinal data, continuous output of required information at an appropriate timing and in appropriate order with minimal operation will be enabled.

This aggregate output control means or contents output control means may be constituted with dedicated hardware, or realized with a computer loaded with a control program.

Information, in a broad sense, includes copyrighted works, control data, or data significant to the user. Information in particular includes copyrighted works composed of sounds or images. Information significant to the user in particular includes characters, numerical values, figures and other information.

Information also includes so-called contents.

When prescribing from a different perspective, information includes reproduced data contents, coded data contents or functional contents. Reproduced data contents or coded data contents include, for example, MPEG-2 format contents or MP3 format contents. Functional contents refer to contents composed of information other than images or sounds, but output as images or sounds. Functional contents include data for controlling equipment.

An aggregate is formed of 0 or 1 or a plurality of types of information having some kind of association. For instance, an aggregate may be formed to be an aggregate composed of contents stored in a folder or directory, or an aggregate may be formed to be an aggregate formed from files or subordinate aggregates stored in a folder or directory. Association for determining the aggregate may be described for each type of information.

A hierarchical structure as used herein will suffice so as long as the relationship of the connection between an aggregate unit, and the aggregate unit contained therein is evident at minimum. A hierarchical structure includes a tree structure. For example, when the aggregate is formed from an aggregate of information stored in a folder, the hierarchical structure will mean the structure constituted with the connection of folders.

A second unit contained in a first unit is referred to as a descendant of the first unit. A descendant one layer away is referred to as a child. A second containing a first unit is referred to as an ancestor of the first unit. An ancestor one layer away is referred to as a parent.

An event refers to (information representing) a change of state, and, for example, refers to an external or internal change of state. An event includes an event generated with the user's operation, an event generated as a result of the sensor detecting something from the outside environment, an event generated from the year, month, date or time, an event sent via a network, an event generated from the reproduction of information, and an event generated from the change in the communication status. The event generated with the user's operation includes a command.

An event response control program will suffice so as long as it has described therein information for identifying the event and a command for specifying the processing contents associated with the event at minimum. A command, for instance, is described with the processing target and processing content.

To be associated with an aggregate means that an event response control program can be specified with the aggregate. Being associated with an aggregate includes associating an empty event response control program with the aggregate. For example, when the aggregate is formed from an aggregate of information stored in a folder, as a result of the event response control program being stored in the folder, the event response control program will be associated with the aggregate of information stored in the folder.

To control the output of an aggregate means to designate the output of information belonging to the aggregate at minimum. In such a case, it is not necessary to specify the information itself.

In a preferred embodiment, the aggregate output control means controls the output of the aggregate based on the event response control program associated with the aggregate containing the information being output, and the event response control program associated with the aggregate of the ancestor of the aggregate containing the information being output, and in correspondence with the event. As a result of employing the foregoing constitution, output of the appropriate aggregate can be instructed with an event response control program having lesser commands described therein.

In an embodiment of the present invention, provided is a reproduction means for reproducing the information to be output based on the control of the information output control means and in correspondence with the type of information.

Type of information, in a broad sense, means the distinction of information based on the form of outputting information, form of recognizing information or the format of encoding information, and, for instance, may be a type specified with sounds or images recognized with senses, a type specified with characters or music which is recognized logically or sensuously, a type specified with the MPEG format or coded format, and so on. Type of information, for example, is identified with the attribute of information, or the name of the file (e.g., so-called extension) storing the information.

For example, the reproduction means will reproduce information in correspondence with the type of information, which is text data, for MPEG-2, MP3 or voice synthesis.

The information output device may also be provided with an event generation means for acquiring the outside status and generating the event. As a result of employing the foregoing constitution, information to be output can be switched in accordance with the change in environment without having to request the user's operation. Therefore, the user will be provided with appropriate information corresponding to the change in environment.

The event generation means may generate an event from a status acquired with a microphone, acceleration sensor, sound pressure sensor, GPS, failure diagnosis sensor or CCD camera.

In a further preferred embodiment, a memory control means for controlling the memory of the information, event response control program, and ordinal data may also be provided. As a result, it will be possible to store the information, event response control program, and ordinal data.

The information output device may also be provided with a communication control means for controlling the transmission of the request of the aggregate, the reception of which has been instructed by the aggregate output control means, to the information provision device for providing the information, and controlling the reception of the information belonging to the requested aggregate as well as the event response control program and the ordinal data associated with the requested aggregate provided from the information provision device.

In such a case, since the communication control means will control the reception of information based on the designation of the aggregate output control means, for instance, it will be possible to receive information such that the reception of information will be completed only regarding the information to be output when outputting information.

The aggregate output control means may also rewrite the ordinal data. As a result, even if it is the same information, the order of outputting information can be changed.

The information output method according to the present invention comprises: an aggregate output control step for controlling the output of the aggregate based on an event response control program associated with the aggregate, which contains the information being output, of the event response control programs having described therein a command for an event associated with each of the aggregates, and in correspondence with the event; and an information output control step for controlling the output of the information contained in the aggregate based on ordinal data associated with the aggregate, the output of which has been instructed at the aggregate output control step, of the ordinal data having described therein the output order of the information associated with each of the aggregates.

The program of the first recording medium of the present invention makes a computer execute processing comprising: an aggregate output control step for controlling the output of the aggregate based on an event response control program associated with the aggregate, which contains the information being output, of the event response control programs having described therein a command for an event associated with each of the aggregates, and in correspondence with the event; and an information output control step for controlling the output of the information contained in the aggregate based on ordinal data associated with the aggregate, the output of which has been instructed at the aggregate output control step, of the ordinal data having described therein the output order of the information associated with each of the aggregates.

The first program of the present invention makes a computer execute processing comprising: an aggregate output control step for controlling the output of the aggregate based on an event response control program associated with the aggregate, which contains the information being output, of the event response control programs having described therein a command for an event associated with each of the aggregates, and in correspondence with the event; and an information output control step for controlling the output of the information contained in the aggregate based on ordinal data associated with the aggregate, the output of which has been instructed at the aggregate output control step, of the ordinal data having described therein the output order of the information associated with each of the aggregates.

In the information output method, first recording medium and first program of the present invention, the output of the aggregate is controlled based on an event response control program associated with the aggregate, which contains the information being output, of the event response control programs having described therein a command for an event associated with each of the aggregates, and in correspondence with the event; and the output of the information contained in the aggregate is controlled based on ordinal data associated with the aggregate, the output of which has been instructed at the aggregate output control step, of the ordinal data having described therein the output order of the information associated with each of the aggregates.

The information reception device according to the present invention comprises: an aggregate reception control means for controlling the reception of the aggregate based on an event response control program associated with the aggregate, which contains the information being output, of the event response control programs having described therein a command for an event associated with each of the aggregates, and in correspondence with the event; and a communication control means for controlling the transmission of the request of the aggregate, the reception of which has been instructed by the aggregate reception control means, to the information provision device for providing the information, and controlling the reception of the information belonging to the requested aggregate and the event response control program associated with the requested aggregate provided from the information provision device.

In the information reception device of the present invention, the reception of the aggregate is controlled based on an event response control program associated with the aggregate, which contains the information being output, of the event response control programs having described therein a command for an event associated with each of the aggregates, and in correspondence with the event; and the transmission of the request of the aggregate, the reception of which has been instructed by the aggregate reception control means, to the information provision device for providing the information is controlled, and the reception of the information belonging to the requested aggregate and the event response control program associated with the requested aggregate provided from the information provision device is controlled.

When the aggregate to which the information being output belongs is replaced, the event response control program to be read is also replaced, and, even if the same event is input, the content to be controlled will change. In other words, reception of the aggregate to which the information being output belongs and the aggregate determined with an event is designated, and the information belonging to the aggregate in which the reception thereof has been instructed and the event response control program associated with such aggregate the reception of which has been instructed are received. As a result, by appropriately describing the event response control program, necessary information can be continuously received at an appropriate timing and in appropriate order with minimal operation.

This aggregate reception control means or communication control means may be constituted with dedicated hardware, or realized with a computer loaded with a program.

The information reception device can receive information from the information provision device via a wired or wireless transmission or broadcasting line. For example, the information reception device can receive information from the information provision device via a wired or wireless network.

In a preferred embodiment of the present invention, the aggregate reception control means controls the reception of the aggregate based on the event response control program associated with the aggregate containing the information being output, and the event response control program associated with the aggregate of the ancestor of the aggregate containing the information being output, and in correspondence with the event. As a result of employing the foregoing constitution, the reception of a more appropriate aggregate can be instructed with an event response control program having lesser commands described therein.

In a further preferred embodiment, a memory control means for controlling the memory of the received information and the event response control program is also provided. As a result, it is possible to store the received information and the event response control program.

The information reception method according to the present invention comprises: an aggregate reception control step for controlling the reception of the aggregate based on an event response control program associated with the aggregate, which contains the information being output, of the event response control programs having described therein a command for an event associated with each of the aggregates, and in correspondence with the event; and a communication control step for controlling the transmission of the request of the aggregate, the reception of which has been instructed at the aggregate reception control step, to the information provision device for providing the information, and controlling the reception of the information belonging to the requested aggregate and the event response control program associated with the requested aggregate provided from the information provision device.

The program of the second recording medium according to the present invention makes a computer execute processing comprising: an aggregate reception control step for controlling the reception of the aggregate based on an event response control program associated with the aggregate, which contains the information being output, of the event response control programs having described therein a command for an event associated with each of the aggregates, and in correspondence with the event; and a communication control step for controlling the transmission of the request of the aggregate, the reception of which has been instructed at the aggregate reception control step, to the information provision device for providing the information, and controlling the reception of the information belonging to the requested aggregate and the event response control program associated with the requested aggregate provided from the information provision device.

The second program according to the present invention makes a computer execute processing comprising: an aggregate reception control step for controlling the reception of the aggregate based on an event response control program associated with the aggregate, which contains the information being output, of the event response control programs having described therein a command for an event associated with each of the aggregates, and in correspondence with the event; and a communication control step for controlling the transmission of the request of the aggregate, the reception of which has been instructed at the aggregate reception control step, to the information provision device for providing the information, and controlling the reception of the information belonging to the requested aggregate and the event response control program associated with the requested aggregate provided from the information provision device.

In the information reception method, second recording medium and second program of the present invention, the reception of the aggregate is controlled based on an event response control program associated with the aggregate, which contains the information being output, of the event response control programs having described therein a command for an event associated with each of the aggregates, and in correspondence with the event; and the transmission of the request of the aggregate, the reception of which has been instructed at the aggregate reception control step, to the information provision device for providing the information is controlled, and the reception of the information belonging to the requested aggregate and the event response control program associated with the requested aggregate provided from the information provision device is controlled.

The information provision device according to the present invention comprises: a memory control means for controlling the memory of the information having a hierarchical structure with an aggregate of the information as the unit thereof, and controlling the memory of the event response control program having described therein a command for an event on the reception side associated with each of the aggregates; and a transmission control means for controlling the transmission of the information belonging to the requested aggregate and the event response control program associated with the requested aggregate to the information reception device when the aggregate is requested from the information reception device for receiving the information.

In the information provision device of the present invention, information having a hierarchical structure with an aggregate of the information as the unit thereof and the event response control program having described therein a command for an event on the reception side associated with each of the aggregates are stored; and information belonging to the requested aggregate and the event response control program associated with the requested aggregate to the information reception device when the aggregate is requested from the information reception device for receiving the information are transmitted.

As a result, the information reception device will be able to continuously receive necessary information at an appropriate timing and in appropriate order with minimal operation.

The information provision device can transmit information to the information reception device via a wired or wireless transmission or broadcasting line. For example, the information provision device can transmit information to the information reception device via a wired or wireless network.

This memory control means or transmission control means may be constituted with dedicated hardware, or realized with a computer loaded with a program.

In a preferred embodiment of the present invention, the memory control means further controls the memory of ordinal data having described therein the output order of the information associated with each of the aggregates; and the transmission control means further controls the transmission of the ordinal data associated with the requested aggregate to the information reception device when the aggregate is requested from the information reception device.

As a result of employing the foregoing constitution, the information reception device will be able to continuously output required information at an appropriate timing and in appropriate order with minimal operation based on the ordinal data.

The information provision method according to the present invention comprises: a memory control step for controlling the memory of the information having a hierarchical structure with an aggregate of the information as the unit thereof, and controlling the memory of the event response control program having described therein a command for an event on the reception side associated with each of the aggregates; and a transmission control step for controlling the transmission of the information belonging to the requested aggregate and the event response control program associated with the requested aggregate to the information reception device when the aggregate is requested from the information reception device for receiving the information.

The program of a third recording medium according to the present invention makes a computer execute processing comprising: a memory control step for controlling the memory of the information having a hierarchical structure with an aggregate of the information as the unit thereof, and controlling the memory of the event response control program having described therein a command for an event on the reception side associated with each of the aggregates; and a transmission control step for controlling the transmission of the information belonging to the requested aggregate and the event response control program associated with the requested aggregate to the information reception device when the aggregate is requested from the information reception device for receiving the information.

The third program according to the present invention makes a computer execute processing comprising: a memory control step for controlling the memory of the information having a hierarchical structure with an aggregate of the information as the unit thereof, and controlling the memory of the event response control program having described therein a command for an event on the reception side associated with each of the aggregates; and a transmission control step for controlling the transmission of the information belonging to the requested aggregate and the event response control program associated with the requested aggregate to the information reception device when the aggregate is requested from the information reception device for receiving the information.

In the information provision method, third recording medium and third program of the present invention, the memory of the information having a hierarchical structure with an aggregate of the information as the unit thereof and the memory of the event response control program having described therein a command for an event on the reception side associated with each of the aggregates are controlled; and the transmission of the information belonging to the requested aggregate and the event response control program associated with the requested aggregate to the information reception device when the aggregate is requested from the information reception device for receiving the information is controlled.

The fourth program according to the present invention is associated with a first aggregate, which is an aggregate among the aggregates; [the program] is read into the computer for controlling the output or reception of the information when the information belonging to the first aggregate or the information belonging to the aggregate of the descendant of the first aggregate is being output; and [the program] makes the computer execute the processing in relation to at least the output of a second aggregate, which is another aggregate among the aggregates, or the reception of the second aggregate when a prescribed event occurs.

The computer for controlling the output or reception of information reads the program of the present invention when the information belonging to the first aggregate or the information belonging to the aggregate of the descendant of the first aggregate is being output, and executes the processing in relation to at least the output of a second aggregate, which is another aggregate among the aggregates, or the reception of the second aggregate when a prescribed event occurs.

As a result, it will be possible to enable the continuous output of required information at an appropriate timing and in appropriate order with minimal operation, or enable the continuous reception of required information at an appropriate timing and in appropriate order with minimal operation.

In the information provision system according to the present invention, the information provision device comprises: a memory control means for controlling the memory of the information having a hierarchical structure with an aggregate of the information as the unit thereof, and controlling the memory of the event response control program having described therein a command for an event on the reception side associated with each of the aggregates; and a transmission control means for controlling the transmission of the information belonging to the requested aggregate and the event response control program associated with the requested aggregate to the information reception device when the aggregate is requested from the information reception device for receiving the information; and the information reception device comprises: a aggregate reception control means for controlling the reception of the aggregate based on an event response control program associated with the aggregate, which contains the information being output, of the event response control programs having described therein a command for an event associated with each of the aggregates, and in correspondence with the event; and a communication control means for controlling the transmission of the request of the aggregate, the reception of which has been instructed by the aggregate reception control means, to the information provision device for providing the information, and controlling the reception of the information belonging to the requested aggregate and the event response control program associated with the requested aggregate provided from the information provision device.

In the information provision system of the present invention, in addition to information being stored, the event response control program having described therein a command for an event on the reception side associated with each of the aggregates is stored; information belonging to the requested aggregate and the event response control program associated with the requested aggregate to the information reception device when the aggregate is requested from the information reception device for receiving the information are transmitted; reception of the aggregate is controlled based on an event response control program associated with the aggregate, which contains the information being output, of the event response control programs having described therein a command for an event associated with each of the aggregates, and in correspondence with the event; request of the aggregate, the reception of which has been instructed, to the information provision device is transmitted, and information belonging to the requested aggregate and the event response control program associated with the requested aggregate provided from the information provision device is received.

A system represents the overall device structured from a plurality of devices.

The second information provision method according to the present invention comprises: a memory control step for controlling the memory of the information having a hierarchical structure with an aggregate of the information as the unit thereof, and controlling the memory of the event response control program having described therein a command for an event in the information reception device associated with each of the aggregates; a transmission control step for controlling the transmission of the information belonging to the requested aggregate and the event response control program associated with the requested aggregate to the information reception device when the aggregate is requested from the information reception device for receiving the information; an aggregate reception control step for controlling the reception of the aggregate based on an event response control program associated with the aggregate, which contains the information being output, of the event response control programs, and in correspondence with the event; and a communication control step for controlling the transmission of the request of the aggregate, the reception of which has been designated at the aggregate reception control step, to the information provision device, and controlling the reception of the information belonging to the requested aggregate and the event response control program associated with the requested aggregate provided from the information provision device.

In the second information provision method of the present invention, in addition to storing information having a hierarchical structure with an aggregate of the information as the unit thereof, the event response control program having described therein a command for an event in the information reception device associated with each of the aggregates is stored; information belonging to the requested aggregate and the event response control program associated with the requested aggregate to the information reception device when the aggregate is requested from the information reception device for receiving the information is transmitted; reception of the aggregate is controlled based on an event response control program associated with the aggregate, which contains the information being output, of the event response control programs, and in correspondence with the event; request of the aggregate, the reception of which has been instructed, to the information provision device is transmitted, and information belonging to the requested aggregate and the event response control program associated with the requested aggregate provided from the information provision device is received.

### BRIEF DESCRIPTION OF THE DRAWINGS

Fig. 1 is a diagram for explaining the loss of concentration of the user;
Fig. 2 is a diagram for explaining the loss of concentration of the user;
Fig. 3 is a diagram for explaining the loss of concentration of the user;
Fig. 4 is a diagram for explaining the loss of concentration of the user;
Fig. 5 is a diagram for explaining the loss of concentration of the user;
Fig. 6 is a diagram for explaining the loss of concentration of the user;
Fig. 7 is a diagram for explaining the loss of concentration of the user;
Fig. 8 is a diagram for explaining the loss of concentration of the user;
Fig. 9 is a diagram for explaining the loss of concentration of the user;
Fig. 10 is a diagram for showing whether the conventional information provision systems satisfy the respective requirements;
Fig. 11 is a diagram for explaining the problems in contents distribution employing a broadcast receiver such as a TV set or a radio broadcast receiver;
Fig. 12 is a diagram for explaining the problems in contents distribution employing a web browser device;
Fig. 13 is a diagram for explaining the problems in contents distribution employing a recordable media (e.g., CD/DVD) reproduction device;
Fig. 14 is a diagram for explaining the problems in contents distribution employing a music player with a built-in hard disk;
Fig. 15 is a diagram for explaining the problems in contents distribution employing a car navigation system;
Fig. 16 is a diagram for explaining the problems in contents distribution employing a communication information terminal device;
Fig. 17 is a diagram for explaining the problems in contents distribution employing a web browser device and Internet;
Fig. 18 is a diagram for explaining an embodiment of the information provision system pertaining to the present invention;
Fig. 19 is a diagram for explaining an embodiment of the information provision system more specifically;
Fig. 20 is a diagram for explaining an embodiment of the information provision system more specifically;
Fig. 21 is a diagram showing an example of the appearance of an in-car information provision terminal device;
Fig. 22 is a diagram showing an example of the internal structure of the information provision terminal device;
Fig. 23 is a diagram showing an example of the internal structure of the information provision terminal device;
Fig. 24 is a diagram showing an example of the internal structure of the information provision server;
Fig. 25 is a block diagram showing an example of the functional constitution of the information provision terminal device;
Fig. 26 is a block diagram showing a more detailed constitution of an embodiment of the information provision system pertaining to the present invention;
Fig. 27 is a diagram for explaining the schematic of the operation of the information provision terminal device;
Fig. 28 is a block diagram showing a more detailed constitution of an embodiment of the information provision system pertaining to the present invention;
Fig. 29 is a block diagram showing a more detailed constitution of an embodiment of the information provision system pertaining to the present invention;
Fig. 30 is a block diagram for explaining a more detailed constitution of the master control unit;
Fig. 31 is a block diagram for explaining the operation of the event processing unit;
Fig. 32 is a diagram for explaining the reading of the command map data, dynamic command map data and master designation data, and the search of command based on the input event;
Fig. 33 is a diagram for explaining the flow of contents;
Fig. 34 is a diagram for explaining the operation of the information provision terminal device upon activation;
Fig. 35 is a diagram for explaining the schematic of the operation of the information provision system pertaining to the present invention;
Fig. 36 is a diagram for explaining the relationship between the contents, play list and master designation data, and the folder;
Fig. 37 is a diagram for explaining that the user will not lose concentration in the information provision system pertaining to the present invention;
Fig. 38 is a diagram for explaining that the user will not lose concentration in the information provision system pertaining to the present invention;
Fig. 39 is a diagram for explaining that the user will not lose concentration in the information provision system pertaining to the present invention;
Fig. 40 is a diagram for explaining that the user will not lose concentration in the information provision system pertaining to the present invention;
Fig. 41 is a diagram for explaining that the user will not lose concentration in the information provision system pertaining to the present invention;
Fig. 42 is a diagram for explaining that the user will not lose concentration in the information provision system pertaining to the present invention;
Fig. 43 is a diagram for explaining that the user will not lose concentration in the information provision system pertaining to the present invention;
Fig. 44 is a diagram showing the concept of a folder;
Fig. 45 is a diagram showing the data structure for managing information;
Fig. 46 is a diagram showing the scheme of managing folders;
Fig. 47 is a diagram showing an example of the data structure in the information provision terminal device;
Fig. 48 is a diagram showing the operation of the information provision terminal device when operated by the user 1;
Fig. 49 is a diagram for explaining the information provision server;
Fig. 50 is a diagram for explaining the basic form of operation of the information provision terminal device from which information is continuously extracted;
Fig. 51 is a diagram for explaining the operation of the information provision terminal device with a check command;
Fig. 52 is a diagram for explaining the operation of the information provision terminal device with a check command;
Fig. 53 is a diagram for explaining the operation of the information provision terminal device with a check command;
Fig. 54 is a diagram for explaining the basic constitution of a folder;
Fig. 55 is a diagram showing an example of a folder having a hierarchical structure;
Fig. 56 is a diagram showing and example of the master designation data;
Fig. 57 is a diagram for explaining the operation of downloading the folder, contents, master designation data and play list from the information provision server to the information provision terminal device;
Fig. 58 is a diagram for explaining the operation of downloading the folder, contents, master designation data and play list from the information provision server to the information provision terminal device;

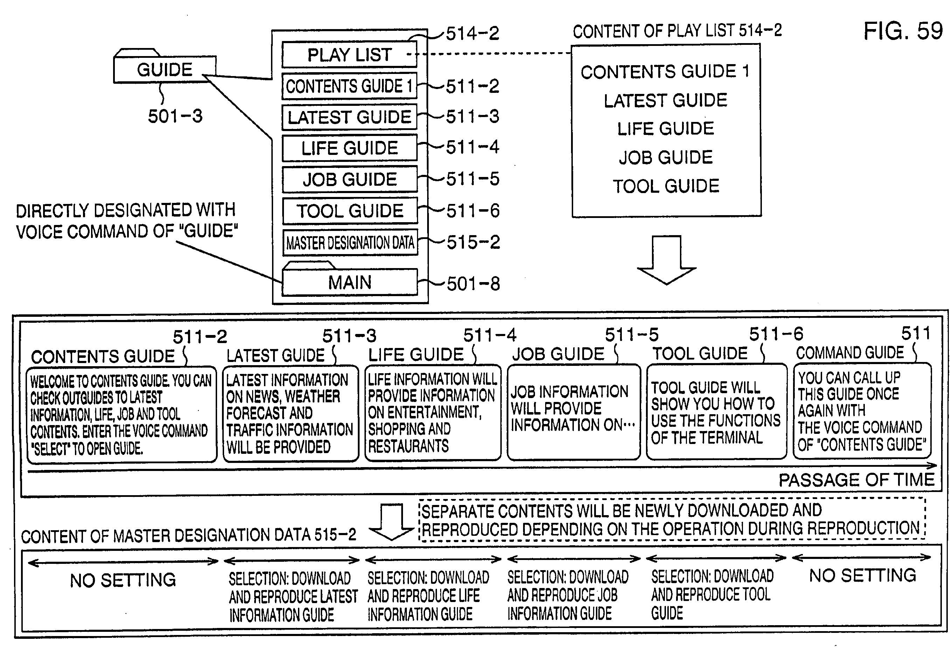

Fig. 59 is a diagram for explaining the operation of downloading the folder, contents, master designation data and play list from the information provision server to the information provision terminal device;
Fig. 60 is a diagram for explaining the operation of downloading the folder, contents, master designation data and play list from the information provision server to the information provision terminal device;
Fig. 61 is a diagram for explaining the operation of downloading the folder, contents, master designation data and play list from the information provision server to the information provision terminal device;
Fig. 62 is a diagram for explaining the operation of downloading the folder, contents, master designation data and play list from the information provision server to the information provision terminal device;

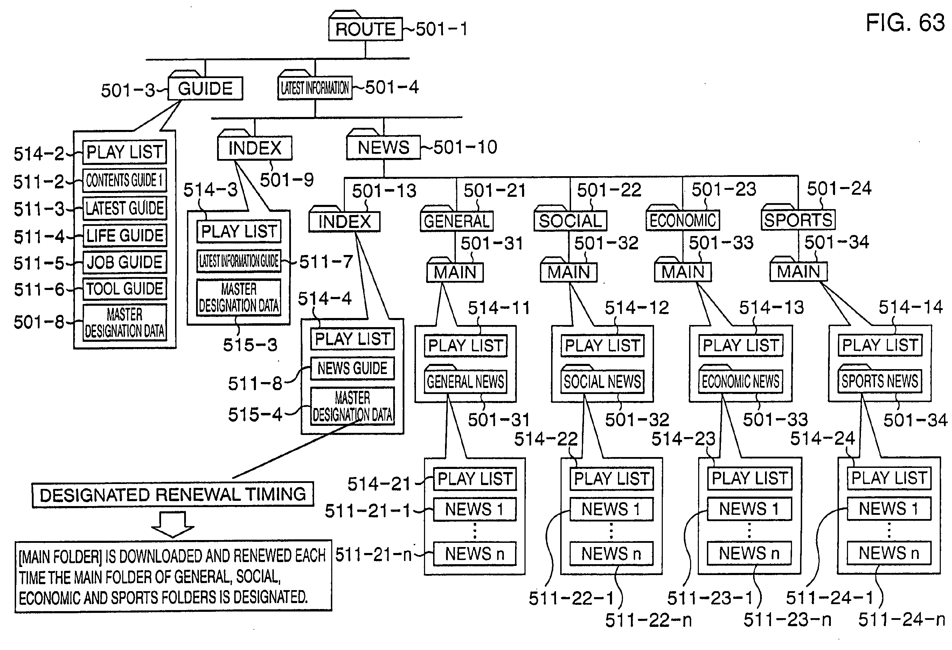

Fig. 63 is a diagram for explaining the operation of downloading the folder, contents, master designation data and play list from the information provision server to the information provision terminal device;
Fig. 64 is a flowchart for explaining the processing of activating the information provision terminal device;
Fig. 65 is a flowchart for explaining the processing of the information provision terminal device in relation to the event of "start", which is the user's voice;
Fig. 66 is a flowchart for explaining the processing of the information provision terminal device in relation to the event of "next", which is the user's voice;
Fig. 67 is a flowchart for explaining the processing of the information provision terminal device in relation to the event of "delete", which is the user's voice;
Fig. 68 is a flowchart for explaining the processing of the information provision terminal device in relation to the event of "delete", which is the user's voice;
Fig. 69 is a flowchart for explaining the processing of the information provision terminal device in relation to the event of "request", which is the user's voice;
Fig. 70 is a flowchart for explaining the processing of the information provision terminal device in relation to the event of "request", which is the user's voice;
Fig. 71 is a flowchart for explaining the processing of the information provision terminal device in relation to the event of "request", which is the user's voice;
Fig. 72 is a flowchart for explaining the processing of the information provision terminal device in relation to the event of "request", which is the user's voice;
Fig. 73 is a flowchart for explaining the processing the information provision terminal device in relation to the event from the information provision server;
Fig. 74 is a flowchart for explaining the activation processing;
Fig. 75 is a flowchart for explaining the contents folder reproduction processing;
Fig. 76 is a flowchart for explaining the event input processing;
Fig. 77 is a flowchart for explaining the previous command processing;
Fig. 78 is a flowchart for explaining the subsequent command processing;
Fig. 79 is a flowchart for explaining the return command processing;
Fig. 80 is a flowchart for explaining the processing of reproduction designation of contents;
Fig. 81 is a flowchart for explaining the folder enter event processing; and
Fig. 82 is a flowchart for explaining the folder exit event processing.

### BEST MODE FOR CARRYING OUT THE INVENTION

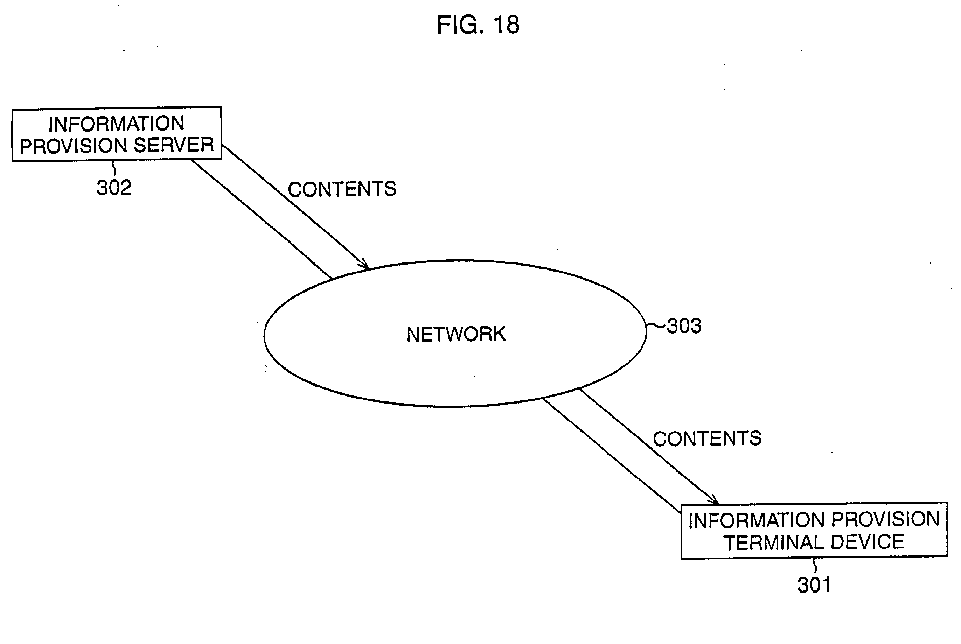

Fig. 18 is a diagram for explaining an embodiment of the information provision system pertaining to the present invention.

An information provision terminal device 301 receives contents, or a type of information, from an information provision server 302 via a network 303, and provides such contents to a user 1. In the present invention, contents, for example, are handled as contents data.

The contents handled with the information provision device of the present invention can be classified into the following three categories:
1. Reproduced data contents;
2. Coded data contents; and
3. Functional contents.

Details of the respective contents will be described later.

The information provision server 302 provides (distributes) to the information provision terminal device 301 the contents to be provided to the user 1 via the network 303.

The network 303 is a contents data transmission medium constituted of a wired or wireless telecommunication circuit. The network 303 is not limited to a transmission medium or protocol, and will suffice so as long as it enables two-way communication, and, for instance, includes optical fiber.

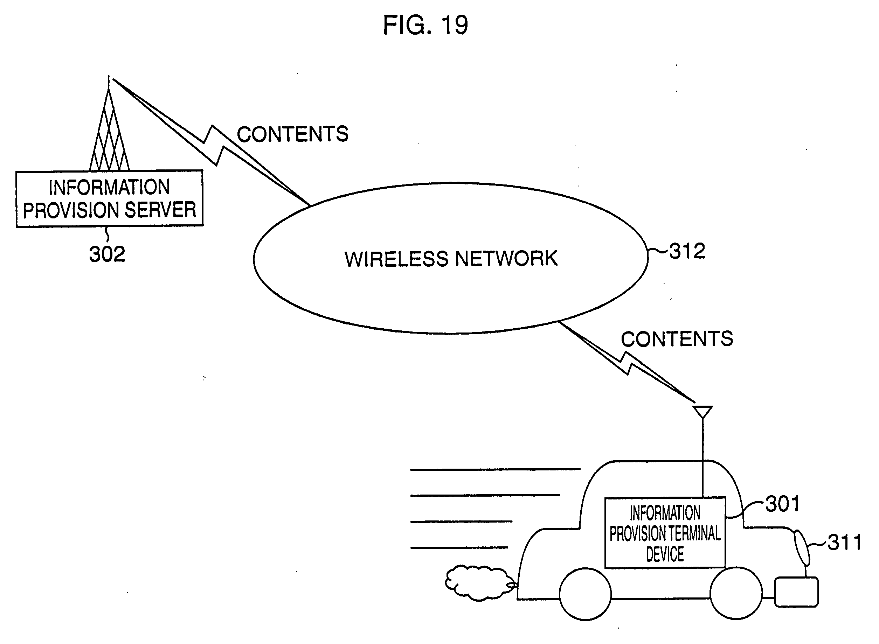

Fig. 19 is a diagram for explaining an embodiment of the information provision system more specifically. When the information provision terminal device 301 is to be mounted on a vehicle 311, a long-distance wireless network 312 is employed for the communication between the information provision terminal device 301 and information provision server 302 since it is necessary to enable communication while the vehicle 311 is running. For instance, a data communication network of a portable phone carrier may be used as the network 303.

In order to realize an information provision system which will enable the [driver] to focus only on a specific information source while driving the vehicle 311, in an embodiment of the present invention, information is provided in the following manner in consideration of the driving operation, which is the main action of the driver (user 1).
(1) Information is provided only with sound while the vehicle is running;
(2) Information is provided also using the screen when the vehicle is parked; and
(3) A flashing LED display is used as the notification means for notifying the user 1 that there is information to be acquired.

Incidentally, when there is no screen, information may be provided only with sound. The notification means may be replaced with an audio notification. Therefore, a service employing only sound can also be provided.

Further, for services directed to rear seats, a screen may be used at all times to provide information.

In the present embodiment, although an in-car information provision terminal device 301 is used as an example where the user 1 is subject to numerous constrained conditions so as to clarify the effect in relation to the object, the same effect is yielded in other situations of use even upon excluding case examples that will only occur in an in-car use.

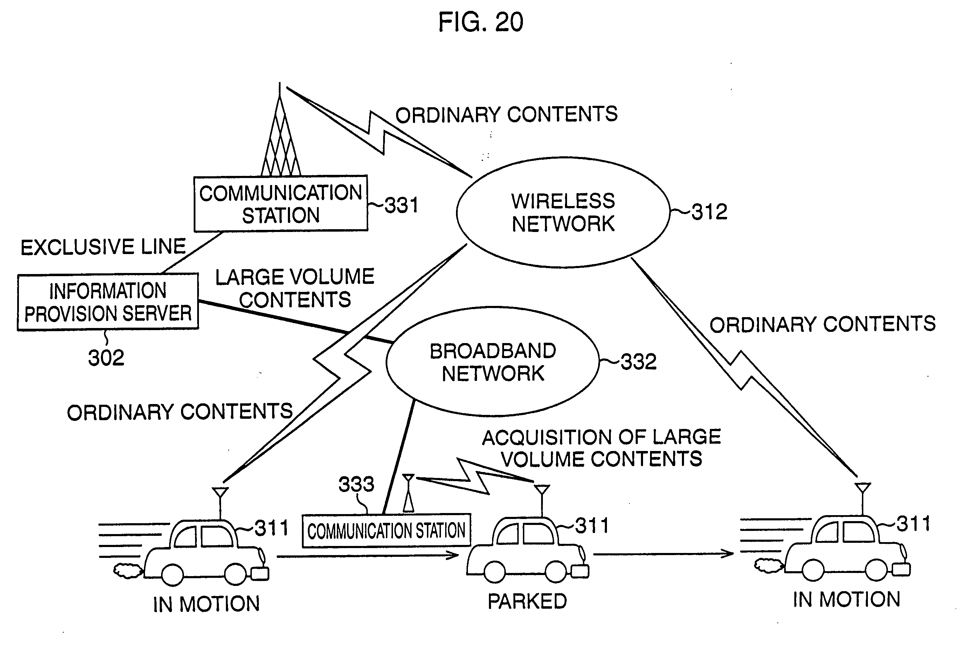

More specifically, for instance, as shown in Fig. 20, the network 303 may be constituted by combining the wireless network 312, which is a data communication network of a portable phone carrier, and a wireless LAN (Local Area Network) formed from a communication station 333 constituting an area referred to as a hot spot.

As a result of distributing contents with small data volume via the wireless network 312 of a portable phone carrier, and transmitting contents with large data volume via a wireless LAN hot spot, large-volume data can be distributed in a short period of time, and it is also possible to reduce communication costs.

Here, the information provision server 302 transmits ordinary contents with small data volume to the information provision terminal device 301 mounted on the vehicle 311, which is running, via the communication station 331 and wireless network 312. And, the information provision server 302 transmits large-volume contents with large data volume to the information provision terminal device 301 mounted on the vehicle 311, which is parked, via the broadband network 332 and communication station 333.

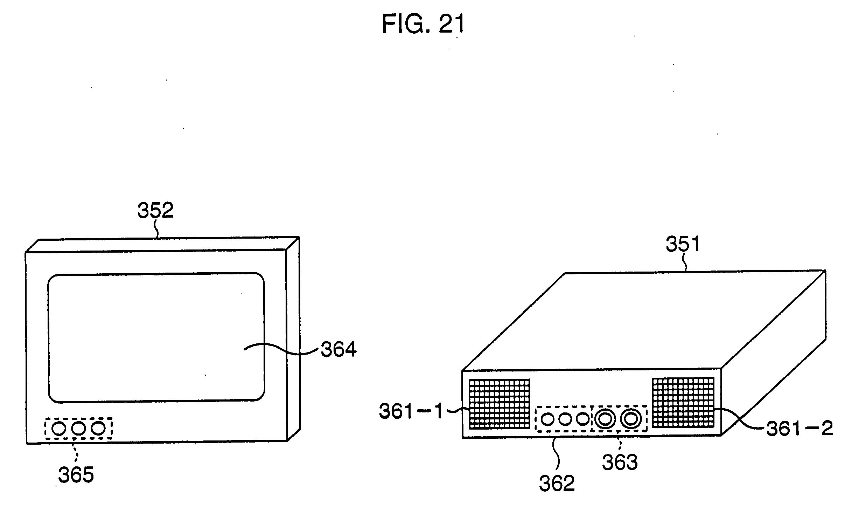

Fig. 21 is a diagram showing an example of the appearance of an in-car information provision terminal device 301. The information provision terminal device 301, for example, is constituted of a main body 351 and a display unit 352.

The main body 351 is provided with speakers 361-1 and 361-2, an LED (Light Emitting Diode) 362 and an output terminal 363. The main body 351 is not provided with a display unit, and the output terminal 363 outputs to the external speaker not shown, which is a sound output means, the sound signal output from the information provision terminal device 301 as sound.

The display unit 352 is provided with a liquid crystal display device 364 and an LED 365 as the display device.

As shown in Fig. 21, since the information provision terminal device 301 for providing information is integrated as one, the user 1 will be able to receive important information, without letting it slip away, simply by paying attention to a single information provision terminal device 301. As a result, requirement (A) can be satisfied.

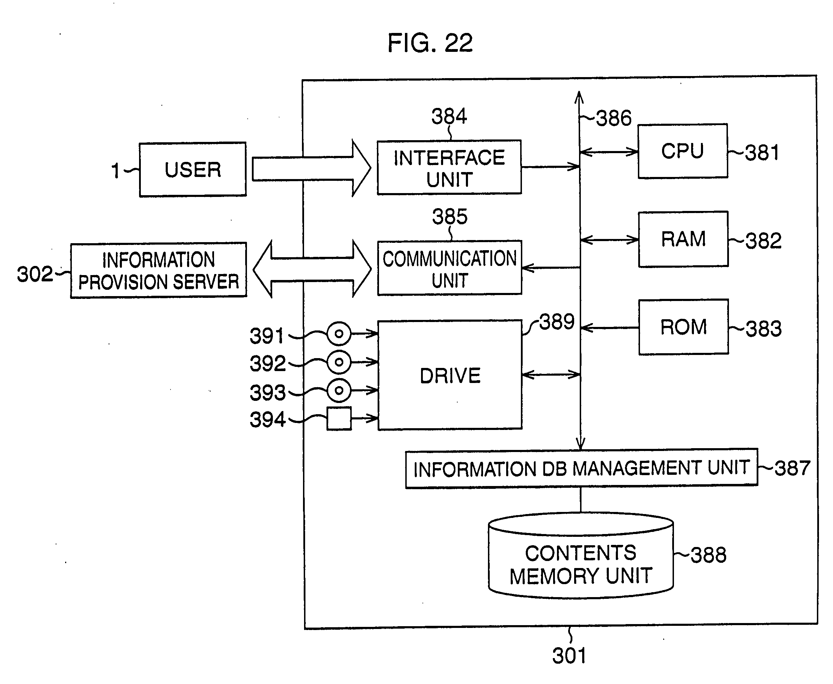

Fig. 22 is a diagram showing an example of the internal structure of the information provision terminal device 301. The information provision terminal device 301 includes a CPU (Central Processing Unit) 381, a RAM (Random Access Memory) 382, a ROM (Read Only Memory) 383, an interface unit 384 and a communication unit 385. The CPU 381, RAM 382, ROM 383, interface unit 384 and communication unit 385 are mutually connected with a bus 386.

The CPU 381 executes various types of processing according to the program stored in the RAM 382 or ROM 383. The RAM 382 arbitrarily stores program or data to be executed by the CPU 381.

An interface unit 384 is also connected to the CPU 381 via the bus 386. A signal corresponding to the operation of the user 1 is input to the interface unit 384. The CPU 381 executes various types of processing in correspondence with the command input from the interface unit 384. And, the CPU 381 outputs sounds and images obtained as a result of such processing via the interface unit 384.

A communication unit 385 is also connected to the CPU 381 via the bus 386. The communication unit 385 communicates with the information provision server 302 via the network 303. In the case of this example, the communication unit 385 functions as the interface with the network 303 for either receiving the contents or transmitting the contents request.

Moreover, a program may be acquired via the communication unit 385 and stored in the RAM 382.

A contents memory unit 388 is also connected to the bus 386 via the information database (DB) management unit 387. The contents memory unit 388 is constituted, for instance, of a hard disk, optical disk, magnetic optical disk or semiconductor memory, and stores the contents. The information database management unit 387 controls the storage of contents in the contents memory unit 388, or the read-out of the contents.

In addition, when the magnetic disk 391, optical disk 392, magnetic optical disk 393 or semiconductor memory 394 is installed in the drive 389 connected to the bus 386, the [drive 389] drives such medium and acquires the program or data recorded therein. The acquired program or data is forwarded and stored in the RAM 382 or the writable ROM 383 as necessary.

Incidentally, the information provision terminal device 301 may also be constituted without providing the drive 389.

The user 1 operates the operational unit connected to the interface unit 384 to operate the information provision terminal device 301. The operational unit may be built in the information provision terminal device 301, or may be provided externally.

It is desirable that the user, who is subject to certain restrictions, is able to easily operate the operational unit.

Under certain constrained conditions such as where a mechanical operation with the hand or foot is difficult, a voice command is used. Or, the operation may be made with an imaging device (optical means) such as a camera capturing the line of sight, expression or gesture. Under certain constrained conditions where it is difficult to use the voice command, such as in a train, it is desirable to employ a mechanical operational unit. A mechanical operational unit may be a widely used push button, switch, keyboard, pointing device or the like.

With an application where it is preferable to keep the operation a secret from others, it is desirable to provide an operational unit in which others will not know the operation.

In the embodiment of the in-car information provision terminal device 301, a voice command and a wireless remote controller are used as the operational unit. It is also possible to display a graphical interface screen on a display device such as a CRT display device or liquid crystal display device, and use a pointing device on the screen to conduct the operation.

In a situation where it is undesirable to divert one's attention from one's visual perception as with a driver driving a vehicle, it is desirable to enable the control only with a voice command.

In an application where an event arises requiring an instantaneous operation such in emergency situations, it is desirable to enable operation with a simple operation such as with an emergency button. For example, it is desirable to install an emergency button near the driver's seat.

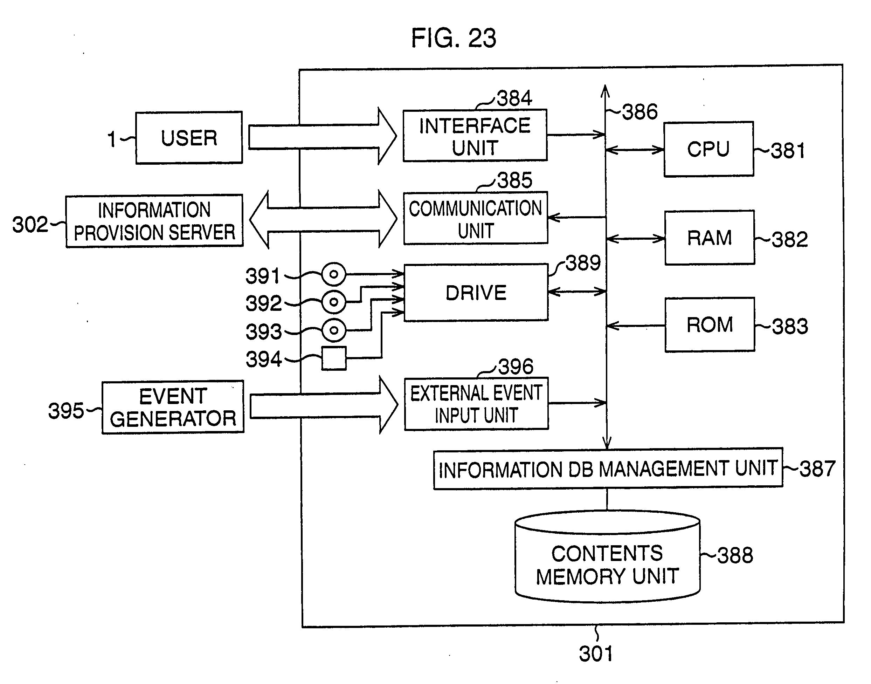

In the embodiment of the information provision terminal device 301 illustrated in Fig. 23, the user 1 will operate the information provision terminal device 301 with a voice command or remote controller. A voice command is input from a microphone, and the user's instructions are detected by the generated voice being recognized. When the remote controller has an operational switch, as a result of the operational switch of the remote controller being pushed, the information provision terminal device 301 will execute functions corresponding to the respective buttons. The signal of the remote controller is transmitted to the information provision terminal device 301 via wireless transmission such as infrared light or radio waves.

Further, as shown in Fig. 23, with the information provision terminal device 301 employing an outside event, in addition to the constitution depicted in Fig. 22, the constitution is additionally provided with an outside event input unit 396. In Fig. 23, components that are the same as those shown in Fig. 22 are given the same reference numerals, and the explanation thereof is omitted.

The outside event input unit 396 acquires the event generated with an event generator 395, and supplies this to the CPU 381. The event generator 395 includes a natural person and an external device. External devices included in the event generator 395 will be described later.

Moreover, the information provision terminal device 301 employing the actuator function may also take on a constitution of additionally providing an actuator connection unit to the constitution illustrated in Fig. 22 or Fig. 23. The operational unit to be connected to the interface unit 384, the device for generating an outside event, or the actuator connection unit may be built in the information provision terminal device 301.

The following events are handled in the embodiments of the present invention:
1. Human interface event;
2. Sensor event;
3. Calendar timer event;
4. Network event;
5. Player event;
6. Contents event; and
7. Open line event.

Operation of the user 1 is input as the human interface event via the human interface unit described later. Information of the sensor connected to the sensor connection unit described later is input as the sensor event.

The calendar timer event is an event that arises based on the date and hour or time. As a result of using this event, functions to be conducted after the lapse of a certain length of time or at a certain point in time can be designated.

The network event is an event sent via the network 303. The generation source of an event, for example, may be the information provision server 302 or the information provision terminal device 301, or a network camera or network sensor described later.

The player event is an event that is generated by the player (reproduction unit or reproduction device) within the information provision terminal device 301. This [player event] notifies the player's operational status such as the start, pause or stop of reproduction.

The contents event is an event generated by the contents. The contents producer 121 is able to designate the timing of generation by employing master designation data. As a result of using the contents event, it will be possible to synchronize a plurality of contents, or to notify the user of the generation of an event.

The open line event is an event generated due to changes in the communication status. As a result of using the open line event, it will be possible to change the function of the contents according to the changes in the communication status. The open line event will enable a different function for the respective contents.

In other words, when communication is not possible, it will be possible to provide a notification to such effect, enable download afterward, or switch to the reproduction of different contents.

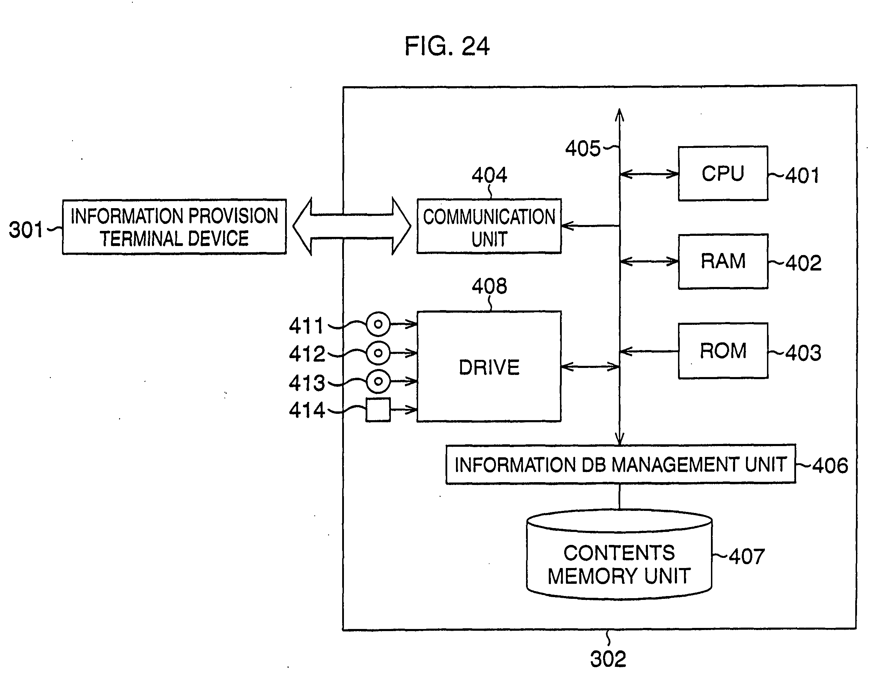

Fig. 24 is a diagram showing an example of the internal structure of the information provision server 302. The information provision server 302 includes a CPU 401, a RAM 402, a ROM 403 and a communication unit 404. The CPU 401, RAM 402, ROM 403 and communication unit 404 are mutually connected via a bus 405.

The CPU 401 executes various types of processing according to the program stored in the RAM 402 or ROM 403. The RAM 402 arbitrarily stores program or data to be executed by the CPU 401.

A communication unit 404 is also connected to the CPU 401 via the bus 405. The communication unit 404 communicates with the information provision terminal device 301 via the network 303. In the case of this example, the communication unit 404 functions as the interface with the network 303 for either receiving the contents request or transmitting the contents.

Moreover, a program may be acquired via the communication unit 404 and stored in the RAM 402.

A contents memory unit 407 is also connected to the bus 405 via an information database (DB) management unit 406. The contents memory unit 407 is constituted, for example, of a hard disk, optical disk, magnetic optical disk, semiconductor memory or magnetic tape, and stores the contents. The information database management unit 406 controls the storage of contents in the contents memory unit 407, or the read-out of the contents.

In addition, when the magnetic disk 411, optical disk 412, magnetic optical disk 413 or semiconductor memory 414 is installed in the drive 408 connected to the bus 405, the [drive 408] drives such medium and acquires the program or data recorded therein. The acquired program or data is forwarded and stored in the RAM 402 or the writable ROM 403 as necessary.

Incidentally, the information provision server 302 may also be constituted without providing the drive 408.

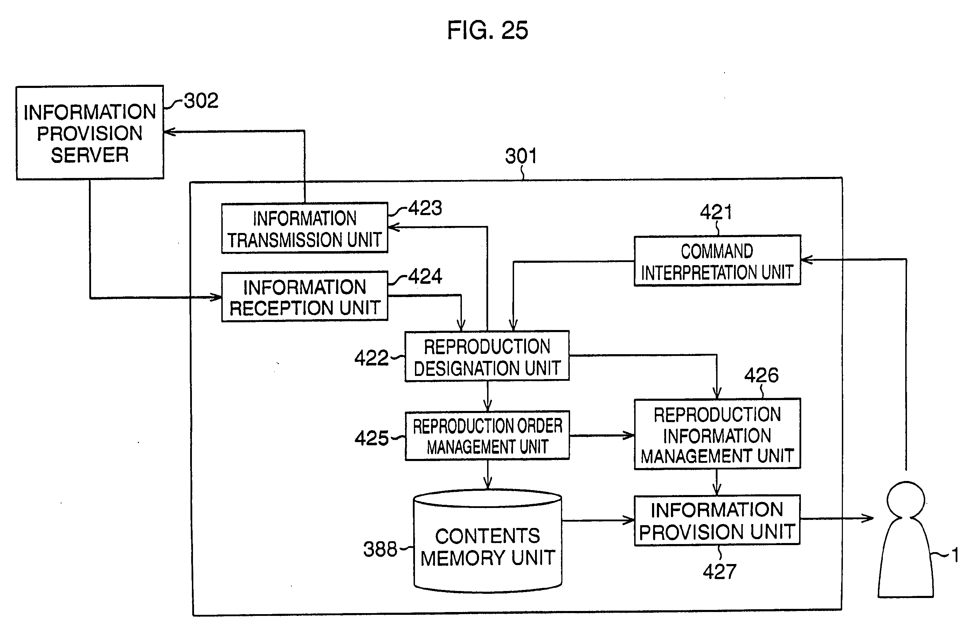

Fig. 25 is a block diagram showing an example of the functional constitution of the information provision terminal device 301.

A command interpretation unit 421 acquires the signal corresponding to the user's operation.

The command interpretation unit 421 interprets the acquired signal and generates an event. The command interpretation unit 421 supplies the generated event to a reproduction designation unit 422. The reproduction designation unit 422, based on the event supplied from the command interpretation unit 421, designates the download of an aggregate of contents to the information transmission unit 423, or designates the production of the aggregate of contents to the reproduction order management unit 425 and reproduction information management unit 426. Here, an aggregate of contents is composed, for example, of contents stored in a folder.

When the information transmission unit 423 is instructed by the reproduction designation unit 422 to download an aggregate of contents, it transmits a request of an aggregate of prescribed contents to the information provision server 302 via the network 303. When the information provision server 302 receives the request, it supplies to the information provision terminal device 301 the aggregate of requested contents via the network 303.

The information reception unit 424 receives the aggregate of contents transmitted from the information provision server 302, and supplies the aggregate of received contents to the reproduction designation unit 422.

The reproduction designation unit 422 stores the aggregate of received contents in the contents memory unit 388 via a reproduction order management unit 425.

When the reproduction order management unit 425 is instructed by the reproduction designation unit 422 to reproduce the aggregate of new contents, it acquires information relating to the reproduction of the aggregate of contents to be newly output, and designates the information provision unit 427 to output the contents stored in the contents memory unit 388 based on the acquired information relating to the reproduction of the aggregate of contents.

The reproduction information management unit 426 manages information relating to the aggregate of contents currently being output, and, when it receives from the reproduction designation unit 422 a designation to reproduce an aggregate of new contents, it stores information relating to the aggregate of contents currently being output, and manages information relating to the aggregate of new contents in which the reproduction thereof has been instructed.

The reproduction information management unit 426, for instance, stores and manages information relating to the reproduction of contents representing the output order of contents belonging to the aggregate and contents currently being output.

The information provision unit 427, based on the instruction from the reproduction order management unit 425, outputs and provides the contents stored in the contents memory unit 388 to the user 1.

When the output of contents belonging to an aggregate is completed, the information provision unit 427 supplies information notifying such completion to the reproduction information management unit 426.

The reproduction information management unit 426 reads out information that it stores relating to the previously output aggregate of contents and designates the aggregate of contents and contents to be output to the reproduction order management unit 425.

When the output of contents belonging to an aggregate is completed, the reproduction order management unit 425, based on the designation from the reproduction information management unit 426, designates the output of contents among the previously output aggregate of contents to the information provision unit 427.

Here, the information provision unit 427 will output the contents which were being output prior to the completion of the output of contents.

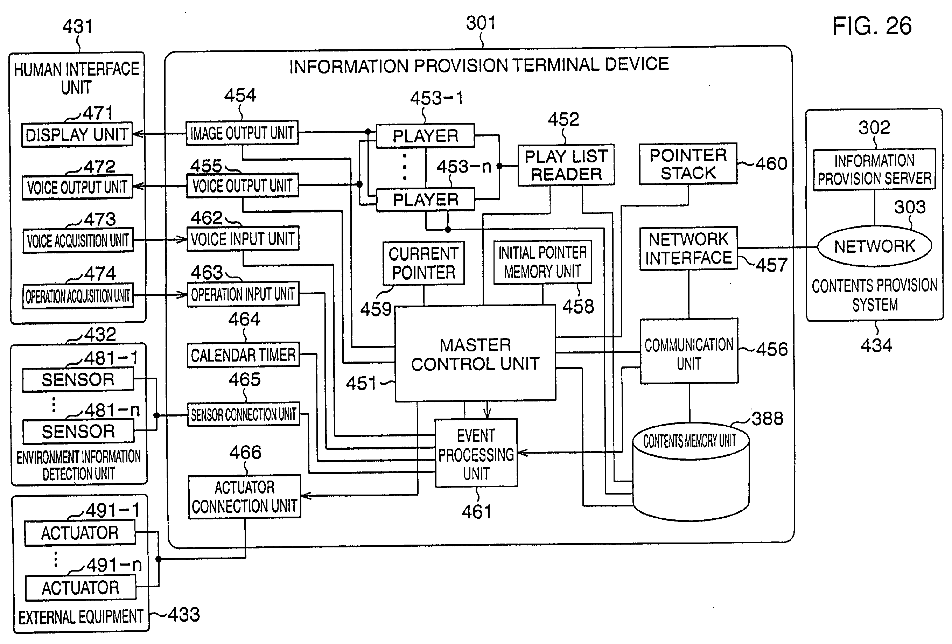

Fig. 26 is a block diagram showing a more detailed constitution of an embodiment of the information provision system pertaining to the present invention. The human interface unit 431, based on the signal or data output from the information provision terminal device 301, presents images, sounds, vibration, light and so on to the user 1. Further, the human interface unit 431 is operated by the user 1, creates a signal or data corresponding to the operation, and supplies the created signal or data representing the operation to the information provision terminal device 301.

The environment information detection unit 432 acquires information relating to the environment of the information provision terminal device 301, and generates a signal or data representing the environment from the acquired information. Information relating to the environment acquired by the environment information detection unit 432 may be information relating to light such as images or brightness, information relating to sound such as voices or volume (sound pressure), information relating to spatial positioning such as the operational status, position, acceleration or speed of other devices or oneself, information relating to the climate such as temperature, humidity or wind velocity, information relating to the chemical environment such as the type or amount of chemical substance to be distributed circumferentially, and so on.

The external equipment 433, based on the signal from the information provision terminal device 301, engages in a prescribed mechanical, electrical or chemical operation.

The contents provision system 434, for instance, is constituted of an information provision server 302 and network 303, and provides to the information provision terminal device 301 the contents belonging to a prescribed aggregate in accordance with the request from the information provision terminal device 301.

The information provision terminal device 301 includes a master control unit 451, a play list reader 452, players 453-1 to 453-n, an image output unit 454, a voice output unit 455, a communication unit 456, a network interface 457, an initial pointer memory unit 458, a current pointer 459, a pointer stack 460, an event processing unit 461, a voice input unit 462, an operation input unit 463, a calendar timer 464, a sensor connection unit 465 and an actuator connection unit 466.

The master control unit 451 reads the master designation data, command map data or dynamic command map data, which is an example of the event response control program having described therein a command for an event associated with the aggregate of contents and designates the output of the aggregate of contents to the play list reader 452 based on the read master designation data, command map data or dynamic command map data as well as the event from the event processing unit 461.

Here, an aggregate of contents is formed from 0 or 1 or a plurality of contents having some kind of association. For instance, an aggregate may be formed to be an aggregate composed of contents stored in a folder or directory. Association for determining the aggregate may be described for the respective contents.

To be associated with an aggregate means that an event response control program can be specified with the aggregate. Being associated with an aggregate includes associating an empty event response control program with the aggregate. For example, when the aggregate is formed from an aggregate of information stored in a folder, as a result of the event response control program being stored in the folder, the event response control program will be associated with the aggregate of information stored in the folder.

The master control unit 451 reads the master designation data, command map data and dynamic command map data described later, and designates the reception of an aggregate of contents belonging to an aggregate to the communication unit 456 based on the read master designation data, command map data and dynamic command map data, as well as the event from the event processing unit 461.

The play list reader 452 designates the output of contents to the players 453-1 to 453-n based on the play list, which is an example of ordinal data in which the output order of contents is described therein. When the output of a prescribed aggregate of contents is instructed by the master control unit 451, the play list reader 452 designates the output of contents to the players 453-1 to 453-n based on the play list, which is an example of ordinal data associated with the aggregate the output of which has been instructed.

For example, when the aggregate is formed from an aggregate of contents stored in a folder, the play list, which is an example of ordinal data, will be stored in the folder, and the play list, which is an example of ordinal data, will be associated with the aggregate of contents stored in the folder.

When the output of all contents in which the order thereof is described in the play list is finished with respect to a prescribed aggregate, the play list reader 452 supplies to the master control unit 451 information indicating the completion of output of the contents of such aggregate.

The players 453-1 to 453-n reproduce the contents recorded in the contents recording unit 388 based on the control of the play list reader 452, and outputs the reproduced contents to the image output unit 454 and voice output unit 455. The players 453-1 to 453-n respectively reproduce contents of a different format.

Upon completing the reproduction of contents, the players 453-1 to 453-n supply information indicating the reproduction of contents to the play list reader 452.

The image output unit 454 outputs to the human interface unit 431, in a prescribed format, an image, which is an output of the contents supplied from one of the players 453-1 to 453-n.

The voice output unit 455 outputs to the human interface unit 431, in a prescribed format, a sound, which is an output of the contents supplied from one of the players 453-1 to 453-n.

When the reception of a prescribed aggregate of contents is instructed by the master control unit 451, the communication unit 456 transmits to the information provision server 302, via the network interface 457 and network 303, the request for an aggregate of contents in which the reception thereof has been instructed. Via the network interface 457 and network 303, the communication unit 456 receives the contents belonging to the requested aggregate; the master designation data, command map data or dynamic command map data, which is an example of the event response control program associated with the requested aggregate; or the play list, which is an example of ordinal data associated with the requested aggregate transmitted from the information provision server 302.

Further, the communication unit 456 generates an event representing that the reception of contents has started, or the reception of contents has been completed, and supplies such generated event to the event processing unit 461.

The network interface 457 is, for example, an NIC (Network Interface Card), and transmits or receives contents or data corresponding to the format of the connected network. The network interface 457, for instance, transmits or receives a packet storing contents or data via a wireless medium when the network 303 is a wireless network 312.

The initial pointer memory unit 458 stores an initial pointer representing the aggregate of contents to be output upon activation.

The current pointer 459 stores information representing the position of the contents currently being output in the play list having described therein the output order of the contents.

The pointer stack 460 pushes and stores pointer information which is the value of the current pointer 459 representing the contents output at such time when the master control unit 451 designates the output of the aggregate of contents and pops and reads the stored pointer information when the output of the aggregate of contents is finished. In other words, the pointer stack 460 stores the pointer information when the output aggregate is changed as a log. As a result, when the output of all contents belonging to the aggregate is finished based on the play list, contents that were output prior to the output aggregate being changed will be output.

The event processing unit 461 acquires an event from the event source, and supplies the acquired event to the master control unit 451. For example, the event processing unit 461 acquires an event representing that the reception of contents supplied from the communication unit 456 is complete, an event which is a command corresponding to the vocalization of the user 1 supplied from the voice input unit 462, and event corresponding to the operation of the user 1 supplied from the operation input unit 463, an event corresponding to the year, month, day, hour or time supplied from the calendar timer 464, an event representing environmental changes supplied from the sensor connection unit 465, and supplies such events to the master control unit 451.

The voice input unit 462 recognizes the word vocalized by the user 1 based on the voice signal vocalized by the user 1 which was supplied from the voice acquisition unit 473 of the human interface unit 431, and supplies the recognized voice as an event (command); that is, it generates an event representing the recognized voice, and supplies the generated event to the event processing unit 461. A command, for example, may be text representing the recognized word.

The operation input unit 463 generates an event representing the user's operation based on the signal corresponding to the operation of the user 1 which was supplied from the operation acquisition unit 474 of the human interface unit 431, and supplies the generated event to the event processing unit 461.

The calendar timer 464 generates an event in relation to the set year, month, day or hour, or an event corresponding to the time (period), and supplies the generated event to the event processing unit 461. For example, the calendar timer 464 generates an event representing the set hour when it becomes the hour set by the master control unit 451, and supplies the generated event to the event processing unit 461. For example, the calendar timer 464 generates an event representing that the time (period) has elapsed when the set time (period) has elapsed upon the start of count being instructed, and supplies the generated event to the event processing unit 461.

The sensor connection unit 465 generates an event based on the signal representing the environmental information supplied from the environment information detection unit 432, and supplies the generated event to the event processing unit 461.

The actuator connection unit 466 supplies a signal designating an operation to the external equipment 433 based on the control of the master control unit 451.

The human interface unit 431 includes a display unit 471, a voice output unit 472, a voice acquisition unit 473 or an operation acquisition unit 474.

The display unit 471 displays images or text based on the signal or data supplied from the image output unit 454. The display unit 471 may be a liquid crystal display device, a CRT (Cathode-Ray Tube) display device, an LED display device or an organic EL (Electro Luminescence) display device capable of displaying images or text.

The voice output unit 472 outputs a voice (emits sound) based on the signal or data supplied from the voice output unit 455. For example, the voice output unit 472 may be a loud speaker or a buzzer.

The voice acquisition unit 473 is a microphone, for example, and acquires the voice vocalized by the user 1, and supplies the signal or data representing the acquired voice to the voice input unit 462.

The operation acquisition unit 474 is a switch, for example, and supplies the signal or data corresponding to the operation of the user 1 to the operational input connection unit 463.

The environment information detection unit 432 includes sensors 481-1 to 481-n. Sensors 481-1 to 481-n respectively acquire different types of information, or acquire the same type of information.

For example, the sensor 481-1 acquires information relating to light such as images or brightness, and supplies the signal or data representing the acquired information relating to light to the sensor connection unit 465. The sensor 481-2 acquires information relating to sound such as a voice or volume (sound pressure), and supplies the signal or data representing the acquired information relating to sound to the sensor connection unit 465. The sensor 481-3 acquires information relating to spatial positioning such as acceleration or speed, and supplies the signal or data representing the acquired information relating to spatial positioning to the sensor connection unit 465.

The external equipment 433 includes actuators 491-1 to 491-n. The actuators 491-1 to 491-n respectively engage in different types of operations, or engage in the same type of operation. The actuators 491-1 to 491-n may be respectively constituted from, for instance, an electrical switch, solenoid, hydraulic switch, air valve, electric motor, hydraulic cylinder, or air cylinder.

For example, the actuator 491-1 may be an electrical switch for locking the door lock of the vehicle 311 having installed therein the information provision terminal device 301. For example, the actuator 491-2 may be a motor for opening and closing the window of the vehicle 311 having installed therein the information provision terminal device 301. For example, the actuator 491-2 may be a motor for operating the butterfly valve of the air conditioner of the vehicle 311 having installed therein the information provision terminal device 301. For example, the actuator 491-1 may be an electrical switch for controlling the lighting of the headlamp of the vehicle 311 having installed therein the information provision terminal device 301.

Incidentally, the information provision system may employ a constitution of not including the environment information detection unit 432 or external equipment 433. In such a case, the [information provision system] may also employ a constitution without including the sensor connection unit 465 or actuator connection unit 466.

Moreover, the human interface unit 431, environment information detection unit 432 or external equipment 433 may be an independent device, or may be built in the information provision terminal device 301. In particular, the sensors 481-1 to 481-n may be partially or wholly built in the information provision terminal device 301.

Further, the communication unit 456 communicates with the information provision server 302 via a plurality of transmission paths.

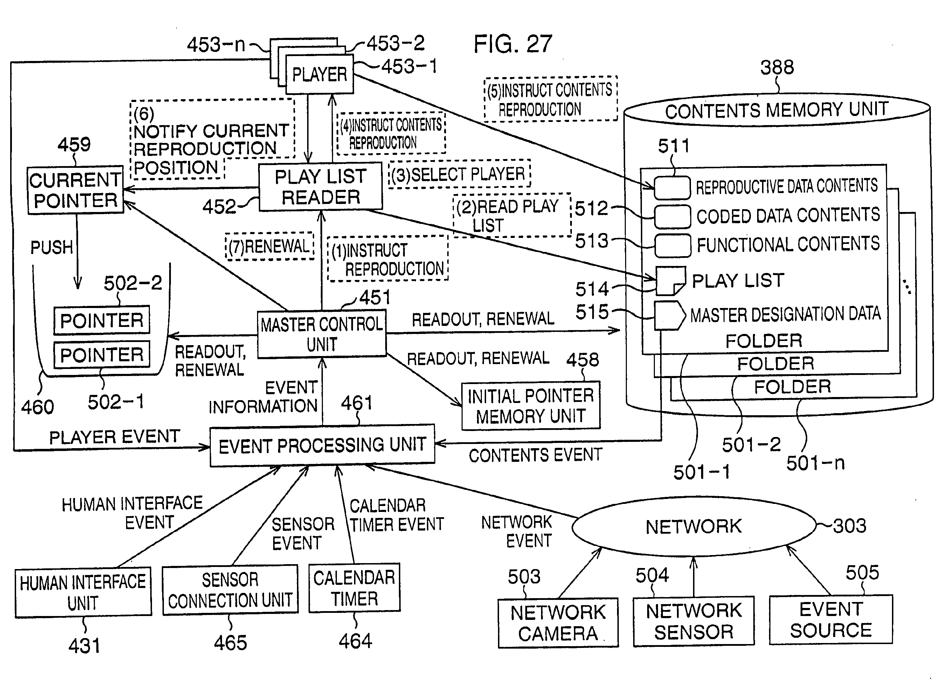

Fig. 27 is a diagram for explaining the schematic of the operation of the information provision terminal device 301.

The contents memory unit 388 stores the contents in a prescribed data structure. The contents memory unit 388 stores, for each of the folders 501-1 to 501-n, reproductive data contents 511, coded data contents 512, functional contents 513, play list 514 or master designation data 515. The folders 501-1 to 501-n have the data structure described later.

When the folders 501-1 to 501-n do not have to be differentiated separately, they will be simply referred to as a folder 501 below.

In the following explanation, the reproductive data contents 511 may be referred to as the contents 511. Operation and processing of the contents 511 are explained below.

Unless specified in particular, the operation or processing of the contents 511 may be replaced with the operation or processing of the coded data contents 512 or functional contents 513.

The master control unit 451, based on the event (information) supplied from the event processing unit 461, reads and writes the content of the contents memory unit 388, pointer stack 460, current pointer 459, and initial pointer memory unit 458.

The event processing unit 461 acquires the player event supplied from the players 453-1 to 453-n; the human interface event supplied from the human interface unit 431 via the voice input unit 462 or operation input unit 463; the sensor event supplied from the sensor connection unit 465; the calendar event supplied from the calendar timer 464; or the network event supplied from the network camera 503, network sensor 504, or other event sources 505 such as an information processing device or server via the network 303; and supplies the event information representing the content of the event to the master control unit 451.

When the players 453-1 to 453-n do not have to be differentiated separately, they will be simply referred to as a player 453 below.

The play list reader 452, based on the designation of the master control unit 451, reads the play list in the folder storing the contents currently being reproduced and stored in the contents memory unit 388, selects one among the players 453-1 to 453-n in accordance with the type of contents and designates the reproduction of such contents.

The players 453-1 to 453-n reproduce the designated contents based on the designation of the play list reader 452. When the information provision terminal device 301 starts its operation, the master control unit 451 reads information for designating the contents to be initially reproduced from the initial pointer memory unit 458, reads the master designation data, writes in the current point 459 according to the content described therein, and designates the start of reproduction to the play list reader 452.

The pointer stack 460, based on the control of the master control unit 451, pushes (stores) the contents of the current pointer 459 designating one of the folders 501-1 to 501-n as pointers 502-1 to 502-n, or pops the pointers 502-1 to 502-n (i.e., reads the pointers 502-1 to 502-n and stores them in the current pointer 459) when the folders 501-1 to 501-n storing the contents to be output are switched.

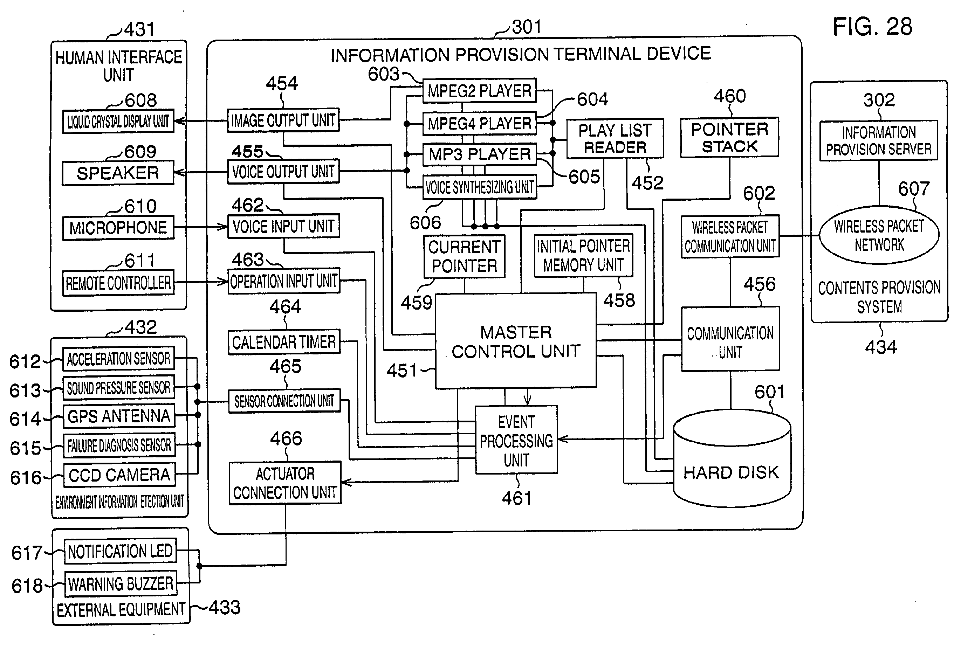

Fig. 28 is a block diagram showing a more detailed constitution of an embodiment of the information provision system pertaining to the present invention. Components that are the same as those shown in Fig. 26 are given the same reference numerals, and the explanation thereof is omitted.

In the information provision system depicted in Fig. 28, a hard disk 601 as the contents memory unit 388 is provided. The wireless packet communication unit 602 is an example of the network interface 457. The wireless packet communication unit 602 communicates with the information provision server 302 via the wireless packet network 607, which is an example of the network 303.

The MPEG2 (Moving Pictures Experts Group) player 603 and MPEG4 player 604 respectively reproduce contents composed of images or sounds in the MPEG2 format or MPEG4 format. The MP3 (MPEG 1 Audio Layer 3) player 605 reproduces audio contents in the MP3 format.

The voice synthesizing unit 606 synthesizes voices based on contents for performing voice synthesis; for instance, text-to-speech format contents.

The liquid crystal display unit 608 is an example of the display unit 471, and is composed of a liquid crystal display device. The speaker 609 is an example of the voice output unit 472, and is composed from the likes of a dynamic speaker. The microphone 610 is an example of the voice acquisition unit 473, and is composed from a dynamic microphone or a condenser microphone.

When only an audio service is provided in the information provision system depicted in Fig. 28 and it is not necessary to provide a display, the constitution does not have to include a liquid crystal display unit 608 and image output unit 454.

The remote controller 611 is an example of the operation acquisition unit 474, and supplies to the operation input unit 463 a signal representing the operational content via infrared light of radio waves.

The acceleration sensor 612, sound pressure sensor 613, GPS (Global Positioning System) antenna, failure diagnosis sensor 615 and CCD (Charge Coupled Device) camera 616 are examples of the sensors 481-1 to 481-n, and are respectively sensors for acquiring the acceleration, sound pressure, positional information, operational status of the device, and images.

The notification LED 617 and warning buzzer 618 are examples of the actuators 491-1 to 491-n, and respectively convey information to the user 1 by illuminating, extinguishing or flashing light, and convey information to the user 1 by sounds.

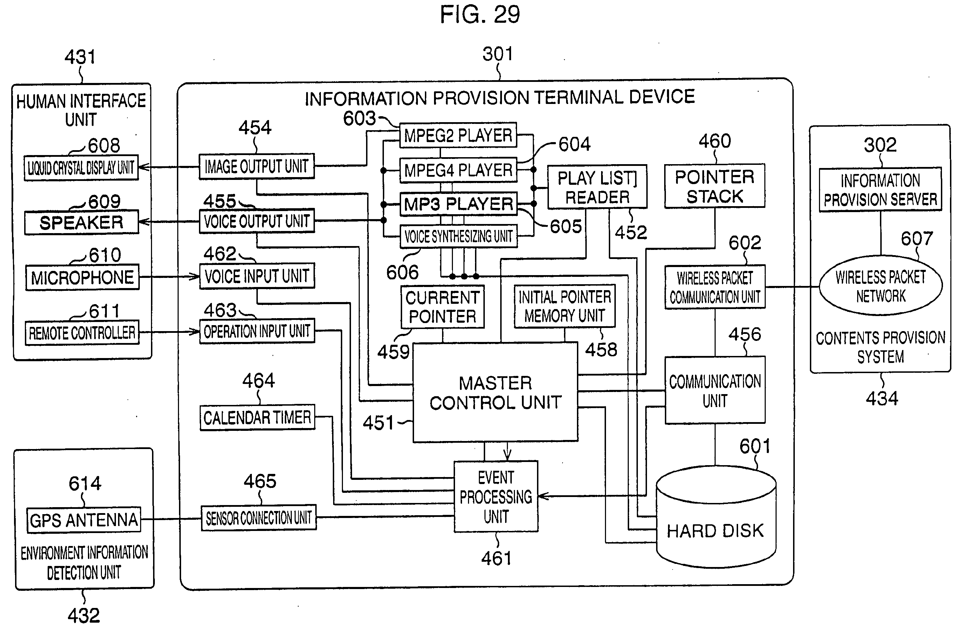

Fig. 29 is a block diagram showing a more detailed constitution of an embodiment of the information provision system pertaining to the present invention. Components that are the same as those shown in Fig. 28 are given the same reference numerals, and the explanation thereof is omitted.

In the information provision system depicted in Fig. 29, the actuator connection unit 466 is not provided to the information provision terminal device 301, and the information provision terminal device 301 does not control the external equipment 433. The environment information detection unit 432 is only provided with a GPS antenna 614.

The information provision terminal device 301 illustrated in Fig. 29 has a simpler constitution having, for example, a human interface unit 431 built therein, and is suitable for being carried around by the user 1.

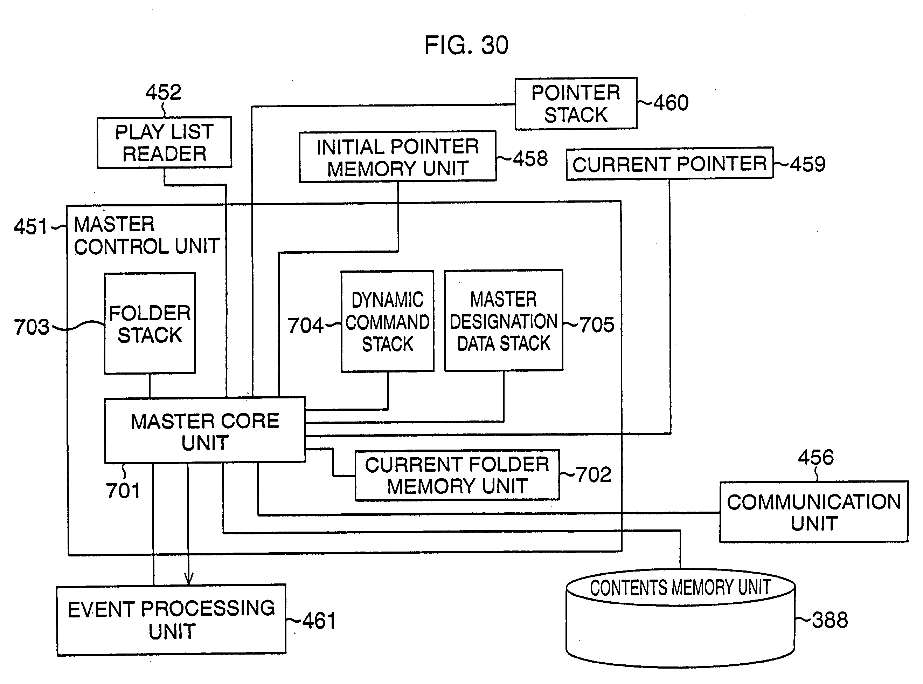

Fig. 30 is a block diagram for explaining a more detailed constitution of the master control unit 451.

The master control unit 451 is provided with a master core unit 701, a current folder memory unit 702, a folder stack 703, a dynamic command stack 704 and a master designation data stack 705.

The master core unit 701 controls the contents memory unit 388, play list reader 452 and communication unit 456 based on the event supplied from the event processing unit 461, master designation data 515, command map data described later and dynamic command map data, as well as information stored in the initial pointer memory unit 458, current pointer 459, current folder memory unit 702, folder stack 703, dynamic command stack 704 and master designation data stack 705.

The current folder memory unit 702 stores data for specifying the folder 501 storing the contents that are currently being output.

The folder stack 703 sequentially stores data for specifying the folder 501 storing the contents that were output in the past.

The dynamic command stack 704 sequentially stores data for specifying the folder 501 storing the contents that were output in the past and storing the dynamic command map data.

The master designation data stack 705 sequentially stores data for specifying the folder 501 storing the contents that were output in the past and storing the master designation data 515.

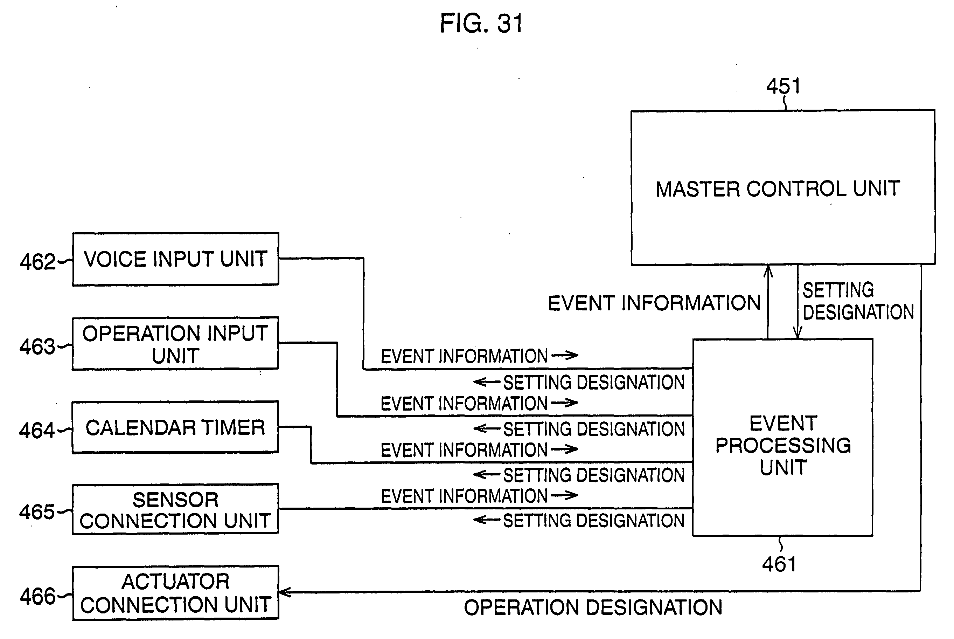

Fig. 31 is a block diagram for explaining the operation of the event processing unit 461.

The event processing unit 461, based on the setting designation from the master control unit 451, designates the setting of a threshold or the like for determining the output of event information representing the content of information to the voice input unit 462, operation input unit 463, calendar timer 464, sensor connection unit 465 and actuator connection unit 466.

The event processing unit 461 acquires event information representing the content of the event output by the voice input unit 462, operation input unit 463, calendar timer 464, sensor connection unit 465 and actuator connection unit 466 based on the setting, and supplies the acquired event information to the master control unit 451.

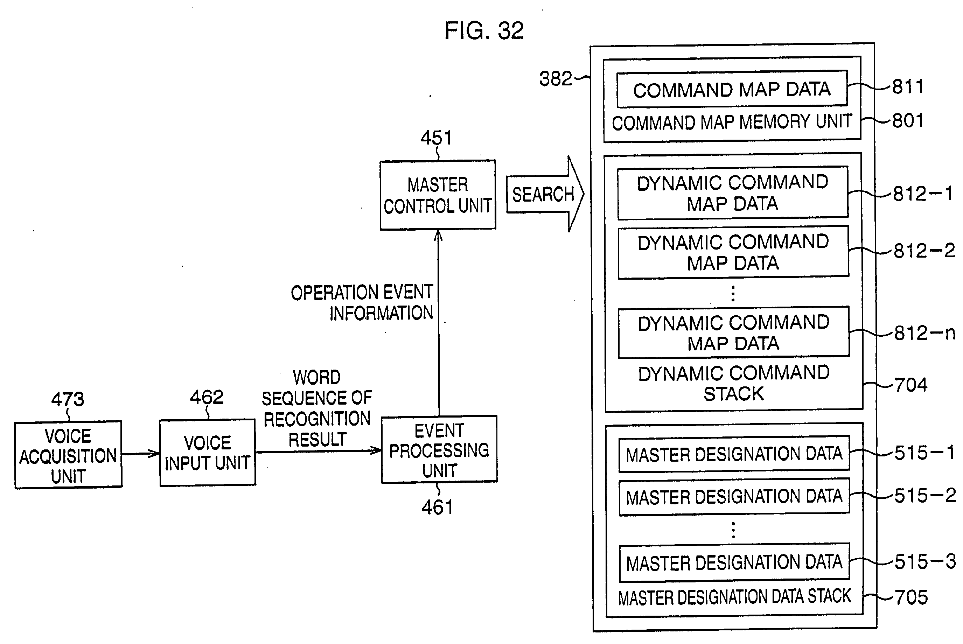

Fig. 32 is a diagram for explaining the reading of the command map data, dynamic command map data and master designation data, and the search of command based on the input event.

The command map memory unit 801 managed by the master core unit 701 and which is a prescribed area of the RAM 382 stores a command map data 811 having stored therein an order against the command. The command map data 811 is stored in the command map memory unit 801 while the information provision terminal device 301 is in operation.

The dynamic command stack 704 stores the dynamic command map data 812-1 to 812-n having described therein orders against the command. The dynamic command map data 812-1 to 812-n are stored in the dynamic command stack 704 or deleted from the dynamic command stack 704 when the contents 511 being output are changed.

When the dynamic command map data 812-1 to 812-n do not have to be differentiated separately, they will be simply referred to as dynamic command map data 812 below.

For instance, when the folder 501 storing the contents 511 has a tree structure, which is an example of a hierarchical structure, the folder 501 storing the contents 511 being output and the dynamic command map data 812 stored in the folder 501 of the ancestor of the folder 501 storing the contents 511 being output are stored in the dynamic command stack 704, and the dynamic command map data 812 stored in the folder 501 that is not an ancestor of the folder 501 storing the contents 511 being output are deleted from the dynamic command stack 704.

The master designation data stack 705 stores the master designation data 515-1 to 515-n storing orders against the command. The master designation data 515-1 to 515-n is stored in the master designation data stack 705 or deleted from the master designation data stack 705 when the contents 511 being output are changed.

For instance, when the folder 501 storing the contents 511 has a tree structure, which is an example of a hierarchical structure, the folder 501 storing the contents 511 being output and the master designation data 515 stored in the folder 501 of the ancestor of the folder 501 storing the contents 511 being output are stored in the master designation data stack 705, and the master designation data 515 stored in the folder 501 that is not an ancestor of the folder 501 storing the contents 511 being output are deleted from the master designation data stack 705.

For example, the voice acquisition unit 473 supplies the acquired signal representing the voice of the user 1 to the voice input unit 462. The voice input unit 462 generates an event based on the setting designated by the event processing unit 461, and supplies this to the event processing unit 461. For instance, an event is a word sequence of the recognition result recognizing the voice of the user 1. For example, voice input unit 462 supplies "traffic information, Tokyo, Minato Ward", which is the word sequence of the recognition result represented in text as the event, to the event processing unit 461.

The event processing unit 461 supplies the supplied event to the master control unit 451 as the operational event information. For example, the event processing unit 461 supplies the event of "traffic information, Tokyo, Minato Ward" to the master control unit 451 as the operational event information.

The master control unit 451, for instance, searches for the command for the event in a prescribed order from the command map data 811, dynamic command data 812-1 to 812-n and master designation data 515-1 to 515-n.

For example, the master control unit 451 searches for the command for the event in order from the latest setting regarding the master designation data 515-1 to 515-n, and, when the command for the event could not be found, searches for the command for the event in order from the latest setting regarding the dynamic command data 812-1 to 812-n. The master control unit 451 searches for the command for the event from the command map data 811 when it could not find the command for the event from the master designation data 515-1 to 515-n and dynamic command data 812-1 to 812-n.

The master control unit 451 controls the contents memory unit 388, play list reader 452, communication unit 456 and event processing unit 461 based on the found command.

Incidentally, the order in which the master control unit 451 searches for the command for the event may be set arbitrarily.

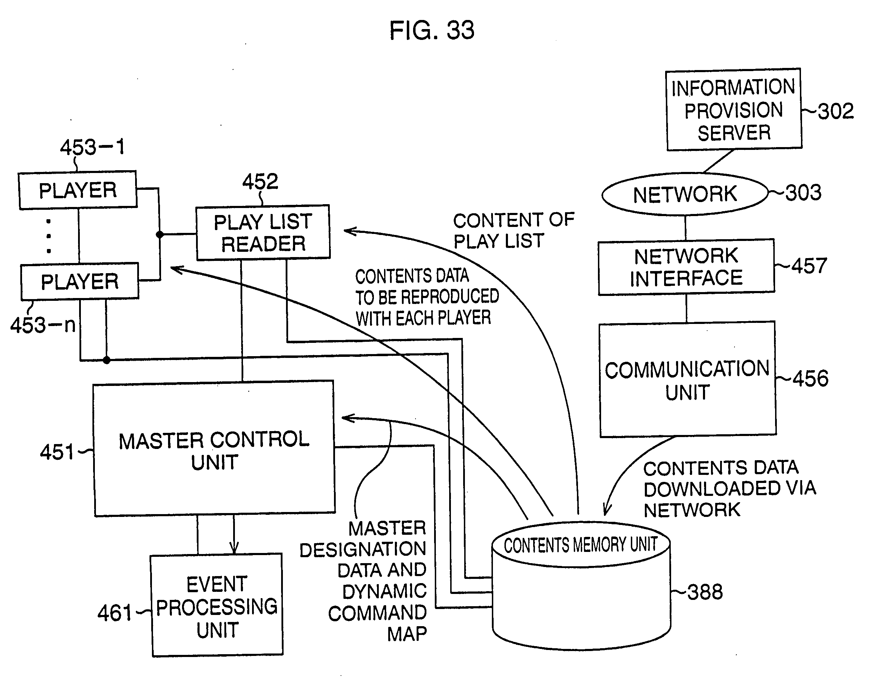

Fig. 33 is a diagram for explaining the flow of contents.

The communication unit 456 stores the contents 511, master designation data 515, dynamic command map 812 and play list 514 supplied from the information provision server 302 via the network interface 457 and network 303 in the contents memory unit 388.

The master control unit 451 reads the master designation data 515 and dynamic command map 812 stored in the contents memory unit 388, and controls the reception of contents of the communication unit 456 and the designation regarding the reproduction of contents of the play list reader 452 based on the read master designation data 515 and dynamic command map 812.

The play list reader 452 designates the output of contents 511 stored in the folder 501 storing the play list 514 to the players 453-1 to 453-n based on the play list 514 stored in the contents memory unit 388.

One of the players 453-1 to 453-n reads the contents 511 from the contents memory unit 388 and outputs the read contents 511 based on the designation from the play list reader 452.

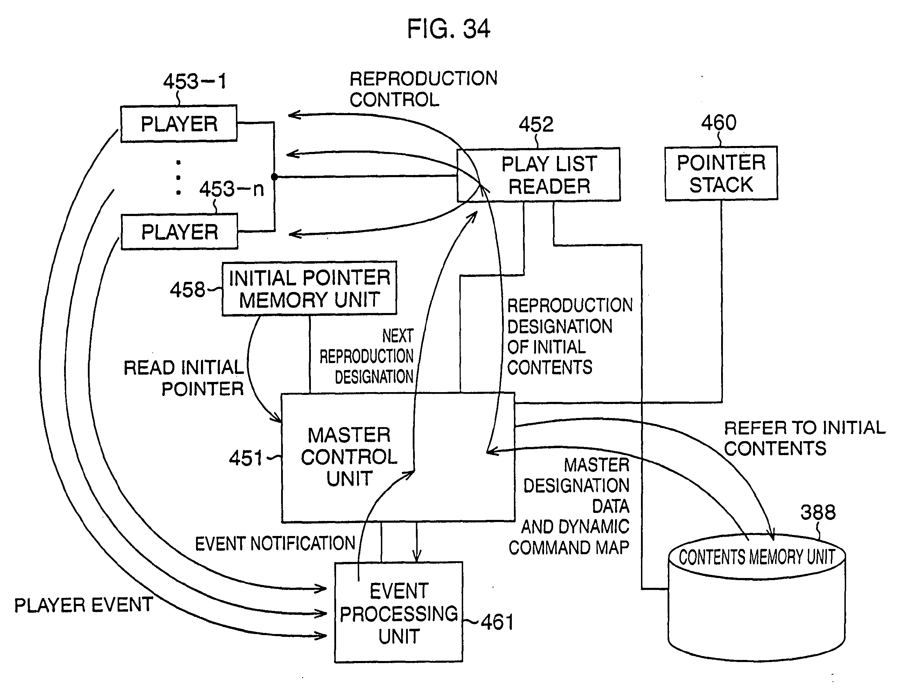

Fig. 34 is a diagram for explaining the operation of the information provision terminal device 301 upon activation.

The master control unit 451 foremost reads the initial pointer stored in the initial pointer memory unit 458, then reads the master designation data 515 and dynamic command map 812 stored in the folder 501 designated with the initial pointer based on the read initial pointer, and designates the output of the aggregate of contents 511 storing the folder 501 designated with the initial pointer to the play list reader 452.

The play list reader 452 reads the play list 514 stored in the folder 501 designated with the initial pointer as indicated from the master control unit 451, and designates the output of contents 511 described in the read play list 514 to the players 453-1 to 453-n based on the order of contents 511 described in the read play list 514.

One of the players 453-1 to 453-n to output the contents 511 stored in the folder 501 designated with the initial pointer supplies the player event representing the reproduction start of contents to the event processing unit 461 when the reproduction of contents is started.

The event processing unit 461 notifies the event to the master control unit 451.

The master control unit 451 acquires the command corresponding to the event notified from the event processing unit 461, and designates the reproduction of the subsequent aggregate (folder 501) to the play list reader 452 based on the acquired command.

Next, characteristics of the operation of the contents provision device pertaining to the present invention are explained.

In the present invention, as a result or providing a scheme for distributing the contents 511 such that the contents 511 are distributed from the information provision server 302 in which information is integrated uniformly and organized in a layered folder, download for distributing the contents 511 is conducted in stages by the information provision terminal device 301 independently from the operation of the user 1, the contents producer 121 is able to create the contents 511 based on one's productive idea so that such contents 511 will coincide with a part of the contents 511 before the user 1 requires information, and the information provision terminal device 301 automatically controlling the reproduction of contents 511 according to an event inside the information provision terminal device 301 and outside the information provision terminal device 301, the object of the [present invention] can be achieved.

In the present invention, since the contents service will be unified and the operation of the information provision terminal device 301 will also be integrated as a result thereof, the [service] can also be used by a user 1 who is subject to countless constrained conditions such as while driving a vehicle 311.

According to the present invention, since the overall system can be realized to have an extremely simple constitution, this will also contribute significantly to the cost reduction of the contents distribution service.

The technical characteristics realized in the present invention differ from the concept of programming using a programming language on an OS (Operating System).

One object of the present invention is to "reliably provide information in an appropriate amount as required by a user at an appropriate timing and in appropriate order and enable the effective use thereof to such user who is under a situation where it is difficult to pay attention to a plurality of information sources at the same time as a result of engaging in a main action other than obtaining information", and the [present invention] realizes a device or method relating to the data structure or terminal device or network for realizing a service satisfying requirements (A) to (I) when providing information, and does not aim to provide a versatile OS or programming function.

In order to achieve the foregoing object, it is necessary to provide a scheme capable of controlling the operation of the contents service by conveying the status of the user 1 and environmental status and change of status of the information source for conveying information via a network.

In order to achieve the object of the present invention, it is necessary to use the following events to enable the control of the distribution and reproduction of the contents 511:
(1) Event from the user 1;
(2) Event conveyed via a network;
(3) Change of status event which the contents producer 121 wishes to use;
(4) Event resulting from the passage of time, hour or time schedule;
(5) Event such as reproduction end generated by the player 453;
(6) Event generated by the reproduction of the contents 511; and
(7) Event generated by the environment.

In order to control the distribution and reproduction of the contents with an event, it is necessary to provide a means for detecting such an event and using the event in the contents.

With the response corresponding to the event, since the productive idea thereof will be different for each contents producer 121, even if the same event is generated, a response (requested processing or operation) will be different for the respective contents 511.

Therefore, this cannot be dealt with by merely programming the information provision terminal device 301 in advance. It is necessary for the contents producer 121 to designate the kind of response to be made to the event according to one's productive idea.

It would be insufficient to merely enable the download of an additional program having programmed thereon a new function, and it is necessary to provide a scheme where automatic renewal is constantly conducted without the user 1 having to personally perform a download operation or renewal operation of the terminal.

The present invention realizes an information provision system fusing broadcasting and communication in an extremely simple constitution that satisfies requirements (A) to (I) with the following constitution.

Provided is a scheme for distributing the contents 511 such that the contents 511 are distributed from the information provision server 302 in which information is integrated uniformly and organized in a layered folder, download for distributing the contents 511 is conducted in stages by the information provision terminal device 301 independently from the operation of the user 1, the contents producer 121 is able to create the contents 511 based on one's productive idea so that such contents 511 will coincide with a part of the contents 511 before the user 1 requires information, and the information provision terminal device 301 automatically controlling the reproduction of contents 511 according to an event inside the information provision terminal device 301 and outside the information provision terminal device 301.

As a result of the above, the present invention yields numerous advantages with a simple constitution.

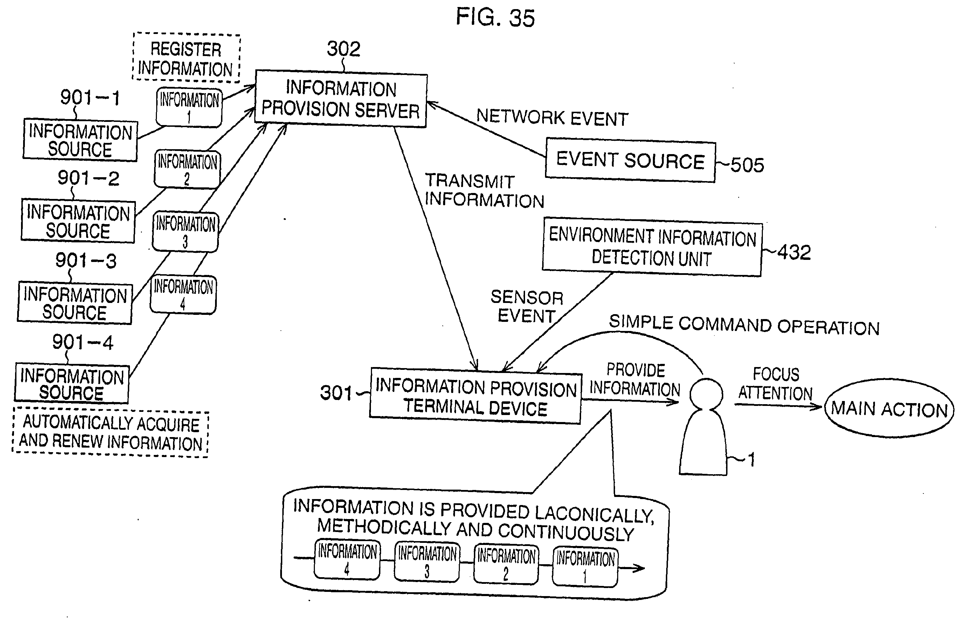

Fig. 35 is a diagram for explaining the schematic of the operation of the information provision system pertaining to the present invention.

The information provision server 302 stores information as the contents respectively supplied from the information sources 901-1 to 901-4.

The information provision server 302 transmits information to the information provision terminal device 301. The information provision server 302 supplies the network event supplied from the event source 505 to the information provision terminal device 301.

The information provision terminal device 301 supplies the information supplied from the information provision server 302 to the user 1 laconically, methodically and continuously based on a command which is the sensor event supplied from the environment information detection unit 432 or the event supplied from the user. As a result, the user will be able to focus one's attention on another activity while using the information provision terminal device 301. The command which is an event supplied from the user may be a vocalization of a word, and the user 1 may make in a simple command operation to the information provision terminal device 301.

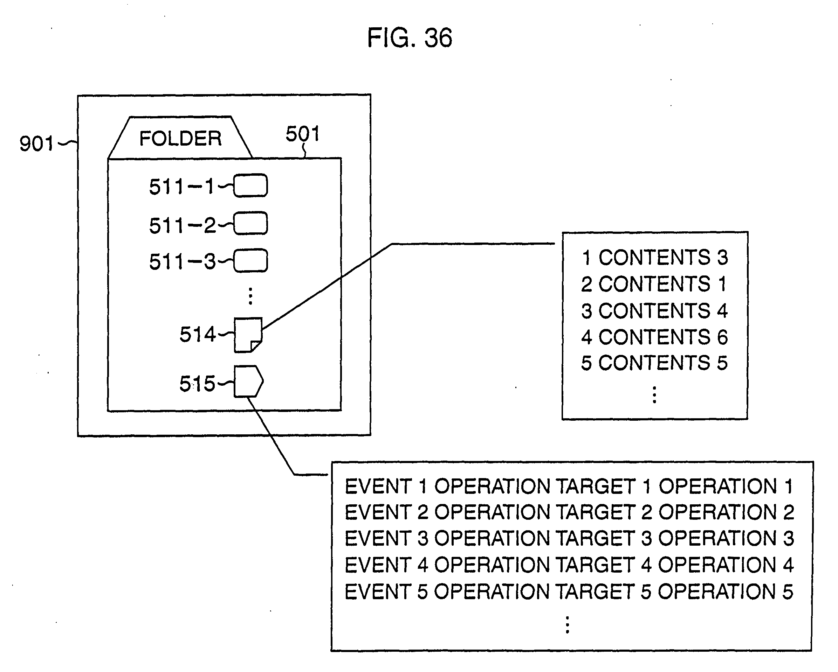

Fig. 36 is a diagram for explaining the relationship between the contents 511, play list 514 and master designation data 515, and the folder 501. In the present invention, the contents 511 are stored in the folder 501. Stored in the folder 501 are the contents 511, the play list 514 relating to the reproduction order of the contents and the master designation data 515 for designating the operation of the contents 511.

Incidentally, the dynamic command map data 812 is stored in the folder 501 as a type of the contents 511. The dynamic command map data 812 has a specific file name, or a specific property.

The contents 511 are the contents data such as sound, image or text, or the folder 501. As a result of a folder 501 being store in the folder 501, a hierarchical structure is realized.

Described in the play list 514 is the order of the contents 511 to be output, in the order of contents 3 as the contents 511-3; contents 1 as the contents 511-1; contents 4 as the contents 511-4; contents 6 as the contents 511-6; and contents 5 as the contents 511-5.

Described in the master designation data 515 are the operation target and the operation thereof against the event. For example, described in the master designation data 515 are operation target 1 and operation 1 thereof against event 1; operation target 2 and operation 2 thereof against event 2; operation target 3 and operation 3 thereof against event 3; operation target 4 and operation 4 thereof against event 4; and operation target 5 and operation 5 thereof against event 5.

In the present invention, the various advantages described below can be yielded by the information provision system employing the following characteristic constitution:
1. In the information provision server 302, all contents 511 are provided by being organized in layers in the folder 501, which is a sub-folder of one folder 501;
2. Distribution of the contents 511 is conducted in stages according to the operation of the user 1 made with respect to the completely distributed contents 511;
3. The preceding contents 511 induces the distribution of the subsequent contents 511, and service is provided automatically and continuously;
4. Even if the contents 511 stored in each information provision terminal device 301 are the same in the initial state, the constitution will differ according to the user 1 depending on the log of the information provision terminal device 301 of the user 1;
5. The distribution of the contents 511 can be conducted merely by the information provision terminal device 301 downloading and copying all folders of folder 501 and below designated by the information provision server 302;
6. In the information provision terminal device 301, the layer of the contents 511 is the same layer structure as the information provision server 302, and can be managed by the contents producer 121;
7. The contents producer 121 is able to designate the behavior in the information provision terminal device 301 of the contents 511 after distribution for each folder 501 by employing the master designation data 515;
8. No person other than the contents producer 121 may modify the contents 511;
9. Based on the plan of the contents producer 121, operation of the user 1, events detected inside and outside the information provision terminal device 301, and the reproduction of contents 511 based on a network event can be automatically controlled;
10. As a result of the user 1 merely performing an operation for using the contents 511, the contents 511 are automatically distributed, and stored in the information provision terminal device 301; and
11. In the information provision terminal device 301, the user 1 is able to handle cumulative-type, broadcasting-type, communication-type and functional-type contents 511 stored in the folder 501 with an integrated operation.

When the user 1 does not engage in operation, the service is automatically continued based on the contents 511 distributed according to the previous operation log.

The user 1 can engage in a simple operation with the contents 511 created with consideration by the contents producer 121 with care.

The contents producer 121 can guide the operation by presenting an operation guide to the user 1.

Even when there is not connection to the network 303, the contents 511 can be used by employing the contents 511 distributed in the past.

The foregoing characteristic constitution can be realized with an extremely simple system as represented in the embodiments.

Characteristics of the information provision system according to the present invention are now explained in detail.

Foremost, the scheme for focusing on the main action is explained. According to the present invention, since the user 1 is able to receive information according to the scene merely by performing operations required only in limited situations while receiving information that is provided in a well-organized manner, the [user 1] is able to focus on the main action.
(A) Since the scheme integrates information into a single type of contents 511, the user 1 only has to pay attention to such [contents 511];
(B) Since the scheme directly designates information required by the user 1, the user 1 is able to acquire information when one's desired information is definitive;
(C) Since the scheme continuously and automatically provides information, the user 1 is able to obtain information even when operation is not made or when operation cannot be made;
(D) Since separate information relating to the designated information can be induced, the user 1 is able to obtain necessary information; in other words, the user 1 will hardly be provided with unnecessary information;
(E) The operation for reproducing the contents 511, in addition to being controlled by the user, is also controlled based on sensor information, external event, and operation for reproducing the contents; thus, the reproduction of the contents 511 can be automatically controlled;
(F) Since the scheme provides information to the user 1 in stages, the informational relationship is provided in an organized manner;
(G) Since the scheme changes the subject matter of the contents 511 according to the reproduction of a previous program or external event, the subject matter of the contents 511 changes according to the action of the user 1;
(H) Since the information to be notified is notified to the user 1 via the contents 511, the user 1 will not overlook important information; and
(I) The information provision method can be switched according to the status of the user 1; therefore, the editor (contents producer 121) may employ the optimum method.

Next, the fusion of broadcasting and communication is explained.

As a result of employing the following constitution, enabled is the provision of a service fusing broadcasting and communication in an information provision terminal device 301 comprising a cumulative feature.
- Reproduction control and contents management of the information provision terminal device 301 can be performed based on the information data contained in the contents 511 to be distributed.
- Since the contents 511 can be distributed as a result of duplicating the content of the folder 501 without change in the information provision terminal device 301, distribution is possible via both broadcasting and communication.

In order to achieve the goal of making the user 1 concentrate on the main action, employed is a constitution satisfying requirements (A) to (I). Thus, the user 1 is able to receive an information provision service merely by making simple operations with a remote controller 611 or voice command as in a TV broadcast receiver or a radio broadcast receiver. The user 1 may also change the flow of the continuous provision of information by performing an operation whenever one pleases in order to select and acquired one's desired information.

Information contained in the contents 511 can be used to designate or change the portion to be reproduced within the contents 511, switch the reproduction to separate contents 511, or distribute new contents 511, and this will also enable the use of a communication-type service.

As a result of these characteristics, a service equipped with all characteristics of cumulative, broadcasting and communication can be realized via an integrated user interface of a single information provision terminal device 301.

Next, the distribution of broadcasting-type contents is explained.

In the present invention, provided is a constitution where information used by the user 1 of each information provision terminal device 301 can be selectively distributed from the information provision server 302 in which information is integrated uniformly and collected.

Thus, from the perspective of the contents producer 121 to provide the information distribution service or the information provider providing information to become the source of contents to the contents producer 121, this implies that information requested by the user 1 can be selectively distributed merely be preparing the same information in relation to all information provision terminal devices 301 and registering such information in the information provision server 302 as with a conventional broadcasting [system].

According to the present invention, since the selective distribution of the contents 511 is induced based on the dynamic mutual relational between the user 1 and the information provision terminal device 301, the information provision server 302 for distributing information can have an extremely simple constitution, the operation of providing the information distribution service can be run at low cost, and an extremely significant economic effect can be expected.

Next, the distribution of communication-type contents is explained.

In the present invention, provided is a constitution where the contents 511 can be designated from among the options selectable according to the status of each user 1 within the contents 511 distributed pursuant to the distribution of broadcasting-type contents 511.

When it is not necessary in particular for the user 1 to make an operation, and the user 1 wishes to make some kind of operation in the broadcasting-type contents 511, the same contents 511 may be used to provide a communication-type service such as a web browser which provides information selected according to the operation of the user 1.

Further, conventional communication services such as emails and phone calls may be used upon referring to the contents 511 among the contents 511 distributed as the broadcasting-type service.

As a result of comprising the foregoing characteristics, the information provision system pertaining to the present invention is able to realize a service comprising all the characteristics of a broadcasting-type service, a communication-type service, and a cumulative-type service.

As a result of having integrated the schemes relating to provision of information and operation, the service provision system according to the present invention is able to realize the information provision terminal device 301 and the information provision server 302 for providing information in a simple constitution.

As a result of constituting the information distribution system as follows, the present invention is able to yield the various advantages described later even with an extremely simple constitution.
1. Information to be distributed is organized in the folder 501 as the contents 511. Information is collected in the information provision server 302 having a layered constitution integrated in a unique top folder;
2. The productive idea of the contents producer 121 is distributed by being included in the master designation data 515 or the contents 511 storing an order against the command; and
3. Based on the operation of the user 1, the information provision terminal device 301 downloads from the information provision server 302, the contents 511 of the corresponding folder 501 is downloaded thereby, and all folders 501 beyond the designated folder 501 are also downloaded.

The following shows that the information provision system pertaining to the present invention satisfies requirement (A).

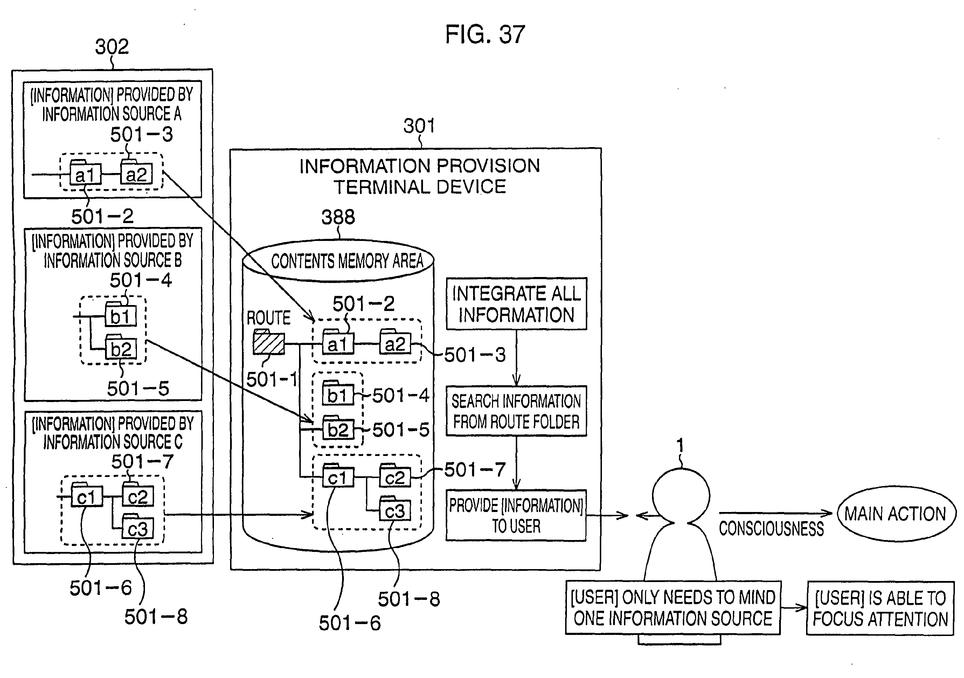

In order to satisfy requirement (A), the present invention integrates all of the services indicated below.
(a) As shown in Fig. 37, the terminal device is integrated into the information provision terminal device 301. The terminal device for providing information does not merely combine the functions of the respective terminals, it has been integrated so as to satisfy requirements (B) to (H). As a result, since the user 1 only has to pay attention to the information provision terminal device 301, such [user 1] is able to perform simple operations while engaging in the main action and acquire all types of information.
(b) Information is integrated.
   In the respective information provision terminal devices 301, provided is a constitution where information is organized as contents 511 in a unit (aggregate) referred to as a layered "folder", and integrated in a "top folder", which is a folder at the uppermost layer. As a result of employing the foregoing constitution, all information is integrated into the top folder, and it is possible to refer to all information by following such [top folder]. As a result of the contents 511 of the information provision terminal device 301 being stored as described above, the user 1 will be able to use all contents 511 by utilizing the contents 511 of the route folder.
   Since the contents 511 stored in the top folder and below are based on the selection made by the previous operation of the user 1, the contents 511 provided by the contents user 121 in relation to information required by the user 1 of each terminal will be integrated and stored, the user 1 will be able to designate and acquire necessary information with minimal operation.
(c) Broadcasting-type service and communication-type service are integrated.

In order to integrate communication services such as email transmission and phone calls in addition to merely listening to news or music, the present invention provides a scheme referred to as the functional contents 513 (Fig. 27).

As a result of the functional contents 513, the user 1 will be able to read emails or make phone calls in addition to [listening] to music data. Since the functional contents 513 enable the foregoing use with operations similar to reproducing music contents all functional contents 513 can by used with an operation of an integrated operation control.

As a result of employing the foregoing constitution, an integrated operation can be realized in both a broadcasting-type service and communication-type service.

The information provision system pertaining to the present invention which satisfies requirement (B) is now explained.

In the present invention, the user 1 designates the contents 511 by operating an operational means such as a voice command or GUI (Graphical User Interface) or remote controller 611.

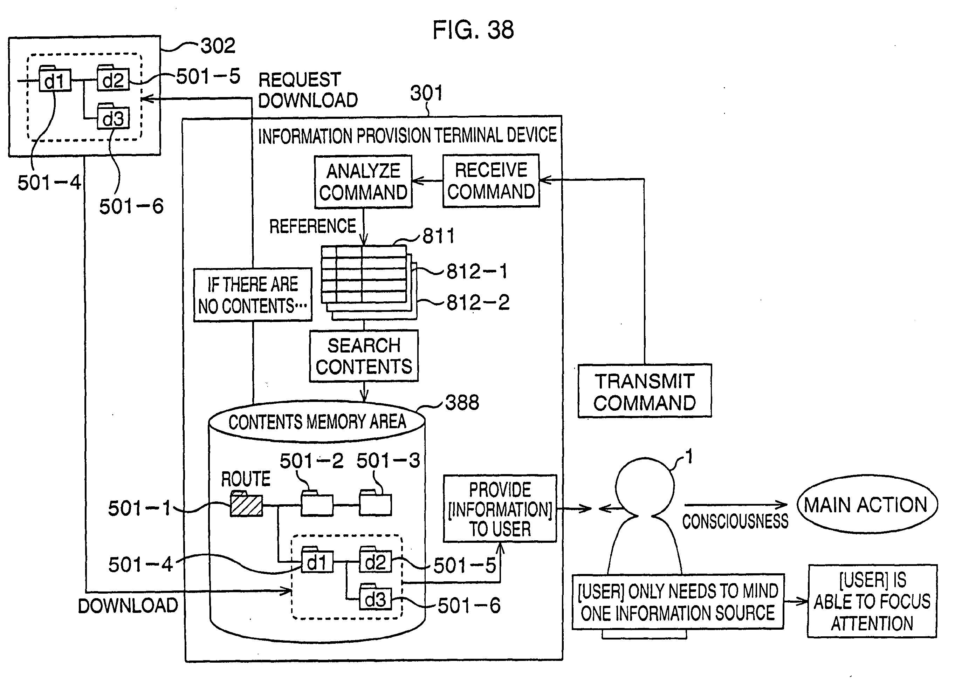

As shown in Fig. 38, as a scheme capable of designating the kind of information that is necessary, provided is a direct designation function for directly designating and selecting the contents 511 regarding key items or a menu within the contents 511.

The direct designation function is realized with a scheme referred to as a command map or dynamic command. Stored in the command map data 811, for example, in the case of a voice command, are the vocabulary of the voice command and the correspondence information of the contents 511 to be selected thereby.

Provided to the dynamic command map data 812 is a function for replacing a part or the whole of the command for the respective contents 511. As a result of this function, the contents 511 can be directly designated and selected even when the constitution of the contents 511 changes during the renewal of the contents 511.

The contents stored in the information provision terminal device 301 are the contents 511 relating to necessary information which were automatically organized as a result of the previous operations of the user 1 for each user 1 of each respective information provision terminal device 301. As a result, only information required by the user 1 will be collected, and the user 1 will be able to arrive at one's desired information with extremely few operations without requiring numerous operations such as selecting [one's desired information] among the contents 511 of all layers stored in the information provision server 302.

The information provision system pertaining to the present invention which satisfies requirement (C) is now explained.

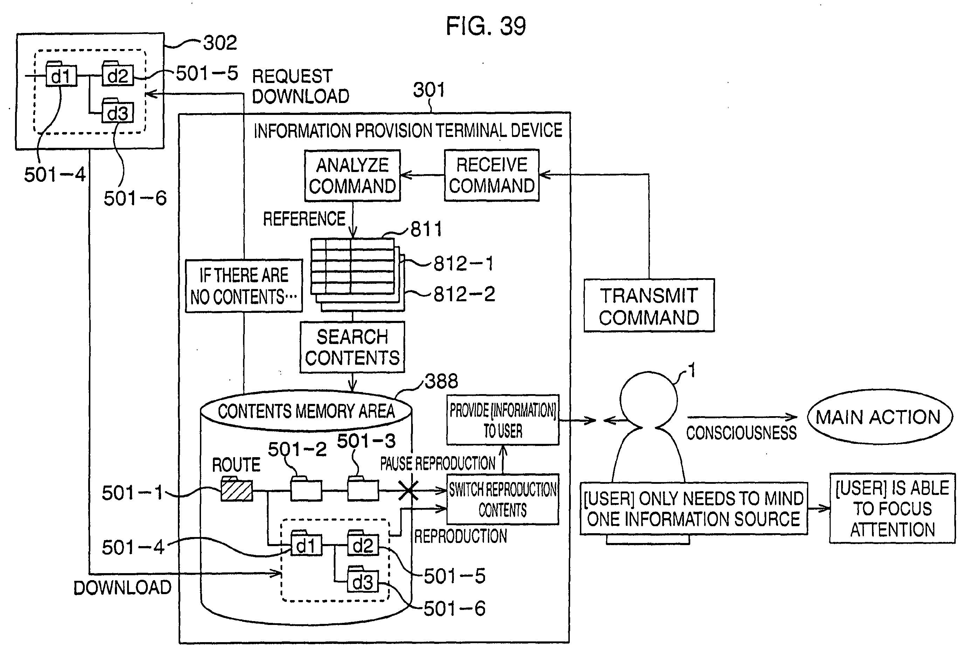

As shown in Fig. 39, in order to avoid attention becoming diverted as a result of performing operations to acquire information, the information provision system of the present invention provides information as follows:
1. When it is necessary to make an operation immediately, to enable such immediate operation; and
2. When the [user] wishes to continuously acquire information without having to engage in any operation, to automatically and continuously provide information.

The information provision system pertaining to the present invention which satisfies requirement (D) is now explained.

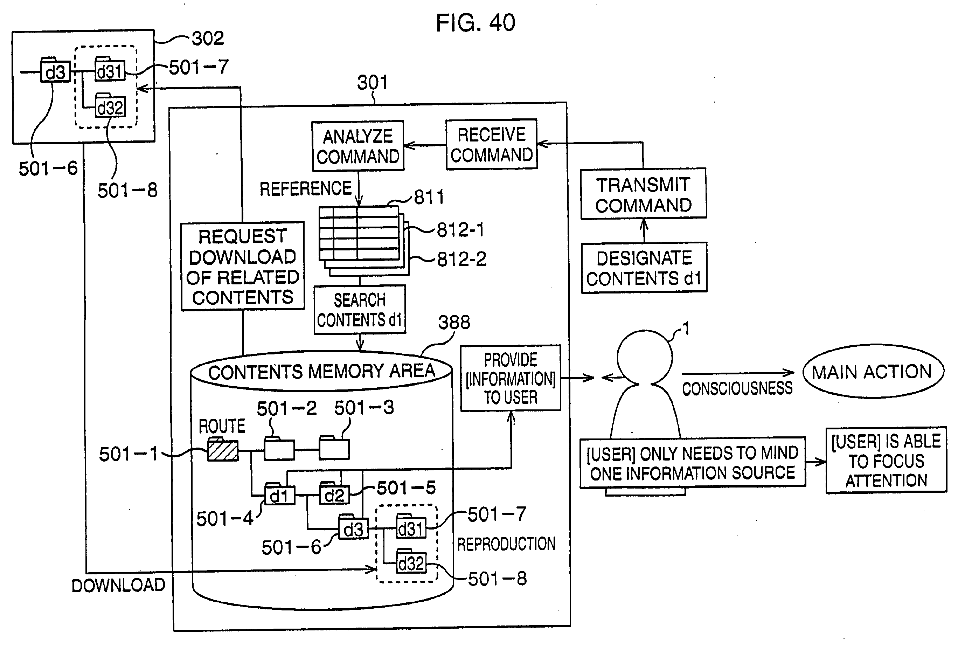

As shown in Fig. 40, in order to provide information with minimal unnecessary information contained in the presented information the information provision system pertaining to the present invention has the following constitution:
1. The contents 511 to be provided subsequently is automatically induced from the contents 511 directly designated and selected by the user 1 in the beginning; and
2. When a selection operation is made within the contents 511, such [contents 511] will be replaced with the subsequent contents 511.

According to the foregoing structure, the initially provided [contents] will be those selected personally by the user 1, and the subsequent contents 511 will be able to provide information as though it is a result of the selective operation made by the user while the preceding contents 511 are being provided, and it is possible to increase the possibility that the presented information is the information requested by the user 1.

The information provision system pertaining to the present invention which satisfies requirement (E) is now explained.

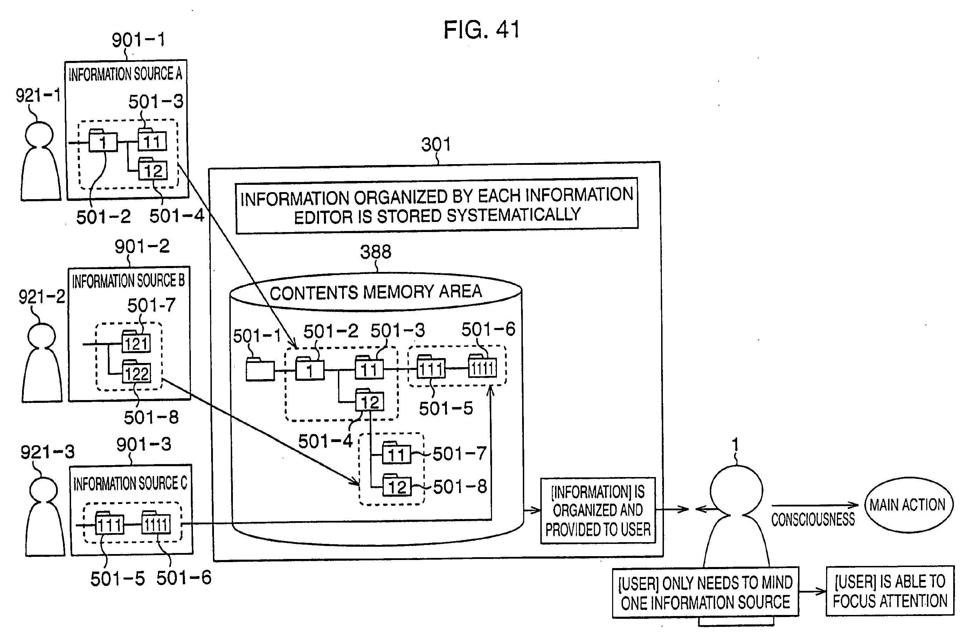

As shown in Fig. 41, in order for the informational relationship to be provided in an organized manner, the information provision system pertaining to the present invention is constituted such that the information requested by each user 1 is organized and stored for each information provision terminal device 301 used by the user 1.

Organization of information is conducted by human editors 921-1 to 921-3, and the organized results are reflected in the contents layer and contents data itself then stored in the contents database of the information provision center (corresponding to the information sources 901-1 to 901-3 in the drawing).

The structure of information organized by the editors 921-1 to 921-3 is automatically distributed inside the information provision terminal device 301 while the necessary information maintains the originally organized structure as a result of the user 1 using the contents 511.

As a result, the user 1 will be able to select information easily with minimal operation.

The information provision system pertaining to the present invention which satisfies requirement (F) is now explained.

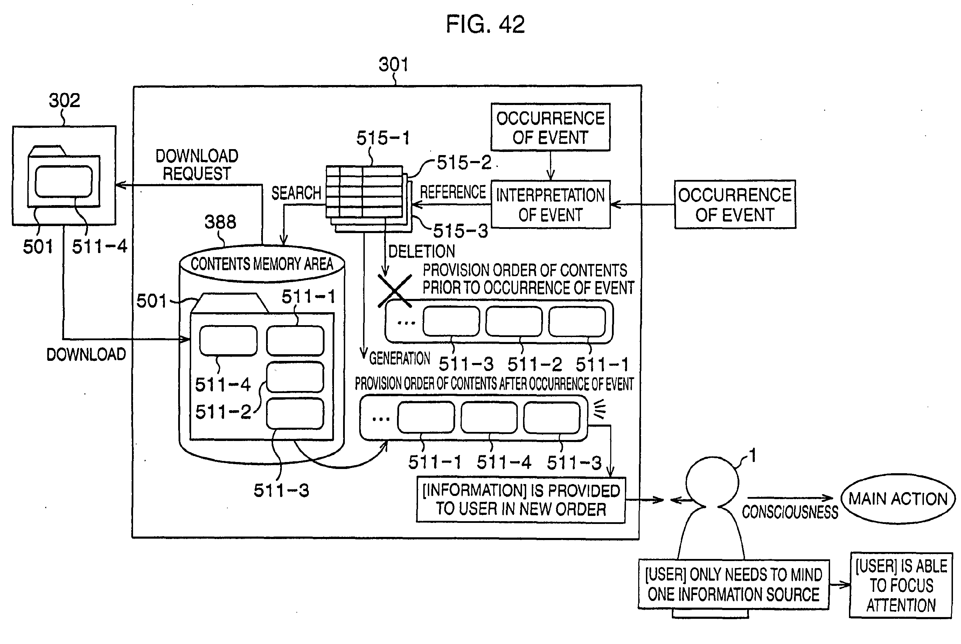

As shown in Fig. 42, in order to provide appropriate information at an appropriate timing and in appropriate order, the information provision system pertaining to the present invention provides the following functions:
1. Flow of the provision of information is controlled based on an event;
2. Information to be provided is selected based on an event generated with the reproduction of contents and
3. Order of provision is switched based on an event.

As a result of these functions, the contents 511 created by the information provider (contents producer 121) will be reproduced in the order and content that changes according to the request or status of the user 1 and not in the fixed order determined at the time of editing.

The information provision system pertaining to the present invention which satisfies requirement (G) is now explained.

The present invention provides a constitution enabling the contents 511 to change the subject matter of oneself or other contents 511 according to an event.

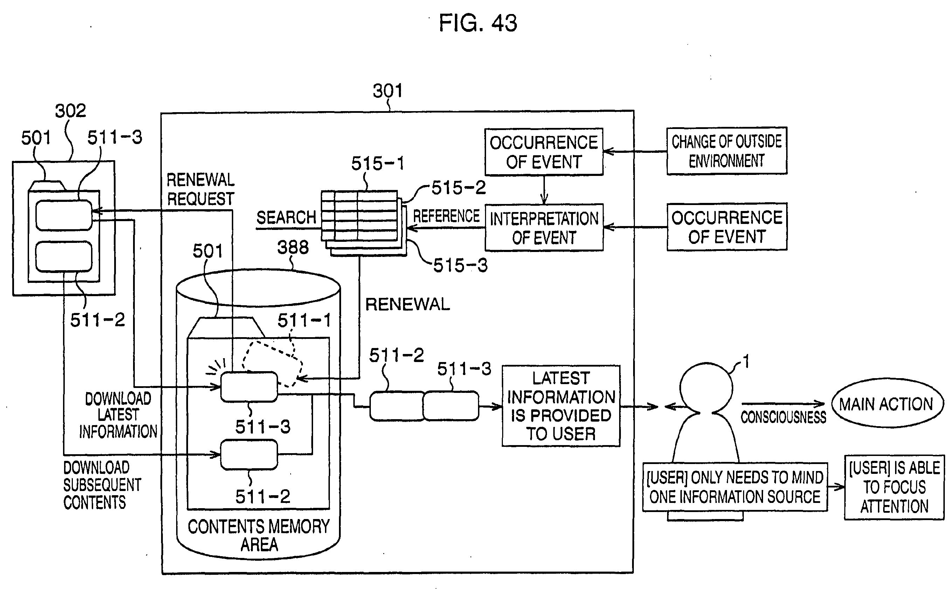

As shown in Fig. 43, with this constitution, the provided information will be automatically renewed for each information provision terminal device 301, and be able to respond to changes in the user 1 or status.

The information provision system pertaining to the present invention which satisfies requirement (H) is now explained.

With the information provision system pertaining to the present invention, as shown in Fig. 43, the reproduction state of the contents 511 will change according to the event, and information to be conveyed can be provided on a case-by-case basis according to changes in the user or environmental status (Fig. 5.2.1G).

The information provision system pertaining to the present invention which satisfies requirement (I) is now explained.

With the information provision system pertaining to the present invention, as shown in Fig. 43, the method of providing information can be switched by comprehending the state of the user 1 from the event generated via the sensors 481-1 to 481-n or the operation of the user 1.

Next, the fusion of broadcasting and communication is explained. As a result of employing the following constitution, the information provision system pertaining to the present invention is able to provide a service integrating the characteristics of both the broadcasting and communication services:
1. When no operation is required, since the provision of information is automatically continued as with a TV broadcast or FM broadcast, the user only have to watch or listen; and
2. When the [user] wishes to make an operation, information to be obtained will change according to such operation.

Next, the constitution yielded by the broadcasting-type service is explained:
1. The user 1 merely has to select a channel to continuously receive information; and
2. The same information can be provided simultaneously to a plurality of users 1.

Here, the provision of continuous information is explained.

When the user 1 makes an operation to designate the contents 511, the reproduction of the designated contents 511 will automatically start. As a result of reproducing such contents 511, provided is a constitution where the subsequent contents 511 will be automatically distributed according to the productive idea of the contents producer 121, and such distribution will be continued automatically. As a result of employing the foregoing constitution, information can be provided continuously even without the operation of the user 1.

The simultaneous provision of information is now explained.

Since the contents 511 are constituted to accept a network event, when it is necessary to provide [information] simultaneously, such network event can be used to supply information simultaneously.

Next, the constitution yielded by the communication-type service is explained:

A communication-type service has a two-way communication data flow. Thus, it has the characteristics classified below in comparison to a broadcasting-type service:
1. Information can be designated in detail and acquired;
2. Information can be acquired when needed;
3. Two-way provision of information is possible;
4. Email-type service is possible; and
5. Phone call-type service is possible.

Next, the constitution yielded by the cumulative-type service is explained:

In the information provision system pertaining to the present invention, the information provision terminal device 301 comprises a contents memory unit 388.

As a result of the contents memory unit 388, a cumulative-type service enabling the automatic renewal of information and the free designation and use of organized information is yielded.

In recent years, although there are portable music players with a built-in hard disk capable of storing over 1,000 songs, the user 1 has to personally renew the music, and the operation thereof is extremely complicated.

According to the present invention, with a device having a similar constitution, a service enabling the automatic renewal of the contents 511 and the [user] to freely select and listen to the contents 511 is yielded.

Next, the functional service is explained.

Firstly, the operation of the functional service is integrated.

With the information provision system pertaining to the present invention, a functional service can be incorporated in the operation of the information provision service. As a result, the functional service will not trouble the user 1, and an effect is yielded in that the attention will not be diverted from the main action.

Secondly, the functional service can be used from the contents.

As a result of the functional contents 513, the functional service can be activated and controlled from the reproductive data contents 511.

Thirdly, external equipment can be controlled.

As a result of employing a constitution of adding the function of an actuator connection unit 466, the external equipment 433 can be controlled.

Next, the integration of the contents 511 is explained.

In the present invention, as a result of employing the following constitution, all actions that can be performed by the information provision terminal device 301 may be performed as a single action of using the contents 511:
1. Handle all information to be provided as contents 511;
2. Control all types of contents 511 with an integration operation;
3. All contents 511 exist in one of the layered folders 501 below a unique route folder; and
4. One of the contents 511 can be designated and used based on the operation of the information provision terminal device 301.

Actions that can be performed by using the contents 511 is not limited to simply listening to the news or weather forecast, traffic information, or music information.

For instance, in the example of an in-car information provision terminal device 301, all actions explained as the contents 511 in the embodiments such as reading emails aloud, transmitting and receiving voice mails, listening to the status information of the vehicle 311, communicating with a person outside the vehicle 311 and so on may be realized.

The simple constitution is now explained.

Foremost, the information provision server 302 is explained.

In the present invention, the distribution of contents 511 is conducted by copying all folders among one of the folder 501 and below among one of the layers in the same hierarchical structure from all distribution data prepared in the hierarchical structure on the information provision server 302.

Therefore, the information provision server 302 only has to forward all information of the folder 501 and below designated by the information provision terminal device 301.

As a result of adopting the foregoing constitution, the information distribution system capable of achieving the object of the present invention can be created in an extremely simple structure.

Next, the information provision terminal device 301 will be explained.

The present invention is constituted such that, based on the information data (e.g., master designation data 515 or dynamic command map data 812) contained in the contents 511 distributed from the information provision server 302 to the information provision terminal device 301, the contents 511 is able to control the reproduction of the information provision terminal device 301 or administer the renewal or deletion of the contents stored in the information provision terminal device 301 based on the idea of the contents producer 121.

Further, as a result of the user 1 using the contents 511 distributed previously, which subsequent contents 511 is required will be determined, and thereby enabled are contents 511 that can be automatically distributed.

As a result of employing the foregoing constitution, the information provision terminal device 301 will only have to store the designated contents 511 in the contents memory unit 388, and perform reproductions according to the information data (e.g., master designation data 515 or dynamic command map data 812) contained in the stored contents 511.

The switching of the means or method of providing information is now explained.

It is desirable that the information provision terminal device 301 is equipped with a plurality of information output devices (or programs) such that they can be used properly according to the content of information provided by the contents producer 121.

The [devices] are used appropriately in the embodiments of the present invention as follows:
1. Notification with LED and sound;
2. Provision of information with images using a liquid crystal display device (liquid crystal display unit 608); and
3. Provision of information only with sound.

The notification with LED and sound is used to notify the user 1 even when the power of the information provision terminal device 301 is turned off.

The provision of information with images using a liquid crystal display device is used when the user 1 is able to use one's visual sense. The use of GUI is included in this case.

The provision of information only with sound is used in a case when the user is not able to focus one's visual sense to the information provision terminal device 301 such as when driving the vehicle 311.

In order to achieve the object of the present invention, it must be possible to appropriately use the means for providing information according to the status of use of the user. Thus, since requesting the user's operation will lead to the user's attention being diverted from the main action, it is desirable to do this automatically as much as possible.

In the present invention, as a result of preparing a plurality of contents having different information provision means in advance within the contents to be distributed, and automatically switching the contents without waiting for the user's operation when a sensor event is generated, the foregoing operation can be realized. Specifically, for example, in the contents for providing a sightseeing guide to an in-car information provision terminal device 301, the sightseeing guide producer (contents producer 121) prepares in advance audio contents for a case where the vehicle is running and visual contents for a case when the vehicle is parked, and distributes both contents as single sightseeing guide contents. Assuming a case where the sightseeing guide contents will be reproduced, the contents producer 121 will merely have to describe in the master designation data 515 information data that will switch the contents in correspondence with the sensor event of the sensor while the vehicle is running.

As described above, a feature of the present invention is that the contents producer 121 is able to create and distribute the contents 511 that are selectable with the information provision means. As a result of this feature, the contents producer 121 will be able to provide information employing the most effective presentation in consideration of the constrained conditions of the user 1.

Specifically, in the sightseeing guide described above, a visual guide may be provided when the vehicle is parked, and an audio guide may be provided when the vehicle is running.

As a result of the master designation data 515, it is possible to automatically switch the audio contents 511 for a case where the vehicle is running and the visual contents 511 for a case when the vehicle is parked.

In an application that does not require the switching from the contents producer 121, when the sensor 481 detects the movement of the vehicle 311, the constitution may be such that the display is stopped, or the display is confined to a degree which will not hinder the driving.

As a result of adding an actuator connection unit 466 for connecting controllable external equipment 433 to the outside of the information provision terminal device 301, the information provision terminal device 301 will be able to control the external equipment 433 based on an event generated from the contents 511.

As a result of adopting a constitution with such actuator function added thereto, the contents producer 121 will be able to create contents 511 capable of controlling the external equipment 433.

In the information provision terminal device 301, information is stored in layers with a data structure referred to as a folder 501.

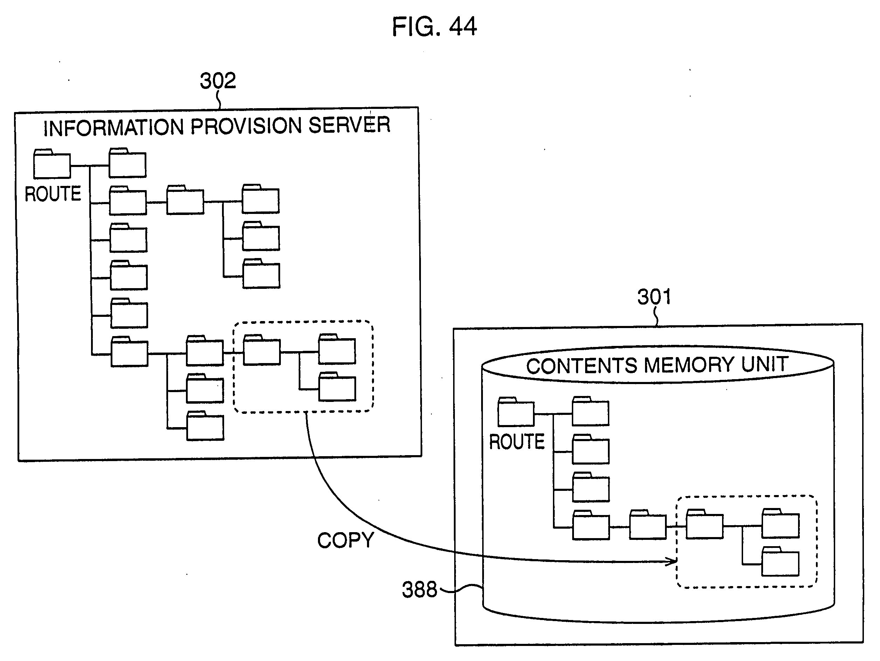

Fig. 44 is a diagram showing the concept of the folder 501. The folder 501 is structured in layers, and differentiates the contents 511 that it stores internally from the contents 511 stored in the other folders 501. In other words, the contents 511 stored in a single folder 501 are mutually associated and constitute an aggregate.

When the folder 501 is transmitted from the information provision server 302 to the information provision terminal device 301, the folder 501 of the descendant of the prescribed folder 501 will also be transmitted from the information provision server 302 to the information provision terminal device 301.

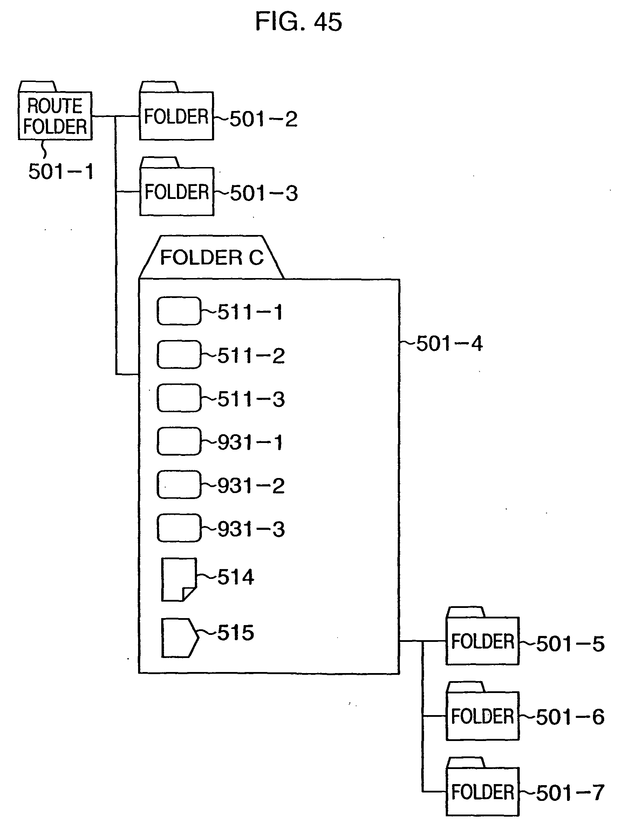

Fig. 45 is a diagram showing the data structure for managing information. In the example shown in Fig. 45, the route folder 501-1 contains folder 501-2, folder 501-3 and folder 501-4. And stored in the folder 501-4 are contents 511-1, contents 511-2, contents 511-3, contents 931-1 representing folder 501-5, contents 931-2 representing folder 501-6, contents 931-3 representing folder 501-7, play list 514 and master designation data 515.

As a result of a scheme having this kind of data structure and master designation data 515, in the present invention, since the distribution of the contents 511 can be conducted merely by reading the folder 501 of the designated folder 501 and below from the contents 511 prepared in the hierarchical structure on the information provision server 302, and copying this in the contents memory unit 388 of the information provision terminal device 301, the constitution of the information provision server 302 and information provision terminal device 301 can be kept simple.

Even when the contents 511 distributed to the information provision terminal device 301 and stored in the contents memory unit 388 within the information provision terminal device 301 are the contents 511 to be dynamically renewed according to an event, it will be sufficient by merely reading the folder 501 of the designated folder 501 and below from the contents 511 prepared in a hierarchical structure on the information provision server 302 and copying all such [folders 501] in the contents memory unit 388 of the information provision terminal device 301. This is a significant feature of the present invention, and the contents producer 121 is able to easily create the contents 511 that will be automatically renewed after distribution.

This feature is yielded by the master control unit 451 being able to amend, add and delete the subject matter of the contents 511 in accordance with the master designation data 515 recorded in the contents memory unit 388 of the information provision terminal device 301 created by the contents producer 121.

The folder 501 can store one of the following:
(a) Play list 514;
(b) Contents (data) 511;
(c) Master designation data 515;
(d) (Contents 931 representing) Folder 501; and
(e) Dynamic command map data 812.

As a result of storing a separate folder 501 inside the folder 501, the layering of the contents 511 can be realized.

In the present embodiment, the command map data 811 is stored in the route folder 501-1 of the information provision terminal device 301, and this is automatically read upon the activation of the information provision terminal device 301. The constitution may be such that the command map data 811 is incorporated in the software of the information provision terminal device 301 in advance.

When the user 1 performs an operation and designates the contents 511 to be reproduced, the master control unit 451 reads the master designation data 515 and dynamic command map data 812 contained in the folder corresponding to the designated contents and designates the folder 501 and designates the reproduction to the play list reader 452.

When the folder 501 is designated from the master control unit 451, the play list reader 452 reads the play list 514 in the folder 501, selects the player 453 for each type of contents 511 in the order described therein, and designates the contents 511 and makes the player 453 reproduce the contents.

The player 453 reproduces the designated contents 511.

When a folder 501, which is a sub-folder, is contained in the folder 501, the foregoing processing is performed to such sub-folder in a recursive manner.

The subjects handled as contents by the contents provision system are as follows.

In order to handle a plurality of types of contents 511, the player 453 is installed for each type of required contents 511.

The classification of characters of the player 453 is as follows.

The reproductive data contents 511 are data storing images and sounds. The reproductive data contents 511 are stored in MPEG1, MPEG2, MPEG4, MP3 or other formats. The player 453 is installed for each format.

In an embodiment of the in-car information provision terminal device 301, MP3 is used as the sound contents and MPEG2 or MPEG4 is used as the visual contents.

The coded data contents 512 are data storing encoded images and music. This corresponds to data storing encoded sounds and images such as MIDI (Musical Instrument Digital Interface) or FLASH (trademark). Read-aloud data stored in text format to be reproduced upon being converted into audio with Text to Speech is included therein.

In the embodiment of the in-car information provision terminal device 301, MIDI and Text to Speech are used as the coded data contents 512.

In addition to the above, the functional contents 513 include contents in which information that is not a reproductive image or sound like those described below is converted into visual or audio information. It is also possible to install a player 453 capable of reproducing such functional contents 513.

The following are comparatively simple examples.
- Functional contents 513 for reading aloud the time of reproduction, and the player 453 for reproducing such [sound].
- Functional contents 513 for reading aloud the position at the time of reproduction as the longitude and latitude, and the player 453 for reproducing such [sound].
- Functional contents 513 for reading aloud the location at the time of reproduction as the address notation, and the player 453 for reproducing such [sound].
- Functional contents 513 for reading aloud the battery voltage status at the time of reproduction, and the player 453 for reproducing such [sound].
- Functional contents 513 which are the camera image contents showing the front or rear of the vehicle, and the player 453 for displaying such [image].
- Functional contents 513 which are the camera image contents showing the driver's seat, and the player 453 for displaying such [image].
- Functional contents 513 for displaying images of a camera connected to a network 303, and the player 453 for displaying such [image].

Examples of more sophisticated functional contents 513 are described below.
- Functional contents 513 that receives an email with the information provision server 302, converts the received email into a vocalizable format and storing it in a layer of the contents 511, and notifies the incoming email event to the event processing unit 461, and the player 453 for reproducing such [functional contents].
- Schedule: Functional contents 513 for reproducing the schedule like an event guide of an FM radio program based on the schedule data of personalized information of the information provision server 302.
- Phone call contents: Functional contents 513 for guiding the method of making a phone call when started, and enabling a phone conversation by performing operations according to such guide.
- Route guide: Functional contents 513 for guiding the route to be run based on the positional information event from the positional information sensor.
- Functional contents 513 for making a malfunction notice based on an event from the sensor 481 for detecting the failure of the vehicle 311, and sending the event to the center not shown and running the guide contents.
- When there is a fellow passenger, functional contents 513 for making a protection display to protect privacy.
- Functional contents 513 for changing the response operation upon receiving a network event in accordance with the user's convenience.
- Functional contents 513 for enabling hands-free communication with a connected portable phone upon adding a portable phone connection device to the information provision terminal device 301.

The player 453 capable reproducing such functional contents is installed such that it can be controlled from the master control unit 451 with the designation similar to the reproductive data contents 511. As a result, the user 1 employing such functional contents 513 is able to use the contents 511 by performing the entirely same operations as with the reproductive data contents 511.

Since the functional contents 513 can be controlled as with the reproductive data contents 511 and coded data contents 512, the operational feeling of the user 1 will be integrated, the operation corresponding to the event can be matched, and services in relation to all types of contents can be integrated.

Next, the master designation data 515 will be explained.

An important feature in the information provision system pertaining to the present invention is to enable the control of all contents 511 to 513 with the master control unit 451 as described above. As a result of this feature, the contents producer 121 will be able to handle all types of contents among the contents 511 to 513.

The master designation data 515 is used to realize the foregoing scheme. The designation against the master control unit 451 is described in the master designation data 515 with the following logical structure.

### <When> <What> <How>

The subject matter designated with the master designation data 515 is described in detail below.

The description regarding the portion of <When> is now explained. The master control unit 451 operates based on the event input from the event processing unit 461. Thus, it will operate when one of the events is input. The description regarding the portion of <When> represents an event.

The following are examples of the description regarding the portion of <When>:
1. When the user makes an operation;
2. When the sensor detects an abnormality;
3. When a timer event is generated;
4. When the sensor connected to the network 303 detects and abnormality;
5. When an event is received from another information provision terminal device 301;
6. When the contents 511 generates an event; and
7. When the reproduction of the player 453 is ended.

The description regarding the portion of <What> represents the target to be the subject of processing.

The following are examples of the description regarding the portion of <What>:
1. Contents data;
2. Contents folder;
3. Master designation data 515;
4. Pointer;
5. Pointer stack 460;
6. Event; and
7. Dynamic command map data 812.

The description regarding the portion of <How> represents the content of processing.

The following are examples of contents data, and the processing to be performed to the contents data, master designation data 515 and dynamic command map.
1. Delete;
2. Renew;
3. Newly create;
4. Change the pointer or pointer stack 460; and
5. Generate an event.

The administration of contents 511 in the information provision terminal device 301 is now explained.

In the method pertaining to the present invention, the writing in or deletion of the folder 501, and the creation of a new folder 501 is not conducted with the operation of the user 1, and is characterized in that these are conducted only with the master control unit 451.

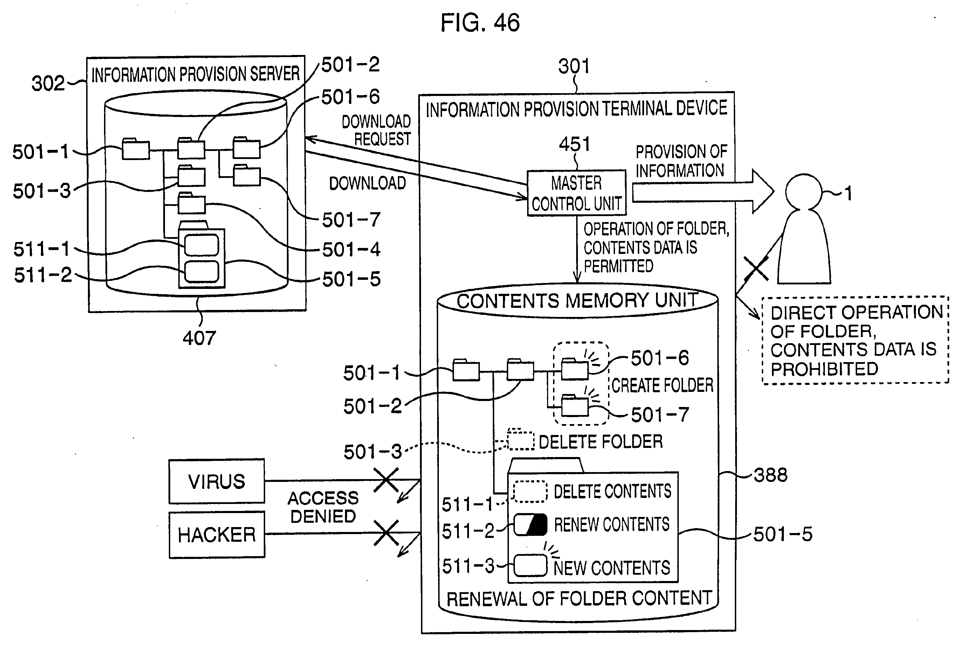

Fig. 46 is a diagram showing the scheme of managing the folder 501.

Since the master control unit 451 only performs operations along the subject matter described in the master designation data 515 (or command map data 811 or dynamic command map data 812), the following advantages are yielded:
1. Reproduction of the contents 511 will not be conducted incorrectly as a result of data being lost due to an erroneous operation of the user 1 as with a computer OS;
2. The contents producer 121 can provide necessary data in the terminal;
3. Since actions other than the designated action will not be conducted, data (contents 511) will not be destroyed; and
4. Conditions for writing or deleting data (contents 511) can be reliably managed by the contents producer 121.

As with a personal computer OS, in order to prevent the invasion of a computer virus via the network 303 or recording medium, and to prevent the destruction or falsification of information, it is preferable to strictly follow the scheme of only enabling the master control unit 451 to conduct the writing in or deletion of the folder 501, and the creation of a new folder 501, and to prevent the user 1 to engage in such operations.

In the information provision terminal device 301, it is not preferable to install the hierarchical structure of the contents 511 with the folder 501 such that it is merely associated with and stored on the layer of a directory in the file system of an OS. In a standard OS, in addition to the master control unit 451, the user 1, system administrator and network administrator are able to access the contents 511 with the folder 501 with an operational command provided with the OS, and, since contradictions may arise, it is not possible to guarantee the performance of prescribed operations.

Or, software unrelated to the provision of information pursuant to the present invention such as tools or application software being executed in a terminal will be able to access the contents 511 with the folder 501, and, since contradictions may arise, it is not possible to guarantee the performance of prescribed operations.

When installing software, for the purpose of maintenance, capable of accessing the contents memory unit 388, play list reader 452, pointer stack 457, current pointer and initial pointer memory unit 458 other than the master control unit 451, it is necessary to avoid any operation that will contradict the operation of the master control unit 451.

When installing the present invention on an ordinary OS such as LINUX, it is necessary to strictly administer the protective information of the file and authorization to be provided to the process, and to avoid any operation that will contradict with the operation of the master control unit 451 such as allowing software other then the master control unit 451 to read or write the contents memory unit 388, play list reader 452, pointer stack 457, current pointer 459, and initial pointer memory unit 458.

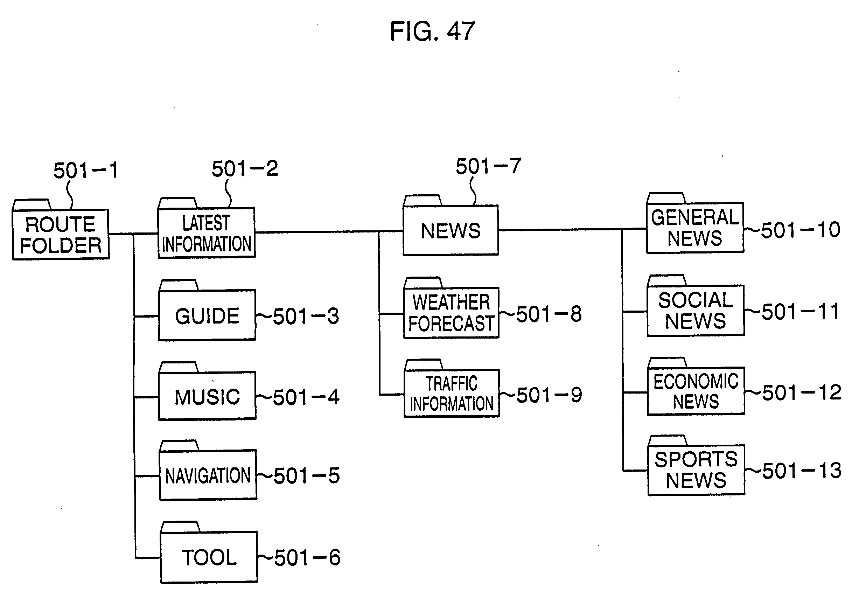

Fig. 47 is a diagram showing an example of the data structure in the information provision terminal device 301. As shown in Fig. 47, data (contents 511) is managed in layers.

Although the data structure in the information provision terminal device 301 is of a hierarchical structure reflecting a layered logical structure of the information provision server 302, this is not a copy of all information, and differs in accordance with the usage situation of each information provision terminal device 301.

In the example shown in Fig. 47, the route folder 501-1 contains five folders 501, and these respectively store contents Classified as latest information, guide, music, navigation and tool. The structure of these five folders 501-2 to 501-6 and the information contained as the subject matter thereof are not fixed and set in all information provision terminal devices 301 in advance, and become the data structure as shown in the example as a result of the initial state changing upon the user using the information provision terminal device 301.

Since the folder 501 is administered inside the information provision terminal device 301, there is no need for a name corresponding to the file name used by a person in a personal computer OS. Below, in the explanation of the embodiments of the present invention, the folder 501-2 storing the classified into the latest information is referred to as the latest information folder.

The latest information folder 501-2 contains three folders 501, and contents 511 relating to news, weather forecast and traffic information are stored therein.

The news folder 501-7 contains four folders, and contents 511 relating to general news, social news, economic news and sports news are stored therein.

The tool folder 501-6 has functional contents 513 stored therein.

The navigation folder 501-5 has contents 511 for guiding the user stored therein.

The operation of the user 1 is input from the human interface unit 431 to the master control unit 451 via the event processing unit 461, and conveys the request of the user 1 to the contents 511 to be reproduced with the operation of the master control unit 451.

Next, the operation of designating the contents 511 is explained.

The user 1 designates information organized in a layer in the form of contents 511, and performs an operation for designating one's desired information to the information provision terminal device 301.

In the information provision system pertaining to the present invention, all information can be extracted as the starting point for reproducing the contents 511 of the route folder 501-1. Since there is a direct designation function, the contents 511 may be reproduced from the folder 501 that was directly designated, and not from the route folder 501-1.

When the information to be used is always the same, by registering the (folder 501 of the) contents 511 to be foremost reproduced in the initial pointer memory unit 458, such contents 511 can be made to be constantly reproduced upon the activation of the information provision terminal device 301.

With any one of the above as the starting point, reproduction of the designated contents 511 in the contents memory unit 388 is started.

Stored in the command map data 811 is the correspondence of the operational command and the designated contents 511.

As a result of the dynamic command map data 812, correspondence of the operational command and the contents 511 can be dynamically administered for the respective contents 511. The dynamic command map data 812 may only be used by the contents 511 requiring an addition or change of command.

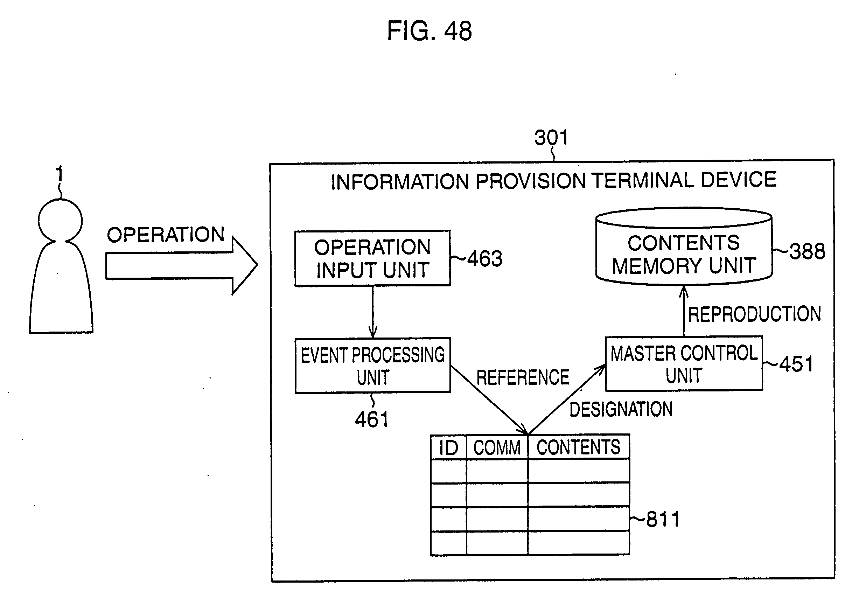

Fig. 48 is a diagram showing the operation of the information provision terminal device 301 when operated by the user 1.

The operation for controlling the reproduction of the contents 511 is now explained.

Reproduction of the contents 511 is started by one of the folders 501 in a layer of the route folder 501-1 and below being designated as a result of the user 1 operating the information provision terminal device 301.

After the user 1 designates the first contents 511, when no operation is made, reproduction of the contents 511 in the folder 501 of the designated contents 511 will be continued until such reproduction [of all contents] is finished.

When the user 1 performs a reproduction control operation in a timing when contents 511 are being reproduced, the player 453 and play list reader 452 are controlled via the master control unit 451, and reproduction is started or stopped, or jumps to the subsequent contents 511, or returns to the previous contents 511.

In the embodiments of the present embodiment, the following are examples of the reproduction control operation of the contents 511;
1. Start;
2. Stop;
3. Next;
4. Back;
5. Directly designate contents;
6. Help;
7. Explain; and
8. Select.

The direct designation of contents 511 is made with a voice command (command composed of vocalized words), and, for instance, a designation is made such as "weather forecast, Tokyo, Chiyoda Ward".

As a result of using the voice command "help" during the reproduction of the contents 511, contents for explaining the method of using the contents 511 are reproduced.

As a result of using the voice command "guide" during the reproduction of the contents 511, contents 511 for explaining the contents 511 being reproduced are reproduced.

Incidentally, the constitution may integrate "help" and "explain" into the "explain" command.

Further, the constitution may integrate ["help" and "explain"] into the "detail" command.

Moreover, the constitution may also add a repeat command for repeating the reproduction of the contents 511 to the command.

Incidentally, the constitution may also add the response confirmation command of "yes" and "no" to the command.

In addition, the constitution may also add a "check" command for marking the contents 511 to the command.

Or, a command may be added when new contents 511 are distributed.

Next, the operation in relation to the contents is explained.

Since it is possible to write a designation in relation to the master control unit 451 when an event is input in the master designation data 515, the contents producer 121 will be able to create contents 511 capable of changing the flow of reproducing the contents 511 based on the operation of the user 1.

As a result, when the contents producer 121 creates contents 511 utilizing a human interface event, the reproductive operation of the contents 511 can be changed pursuant to the operation of the user 1.

From the perspective of the user 1, such [user 1] will be able to operate the contents 511.

The operation of functional contents 513 is realized with the foregoing scheme, and, since the [contents] can also be controlled with a network event or sensor event in addition to an event resulting from the operation of the user 1, the [contents] may be controlled via remote control via the network 303, or the reproduction thereof can be automatically started based on the event detected with the sensor 481.

The operation of designating the order of the contents 511 is now explained.

As a result of employing the following constitution, a voice command may be used to designate the order of the contents 511.

For example, with the following command, contents A, B and C are reproduced in order.

"Designate order" <voice command for designating contents A> <voice command for designating contents B> <voice command for designating contents C> "end"

Here, "designate order" is a command for starting the designation of the order. "End" is a command for ending the designation of the order.

As a result of designating the order as described above, the user 1 is able to receive information in the order of one's request.

As a result of using the individual direct designation commands after the foregoing order designation operation, it is possible to acquire information not contained in contents A, B or C; for instance, contents D. In such a case, when the reproduction of contents D is finished, as a result of returning to a state when the contents D was automatically designated, the provision of information in the order requested by the user 1 is continued.

When providing information in the order requested by the user 1 with the foregoing operation and using different contents upon performing an operation, the present invention performs a characteristic operation enabling the operation at an arbitrary timing.

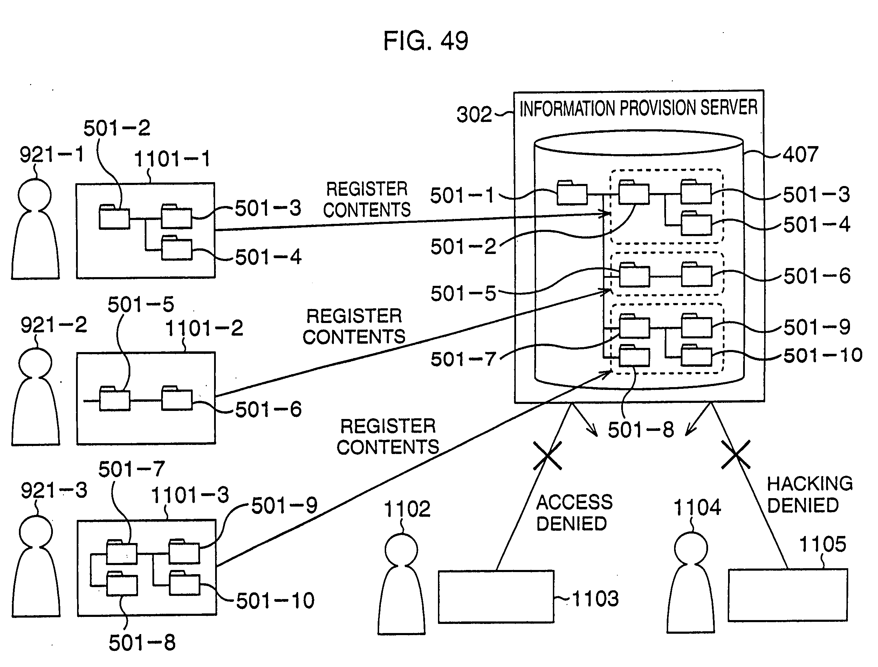

Next, the information provision server 302 is now explained with reference to Fig. 49.

The information provision terminal device 301 downloads information from the information provision server 302 via the network 303.

Stored in the information provision server 302 are contents to be provided to the information provision terminal device 301.

Stored in the information provision server 302 are contents 511 (information) in layers, and the information provision terminal device 301 stores the contents 511 downloaded from the information provision server 302 via the network 303 in the contents memory unit 388.

Since all providable contents 511 are stored in the information provision server 302, typically, many more contents 511 are stored in comparison to the information provision terminal device 301.

In the present invention, since the contents 511 stored in the information provision server 302 are also able to delete the contents 511 stored in the information provision terminal device 301, it is necessary to be particularly careful regarding the security of the information provision server 302.

In the embodiments of the present invention, in order to safely administer the information of the information provision server 302, only the contents registration terminal devices 1101-1 to 1101-3 are able to register the contents 511 in the information provision server 302. Provided to the respective editors 921-1 to 921-3 are contents registration terminal devices 1101-1 to 1101-3, and, as a result of only allowing the contents registration terminal devices 1101-1 to 1101-3 to register, amend, or delete the contents 511, a third party (editor 1102 without authorization) that does not possess any one of the contents registration terminal devices 1101-1 to 1101-3 and that only possesses another information terminal device 1103 will not be able to falsify the contents 511. Further, a third party (a person who engages in so-called hacking (hacker, cracker) 1104) that only possesses the information terminal device 1105 will not be able to falsify the contents 511.

In order to prevent problems among the editors 921-1 to 921-3, it is desirable to designate a separate folder 501 for each editor 921-1 to 921-3 and administer such [folder 501] individually.

In the embodiments of the present invention, although the constitution is such that all contents 511 are stored in a single information provision server 302, in a larges-scale information provision center, the constitution may be such that the [contents 511] are dispersed to a plurality of servers such as a commercially available load sharing device. According to the present invention, since it will suffice for the information provision server 302 to send the contents 511 requested from information provision terminal device 301 via the network 303, the [contents 511] can be dispersed to a plurality of servers with a simple constitution.

Next, the characteristic operation of the information provision terminal device 301 and information provision server 302 is explained.

In the present invention, as a result or providing a scheme for distributing the contents 511 such that the contents 511 are distributed from the information provision server 302 in which information is integrated uniformly and organized in a layered folder 501, download for distributing the contents 511 is conducted in stages by the information provision terminal device 301 independently from the operation of the user 1, the contents producer 121 is able to create the contents 511 based on one's productive idea so that such contents 511 will coincide with a part of the contents 511 before the user 1 requires information, and the information provision terminal device 301 automatically controlling the reproduction of contents 511 according to an event inside the information provision terminal device 301 and outside the information provision terminal device 301, the object of the [present invention] can be achieved.

The operation of continuously extracting information is now explained.

One feature of the present invention is that, when the user 1 designates the contents 511, subsequent contents 511 are automatically extracted from the information provision server 302, and downloaded into the information provision terminal device 301 one after another, and thereby enabling the continuous provision of information.

Thereupon, the following characteristic operation differs significantly from the ordinary contents distribution of downloading the contents 511 and using such downloaded contents 511. In other words, instead of designating the contents to be downloaded and downloading such contents 511, the operation of the user 1 of using the contents 511 that have been distributed and which are readily available will automatically induce, indirectly, the distribution of the subsequent contents 511, and the foregoing sequence being linked to enable the continuous provision of information is a characteristic operation of the information provision system pertaining to the present invention.

By the user 1 making an operation to switch to separate contents 1, or to stop the reproduction of the command via stop of pause, the operation of the continuous contents distribution is automatically stopped. In a scheme of controlling the contents distribution on the transmitting side, a complicated operation between the server and terminal device is required to stop the continuous contents distribution. In the present invention, however, without the contents producer 121 having to make a particular designation, the continuous contents distribution can be automatically stopped with a simple operation that does not require any linkage with the information provision server 302. This aspect is also a significant feature of the present invention.

What the user 1 has to do is an extremely simple operation of selecting the information to be acquired, reproducing or stopping the acquired information, and switching to separate contents 511, and this can be performed without having much effect on the main action. And, with the simple action described above, a significant feature of the present invention is that information required by the user is automatically distributed from the information provision server 302 to the information provision terminal device 301 in an appropriate amount, and automatically layered, organized and stored.

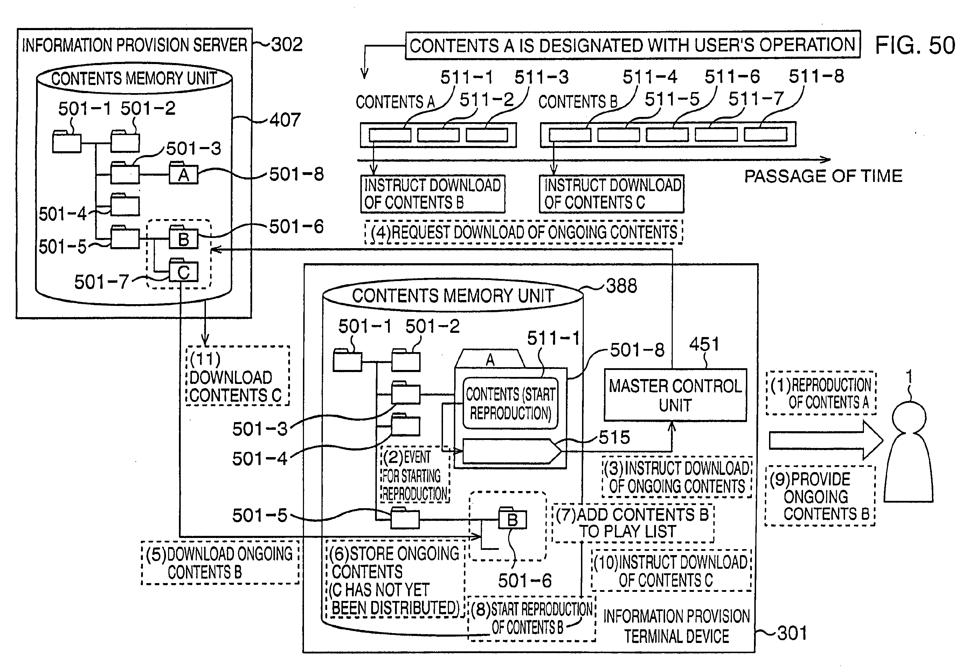

The fundamental form of operation for continuously extracting information is now explained with reference to Fig. 50.

The first layer folder is folder 501-1, and the second layer folder is folder 501-2, folder 501-3, folder 501-4 and folder 501-5. Folder 501-8 is stored in the folder 501-3, and folders 501-6 and 501-7 are stored in the folder 501-5. Folder 501-8 stores contents A, and folder 501-6 stores contents B. Folder 501-7 stores contents C.

Contents A, which are the contents 511 stored in folder 501-8, are composed of contents A1 to A3 which are contents 511-1 to contents 511-3; and contents B, which are the contents 511 stored in folder 501-6, are composed of contents B1 to contents B5 which are contents 511-4 to contents 511-8. The play list 514 of the folder 501-8 represents the order of the contents 511-1 (A1), contents 511-2 (A2) and contents 511-3 (A3). The play list 514 of folder 501-6 represents the order of the contents 511-4 (B1), contents 511-5 (B2), contents 511-6 (B3), contents 511-7 (B4) and contents 511-8 (B5).

The user 1 directly designates contents 511-1 (A1), which have been completely distributed, with a voice command and starts the reproduction thereof.

Let it be assumed that the contents producer 121 of contents A wants the person who listened to contents A to continue listening to contents B. In such a case, the contents producer 121 of contents A may write a designation in the master designation data 515 contained in contents A such that the download of contents B is activated when contents A is reproduced, and, such that the reproduction of contents B is started when the reproduction of contents A is finished.

Specifically, this routine can be described as follows:
1. The download of contents B is started when the reproduction start event of contents 511-1 (A1) is generated; and
2. After the download of contents B is completed, contents B is added to the end of the play list 514 of folder 501-8.

As a result of the contents producer 121 creating a master designation data 515 designating "When the reproduction start event of contents 511-1 (A1) is generated, start the download of contents B", when the reproduction of contents 511-1 (A1) within contents A is started, the master control unit 451 designates the start of download of contents B based on the designated written in the master designation data 515 contained in contents A. Since the play list 514 is in the order of contents 511-1 (A1), contents 511-2 (A2) and contents 511-3 (A3), contents 511-1 (A1), contents 511-2 (A2) and contents 511-3 (A3) will be reproduced in order.

Based on the designation of "When the download of contents B is completed, add contents B to the end of the play list 514 of folder 501-8", when the download of contents B is completed, contents B will be reproduced after contents A3 since the [contents] subsequent to contents 511-3 (A3) of the play list 514 of folder 501-8 will be rewritten to be contents B.

Since folder 501-6 of contents B contains contents 511-4 (B1) to contents 511-8 (B5), and the play list of contents B is in the order of contents 511-4 (B1), contents 511-5 (B2), contents 511-6 (B3), contents 511-7 (B4) and contents 511-8 (B5), contents B will be reproduced subsequent to contents 511-3 (A3).

When the reproduction of contents 511-4 (B1) is started, if separate contents C is downloaded and added to the play list 514, the reproduction of contents 511 will be conducted with the same procedure.

If the user 1 did not designate contents A, contents B and other contents to be downloaded will not be downloaded. Since the same thing is also possible when the other contents 511 that can be directly designated by the user 1 are reproduced, information stored in the contents memory unit 388 of each information provision terminal device 301 will automatically be a different constitution according to the user's request depending on which contents the user 1 designated.

The user 1 may designate and reproduce separate contents 511 anywhere during the ordinal reproduction of contents A, contents B and contents C. If this is during the reproduction of contents A, contents C will not be distributed. Accordingly, the distribution of contents B and contents C is not conducted in all information provision terminal devices 301 that started the reproduction of contents A.

With the processing described above, until the user 1 considers that information has been acquired sufficiently and switches to separate contents 511, an operation of continuously reproducing the contents 511 designated initially can be realized.

When the reproduction of contents 511-3 (A3) is finished but the download of contents B not finished, in this example, since the play list the same as before, reproduction of contents A will finish. When the reproduction of contents is not to be suspended, for example, sufficiently long contents A4 may be reproduced after contents 511-3 (A3), and, when the download of contents B is finished, contents B may be added upon deleting contents A4. Or, it is possible to create contents such that the user is notified when the reproduction of contents B is finished, and contents B from the play list of the notified contents may be reproduced.

In this example, since the user 1 selected contents A, when communication is no longer made or when distribution is not in time, the reproduction of contents A and contents B is finished, and the reproduction of the contents 511 prior to being switched to contents A is continued. Therefore, even when communication cannot be made in one of the stages, the reproduction of the previous contents 511 will be automatically continued, and the service will not be discontinued. As described above, even when the contents producer 121 (contents producer 121 of contents A and contents B in this example) does not designate an operation corresponding to the suspension of communication, the operation of automatically continuing the service without having to wait for the operation of the user 1 is a significant feature of the present invention.

When the communication speed of the network 303 for downloading the contents 511 is relatively stable, the situation can be dealt with the simple procedure described above. When it is anticipated that communication may not be made for a long period of time such as in the case of an in-car information provision terminal device 301 or the like, it is desirable to create the contents 511 upon giving consideration to such situation in advance. Since a situation of the vehicle 311 being parked underground for a long period of time can also be expected, although it is difficult in principle to guarantee that communication will be made within a prescribed period of time, in the present invention, as a result of the editor 921 creating contents 511 utilizing an event, it will be possible to deal with the situation flexibly in accordance with the editing policy.

When making a more complex presentation, the contents 511 may be constituted freely by creating the contents 511 with the various methods described below.

For example, there is an on-demand operation.

In the present invention, this implies the creation of contents based on the productive idea of enabling the user 1 to use a voice command during the reproduction of the contents 511 to change the flow of the reproduction of the contents 511 and acquire one's desired information.

The fact that the on-demand operation explained below is independent from the distribution of the designated contents 511 is a significant feature of the method according to the present invention. In other words, when performing an on-demand operation, instead of performing a simple operation of downloading and providing the designated contents 511, as a result of the distribution of required contents 511 being automatically conducted effectively independent from the operation of the user 1, it could be said that the characteristic feature is to provide a scheme for creating contents enabling the immediate use of the contents 511 upon the user 1 performing an operation since such [contents 511] have already been distributed. According to the present invention, since related information has already been distributed to and stored in the information provision terminal device 301 in many cases when the user 1 needs information, the user 1 is able to immediately use such [information] with an on-demand operation.

The on-demand operation of the contents 511 distributed and stored in the information provision terminal device 301 is now explained. When performing a command in the following explanation, since the distribution of the contents 511 has already been completed, there is no time lag caused by the time required for downloading the contents 511 from the information provision server 302 to the information provision terminal device 301, and a quick response can be acquired.

For example, as a result of using the "help" command during the reproduction of certain contents 511, the contents 511 for explaining the method of using the contents 511 prepared in advance by the contents producer 121 will be reproduced.

As a result of using the "explain" command during the reproduction of the contents 511, the contents 511 for explaining the subject matter of the contents 511 prepared in advance by the contents producer 121 will be reproduced.

As a result of using the "select" command during the reproduction of the contents 511, an operation designated in correspondence to the selection during the reproduction of the contents 511 will be performed.

As a result of using the direct designation command, the contents 511 may be directed designated and selected, and information contained in the contents 511 may be received thereby.

Standard modes of use of the user 1, for example, are as follows:
1. To listen to traffic information with "traffic information" to go home from work with one's car (vehicle 311);
2. To listen to economic news with "latest information, news, economic" to find out today's stock price;
3. To find out tomorrow's weather by designating "weather forecast"; and
4. To listen to music contents with "music, latest pops".

Incidentally, in the foregoing explanation, traffic information, economic news, weather forecast and latest pops are automatically distributed with the automatic distribution scheme described later.

Further, in order to explain the on-demand operation in the description provided above, an example of employing only direct operation is illustrated. According to the preference of the user 1, it is also possible to create contents 511 in which the traffic information and stock information and weather forecast are automatically provided.

In the present invention, individual distribution of the contents 511 in relation to the individual inputs of each command; that is, the download of the contents 511 from the information provision server 302 to the information provision terminal device 301 is not conducted. Distribution of the contents 511 is conducted with the information data (e.g., master designation data 515 or dynamic command map data 812) described based on the productive idea of the contents producer 121.

As a result of providing a constitution enabling the creation of contents as described above, a complicated operation such as the user 1 designating the contents 511 to be distributed each and every time, waiting for the download thereof to finish, use the contents 511 after the download is complete, and newly designating the contents 511 thereby will not be required.

The contents producer 121 may collect information necessary in the provision of information or operation at a certain stage in advance and distribute such information. This can be yielded by employing a constitution which downloads all contents 511 of the folder 501 and below storing the contents 511.

As a result, the user 1 will only have to engage in an act of using one of the contents 511 in which the distribution thereof was completed based on the previous operational log, and there is no need to know the scheme of distributing the contents or to perform operations according to the scheme of distribution.

Operation of the download independent from the operation of the user 1 is now explained.

Foremost, the operation for presenting options to the user is explained.

As a result of combining the operation for continuously extracting information and the function of the on-demand operation, the user 1 will be able to directly designate and reproduce the contents 511 with the direct designation command, the designated contents 511 will draw in the subsequent contents 511 into the information provision terminal device 501, information will continue to be provided, the subsequent contents 511 further draws in the subsequent contents 511 into the information provision terminal device 501, information will continue to be provided, and this is continued until the user 1 becomes satisfied with the continuous provision of information, or until different information becomes necessary. In the foregoing operation, the flow is such that the user 1 personally recognizes the change operation to change the flow. Therefore, the [user 1] is only able to perform operations in which such [user 1] remembers the command thereof.

A characteristic feature of the present invention of the user 1 being able select from the options even when the [user 1] does not remember the command, and the provision of information is continued automatically when the user 1 does not need to make a selection or when the [user 1] is not able to make a selective operation is now explained. As a result of this operation, the contents producer 121 will be able to provide information organized simply like an ordinary FM broadcast program to the user not requiring any operation, and create the contents 511 in which the user 1 can operate and select necessary information for obtaining detailed information as a single kind of contents.

In a parked situation, although it would suffice to display a menu on the screen such that the user 1 can make a selection by using the remote controller 611, while driving, there are cases where it is necessary to perform an operation without having to look at the screen. In such a case, in order to achieve the object of the present invention, it is necessary to provide a scheme of offering options in a scene where the user 1 needs options, and continuously providing information without the user 1 having to make any operation in a scene where the user 1 does not have to make any operation.

In a distribution system, since there are cases where the user 1 will only use the system halfway, it is desirable to distribute information only in a required amount. In the present invention, information is stored in pieces in the layers of the folder 501 on the information provision server 302.

The user 1 is using the contents 511 of one of the layers. Although the contents 511 not required at this stage are prepared on the information provision server 302, they are not downloaded to the information provision terminal device 301.

Thereafter, since the information required by the user 1 will change depending on which sub contents contained in the contents 511 being reproduced are used, it is desirable that the contents producer 121 only downloads the required information in accordance therewith.

The foregoing operation can be realized by creating, for example, the contents 511 described below.

In an example of a sightseeing guide, for instance, a command may be directly designated when receiving information relating to a certain tourist attraction.

Let is be assumed that "sightseeing guide, Kyoto" has been designated. Since the contents producer 121 does not know what kind of detailed information the user 1 wishes to know in advance, the [contents producer 121] will create the contents 511 with the following production policy, for instance:
1. When designated by prefecture, to create contents that will list and convey the tourist attractions of the designated prefecture in the first minute;
2. When the reproduction of the foregoing contents 511 is started, to download the first contents 511 summarizing in roughly 1 minute the respective tourist attractions that were listed;
3. To start downloading the second contents 511 when the reproduction of the first contents 511 is started;
4. To start the reproduction of the second contents 511 when the reproduction of the first contents 511 is finished;
5. To download the following contents 511 in a similar manner and automatically reproduce the same; and
6. After the reproduction of the contents 511 summarized in 1 minute is completely finished, to download and automatically reproduce the detailed contents 511 of 10 minutes for each tourist attraction with similar procedures.

As a result of creating such contents 511, the user 1 will foremost designate "sightseeing guide, Kyoto", and, after acquiring information up to a necessary point, the [user 1] will be able to acquire information of a necessary level by merely designating other contents 511 with a direct designation command such as "music, hit chart" or the like. In the foregoing contents 511, since only the necessary contents 511 are actually distributed, it is possible to prevent unused and unwanted contents 511 from flowing to the network 303 in large quantities.

By combining the scheme of continuous download and the direct designation within the contents 511, it will be possible to perform an operation only when one wishes to make such operation to obtain necessary information. In the example of the foregoing contents, as a result of reproducing detailed contents for 10 minutes on the tourist attraction being reproduced by suing the "detail" command while the tourist attraction list and contents 511 summarized in 1 minute are being reproduced, information on only the required tourist attraction can be obtained.

For example, when a message such as "Cherry blossoms are beautiful this season in Arashiyama" is being reproduced, if the "detail" command is used, detailed information on Arashiyama will be downloaded and reproduced.

Although the user 1 may perform only one operation, perform two or more operations, or not perform any operation at all during the foregoing process, each case can be dealt with the same contents 511.

If the coded data contents 512 (e.g., contents for reading aloud text) are used to create a weather forecast, the foregoing operation can be implemented even with a line of relatively slow speed. With a network 303 having a sufficiently fast communication speed, the foregoing operation can be implemented even with large-volume contents such as music contents or visual contents. Accordingly, it is desirable that the contents producer 121 appropriate uses the contents 511 in accordance with the speed of circuit.

In the example of the foregoing contents 511, although the constitution was such that the contents 511 are used immediately after the download thereof, they may be used later on. An example of this is described below.

In the embodiments of the present invention, although provided is a constitution where the contents 511 to be downloaded individually are designated, by adding a function of sequentially downloading the route contents 511 for creating a sequential download list, it is possible to omit the trouble of creating the contents.

Next, the operation of the contents 511 editing the play list 514 of the subsequent contents 511 is explained.

In the present invention, when the contents 511 download the subsequent contents 511, the play list 514 may be edited.

Foremost, the operation in relation to the selection command is explained.

In the present invention, the contents producer 121 is able to designate the operation against the "select" command.

As a result, it will be possible to provide a separate service to the user 1 while the contents 511 currently being provided is selected. Since the contents producer 121 of the respective contents 511 is able to select the use of the selection command, the same "select" command may be used for various purposes. From the perspective of the user 1, this will lead to the integration of the operational feeling, and, when operating the information provision terminal device 301, there is an advantage in that attention will not be diverted from the main action as much.

Since all contents will be the target contents 511 to be selected with the selection command, the operation of selection will be integrated in all broadcasting, communication and functional services.

In the embodiments of the present invention, designation data of the lowermost layer shall be used when the selection command is selected.

The "select" command, for example, is used as follows.

For instance, it is used when selecting detailed contents 511 from the rough contents 511. Contents 511 for explaining the details in the "select" command are reproduced while the contents 511 for explaining the summary are being reproduced.

The [selection command] is also used as a menu.

Contents 511 for explaining the menu items for reproducing the respective menu items are individually created, and contents 511 to become a menu for continuously reproducing the above are created: As a result of describing in the master designation data 515 the operation upon the selection command being respectively designated in relation to the contents 511 for explaining the menu items, the contents 511 can be used as the menu.

Further, the [selection command] can be used to designate the functional contents 513.

By designating the functional contents 513 with the selection command, the user 1 will be able to use the "select" command to call the functional contents 513.

By combining the [selection command] and a menu, it may be used as follows.

For example, the contents 511 to become the menu regarding the function of the information provision terminal device 301 are made to be reproducible with "guide, communication log".

For instance, the following explanation will be provided.

"You have two voice mail messages. The first message is from Mr. Kato. The second message is from Mr. Shimizu. You had one incoming IP phone call from Mr. Fujiwara. You have one incoming fax."

By using the "select" command at one of the stages, the corresponding functional contents 513 will be designated, and the corresponding player 453 will be activated.

When a "select" command is made during "You have two voice mail messages", the two voice mail messages will be played. When the [selection command] is made during "The first message is from Mr. Kato" and "The second message is from Mr. Shimizu", respectively, the first voice mail message and the second voice mail message will be reproduced.

When the [selection command] is made during "You had one incoming IP phone call from Mr. Fujiwara", the phone call contents will be selected and the number will be automatically dialed.

When the [selection command] is made during "You have one incoming fax", such fax will be displayed on the screen when the vehicle is not running, and, if the vehicle is in motion, a message of "Fax cannot be displayed while the vehicle is in motion. Fax was sent from xxxxxxxxx" will be provided.

Further, a network event may also be generated.

A message of "Select here to notify the center" is provided to urge the user 1 to notify the center, and, when selected, the information provision terminal device 501 generates a network event, and notifies the information provision server 302 that the user 1 made a selection.

Moreover, the [selection command] may be used to renew the same contents 511.

With a convention information provision system, there were numerous problems such as a complex scheme being required to renew the same contents, requiring the operation of the user to renew the contents, or sending the renewed data to all users.

In the present invention, there is a significant feature in that provided is a scheme capable of automatically renewing the same contents 511 only for a user 1 requiring such renewal with an extremely simple creation procedure.

Since it is not desirable to distribute all contents 511 that may not be used, for instance, it is not preferable to consolidate the nationwide today's weather forecast, weekly forecast and long-term forecast regarding the weather forecast contents 511 in a single contents file 511. Thus, the information provision terminal device 301 downloads the latest contents 511 every four hours as the information data of the nationwide weather contents summarized in 1 minute to be distributed initially. Then, a weather forecast summarized in 1 minute within the last four hours will be immediately reproduced regardless of when the user 1 uses the [contents].

After the nationwide weather contents are initially downloaded from the information provision server 302, this kind of operation will be conducted with the operation of the information provision terminal device 301. Accordingly, since the information provision server 302 only has to wait for the download request from the information provision terminal device 301, the communication protocol will be an extremely simple constitution.

When the contents producer 121 is to create the contents 511 for performing such renewal, it will be sufficient merely to describe an instruction stating that the contents are be renewed every four hours as the information data of the contents 511. Therefore, automatic renewal contents can be created extremely easily. Since information such as the weather forecast or traffic information is already being systemized, with respect to the renewal of information also, data created with the existing weather forecast information creation system or traffic information creation system merely has to be copied to the information provision terminal device 301.

Download of the subsequent contents 511 can be designated. When providing detailed weather information based on prefecture with the weather forecast contents, as a general rule, since most users 1 will only need information for the area that they are in, if all information is provided to all users 1, much unnecessary information will flow on the network 303.

This problem can be overcome as follows. In the information provision terminal device 301 in an initial state, only a short nationwide weather forecast is initially provided in the contents 511 designated with "weather forecast". When the "help" command is used during the reproduction of the nationwide weather, an explanation is provided to indicate that there is a local weather forecast and prefectural weather forecast in addition to the nationwide weather forecast, and that these may respectively be designated as "weather forecast, Kanto" or "weather forecast, Kanagawa prefecture".

As a result of the user 1 designating "weather forecast, Kanagawa prefecture" in the initial state of the terminal, weather forecast contents of Kanagawa prefecture are newly downloaded to the information provision terminal device 301. When a designation for renewing the [contents] every four hours is written in the master designation data 515 of the weather forecast contents 511 of the respective areas or prefectures, the information provision terminal device 301 will automatically renew the [contents] every four hours.

Since the automatic renewal of the weather forecast of Kanagawa prefecture is limited to the information provision terminal device 301 of the user who designated "weather forecast, Kanagawa prefecture" at one point or another, it is possible to prevent the weather forecast of all prefectures being distributed to all information provision terminal devices 301 on the network 303.

In mobile communication such as an in-car information provision terminal device 301, as a result of tunnels or bad reception, it may not be possible to connect to the network 303 when the user 1 designates "weather forecast, Kanagawa prefecture". Nevertheless, weather forecast contents may be provided based on data which has already been downloaded.

By the subsequent contents 511 being downloaded as described above, the user 1 will be able to use the [contents] without noticing the scheme, and the contents 511 can be automatically downloaded without having to increase the operations of the user 1 or divert the attention of the user 1.

This point differs significantly from a conventional web browser in which a weather forecast cannot be viewed unless it is connected to a network at that point in time, and this is a feature of the present invention.

The response of the user 1 against the contents 511 may be used to activate the distribution of the contents 511 that will be necessary thereafter.

With the method according to the present invention, after the distribution of the contents 511 is activated and the distribution of the contents 511 is completed, it is not necessarily assumed that the [contents] will be reproduced immediately.

With the method according to the present invention, when the distribution of the contents 1 which the user 1 showed interest among the contents 511 is activated and the download thereof is complete, as a result of changing the play list 514 of separate contents 511 such that referral will be made from separate contents 511 differing from the original contents 511, and completing the distribution of the contents 511 in advance prior to the user 1 requiring such information to users 1 who are likely to need such information, information being sought can be immediately provided when the users 1 need such information. This operation is a characteristic operation of the present invention.

For example, when the contents 511 is a weekly hit chart, it will be sufficient to provide information and a part of the music to persons who are interested in the songs and artists ranked 1 to 10 in the weekly hit chart.

When the user 1 does not use the "select" command, the songs, artists and a part of the music ranked 1 to 10 are introduced, the reproduction of the contents 511 is ended, and the subsequent contents 511 are reproduced.

When the user 1 uses the "select" command at rank 2 of the hit chart, it is evident that such user 1 is interested in that artist or song. The contents producer 121 will provide information that can be instantaneously distributed regarding such artist and song, further prepare and download detailed contents 511, and, for example, writes such [contents 511] in the master designation data 515 so as to be added to the play list 514 of the contents designated with "guide interest".

As a result of creating such contents 511, when the user 1 uses the "select" command at the song of ranked No. 2, information regarding such No. 2 song instantaneously distributed is reproduced, and the reproduction of the contents 511 at such time is finished.

When the "guide interest" command is used, the [user] will be able to listen to detailed information regarding the No. 2 song. Further, when the user 1 selects a song and is downloaded in the contents 511 designated with "music pops", such song will be downloaded into the information provision terminal device 301 of the user 1 who selected such song.

Handling of the contents 511 not included in the play list 514 is now explained.

In the present invention, the play list 514 plays an important role in addition to designating the reproduction order of the contents 511.

The operation of the play list 514 described below is an important feature of the present invention.

When there is a play list 514, only the contents 511 described in the play list 514 are reproduced, and the contents 511 not described in the play list 514 are not reproduced.

When there is no play list 514, reproduction may be conducted in a prescribed order such as in the order of time the [contents] were created.

By utilizing the fact that the contents 511 not described in the play list 514 are not reproduced, it is possible to make the information provision terminal device 301 execute the following operations:
1. Distribute in advance the contents 511 that will not be used immediately;
2. Replace the reproducible contents 511 without newly downloading the same;
3. Disable the use of the contents 511 that were being used; and
4. Enable the use of the contents 511 that could not be used.

Since the play list 514 may be newly created, amended or deleted with the master control unit 451, the content of the play list 514 can be rewritten using an event during the reproduction of the contents 511.

As a result of using this function, it will be possible to realize the following:
1. The contents 511 distributed in a state where only one song is to be reproduced initially become the contents 511 to reproduce ten songs thereafter;
2. Although contents data of ten songs are included and distributed, no song is reproduced until some kind of event is generated;
3. The contents 511 in which only the beginning of the song (intro) is reproduced for ten seconds initially eventually enable the reproduction of the entire song;
4. The contents 511 to be reproduced are replaced with the operation of the user 1; and
5. The contents 511 to be reproduced are replaced with a network event.

Since these acts may be conducted without having to delete the distributed contents 511, such acts can be utilized extremely effectively for administering the contents after distribution.

Incidentally, in the embodiments of the present invention, giving consideration to the convenience of operation by the contents producer 121, provided is constitution of automatically and sequentially reproducing the [contents] when there is no play list 514. By providing a constitution of automatically creating the play list 514 in the contents registration terminal device 1101, it is also possible to employ a constitution of not reproducing the [contents] when there is no play list 514 in the information provision terminal device 301.

A repeat command may also be realized.

By adding a repeat command to the command in the constitution, it is possible to improve the operability when using the menu.

When the user forgets to use the selection command while it is operating as the menu, the contents 511 as the menu will advance forward, and it is therefore necessary to return to the original position and designate the contents 511 once again in the menu.

In the foregoing case, if the contents 511 being reproduced with the repeat command can be reproduced once again, the user can use the "repeat" command to listen to the menu from the beginning and make a selection with the "select" command.

Further, a check command may also be realized.

When the selection command is used, since the operation corresponding to the selection at such point in time is started, the user 1 will not listen thereafter. Thus, the operation will become somewhat complex when designating a plurality of [contents].

In usage requiring numerous options enabling a plurality of selections, the user 1 will be able to select a plurality of items during the reproduction of the contents 511 as the menu by employing a constitution of adding a "check" command to the command for making a plurality of designations.

The degree of freedom of distributing the contents 511 is now explained.

With the contents distribution method according to the present invention, the distribution of contents 511 may be conducted immediately after the user 1 having performing an operation causing the distribution of contents , or a little while thereafter, or suitably in accordance with the load of the information provision server 302 and network 303. The timing may be freely determined in accordance with the content of application of the contents producer 121.

As a result of the foregoing operation, the information distribution system pertaining to the present invention can also be applied to the application to be immediately downloaded after the operation by the user 1, and to the application to be downloaded later.

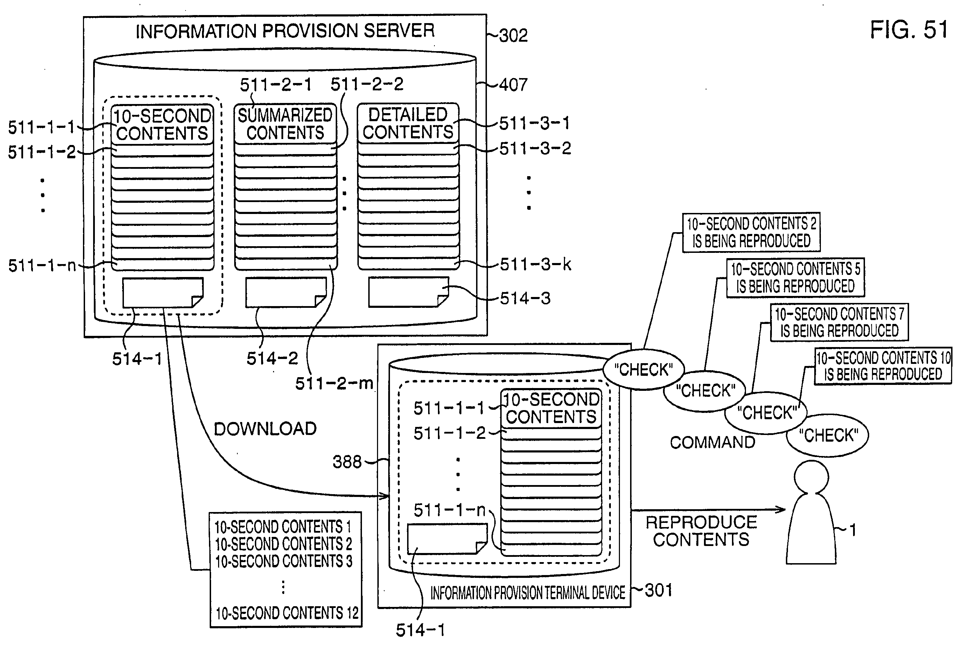

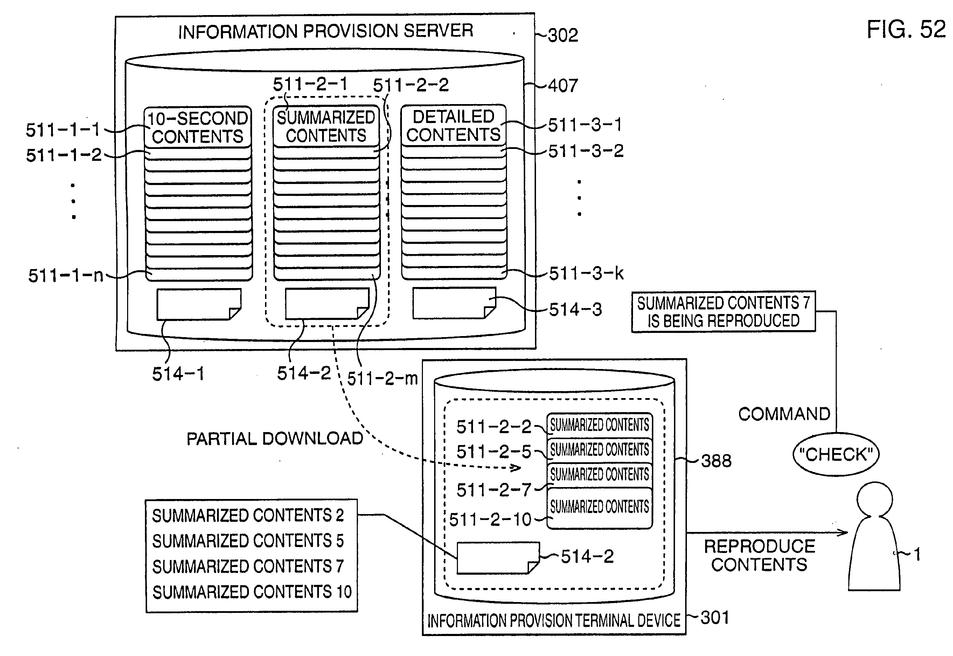

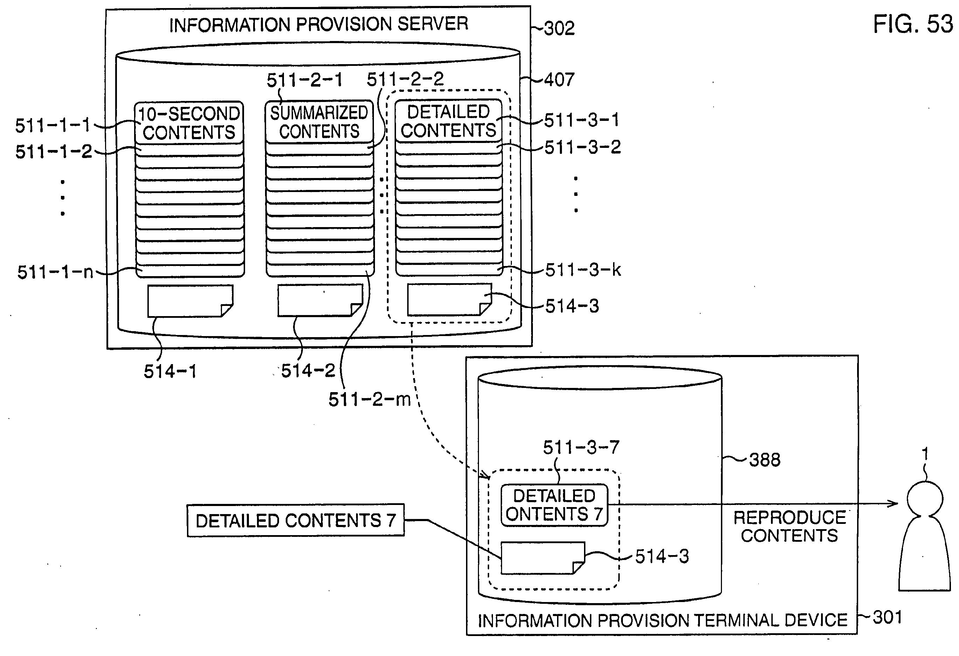

The scheme of the contents 511 downloading the subsequent contents 511 based on the check command and editing the play list 514 is now explained with reference to Fig. 51 to Fig. 53.

The information provision terminal device 301 downloads from the information provision server 302 the contents 511-1-1 to 511-1-n composed of the initial ten seconds, and the play list 514-1 representing the ordinal reproduction of contents 511-1-1 to 511-1-n, and reproduces contents 511-1-1 to 511-1-n in order based on the play list 514.

When one of the contents 511-1-1 to 511-1-n is being reproduced and a check command is input, the information provision terminal device 301 determines the contents 511 to be subsequently downloaded based thereon.

For example, when contents 511-1-2, contents 511-1-5, contents 511-1-7 or contents 511-1-10 are being reproduced and a check command is input, the information provision terminal device 301 downloads from the information provision server 302 contents 511-2-2, contents 511-2-5, contents 511-2-7 and contents 511-2-10 among the summarized contents 511-2-1 to 511-2-m, and generates a play list 514-2 representing the reproduction of the contents 511-2-2, contents 511-2-5, contents 511-2-7 and contents 511-2-10. The information provision terminal device 301, based on the play list 514-2, reproduces contents 511-2-2, contents 511-2-5, contents 511-2-7 and contents 511-2-10 in order.

When one of the contents 511-2-2, contents 511-2-5, contents 511-2-7 and contents 511-2-10 are reproduced and a check command is input, the information provision terminal device 301 determines the contents 511 to be subsequently downloaded based thereon.

For example, when the contents 511-2-7 are reproduced and a check command is input, the information provision terminal device 301 downloads from the information provision server 302 contents 511-3-7 among the summarized contents 511-3-1 to 511-3-k, and generates a play list 514-3 representing the reproduction of contents 511-3-7.

The information provision terminal device 301 reproduces contents 511-3-7 based on the play list 514-3.

As described above, the information provision terminal device 301 is able to generate a play list 514, and output the contents 511 based on the generated play list.

Notification is now explained.

According to the present invention, notification is made with the contents 511 for notification created by the contents producer 121 using an event.

As a result of employing the foregoing constitution, notification will not be fixed, and may be created freely as the contents 511, and the contents producer 121 is able to employ a presentation for making an effective notification.

A phone call within the distribution contents is now explained.

As a result of using the phone call contents of the functional contents 513, a service enabling a phone call from the distributed contents can be realized.

Specifically, as a result of the contents producer 121 creating the contents 511 as described below, a phone call may be made within the contents 511.

While providing a guide message such as, "Please designate the method of communication. You can choose the method of communication from the following. Fill out an application at the store. Call and apply over the phone.", when a "select" command is selected at "Call and apply over the phone", a call will be made according to the information described in the contents 511.

Voice mail or photo mail is now explained.

Voice mail and photo mail can be easily realized with the method of the present invention. Examples are provided below.

A contents folder classified by user is created in one of the layers in the information provision server 302, a mail folder is created thereunder, and a mail menu contents is created thereunder such that each email can be referred to from the mail menu contents.

Mail menu contents can be created easily and automatically. Regarding voice mail, transmitted data can be used without change as the contents.

As a result of enabling the creation of voice mail and photo mail as the functional contents 513 in the information provision terminal device 301, voice mail and photo mail can be exchanged among information provision terminal devices 301.

In the present invention, since the voice mail and photo mail are also constituted to be contents, these may be used as contents within other contents. Thus, an effect is yielded in that the contents producer 121 is able to have the voice mail and photo mail transmitted within the contents.

Since the data of voice mail and photo mail acquired with such contents can be used without change as contents, these may be used as a part of the contents to be provided to a different user.

As a result of associating and creating contents, the information provision terminal device 301 may be used as the generation means for generating the contents 511.

If these contents may be designated with a command of "email", such contents can be handled as with the other contents 511.

Reception of text mail is now explained.

In the information provision server 302, contents for receiving text mail can be created as with constitution of the voice mail.

By providing a distribution system having added thereto a text mail reception means for converting the email transmitter information and title and main text into a vocalizable format and storing this in the user's text mail folder from the server for receiving ordinary text mail, email from the Internet can be converted into the contents 511 of the present invention.

If these contents may be designated with a command of "text mail", such contents can be handled as with the other contents 511.

Status of the contents 511 is now explained.

It is desirable to create contents 511 for explaining to the user 1 what kind of contents 511 are contained in the information provision terminal device 301.

These contents 511 can be easily realized as a result of performing an operation of including contents 511 for explaining the subject matter in each of the distributed contents 511 when distributing such contents 511, and adding such contents 511 upon downloading the main contents.

Administration of the contents is now explained. The administration of contents is conducted based on the master designation data 515 contained in the contents 511 downloaded in the information provision terminal device 301.

The timing of deleting the contents 511 within the information provision terminal device 301 or from the play list 514 is designated with the master designation data 515.

Although the user 1 is able to delete the unnecessary contents 511 with a command, unless the contents producer 121 provides a service of enabling the copy of some type of contents 511, the [contents 511] can not be copied to another information provision terminal device 301.

With these functions, the contents producer 121 is able to dynamically administer the contents 511.

These functions may also be utilized for the sale or lease of the contents 511 or copyright management.

For example, with the contents 511 to be leased for only one month, it will suffice to write an instruction of deleting such contents after one month in the master designation data 515, and this can be realized extremely easily.

Use of a network event is now explained.

As a result of providing a constitution where the information provision server 302 is connected to the Internet, which is an example of the network 303, and accepting and forwarding the network event from the Internet, the network event may be transmitted from anywhere on the Internet.

As a result of employing the foregoing constitution, when a network event arrives at the information provision server 302 from a certain location connected to the Internet, such [network event] can be provided from the information provision terminal device 301 by using the contents 511 for explaining the subject matter thereof.

For example, contents 511 for notifying trouble in the home, office or shop can be easily created.

Use of the sensor event is now explained. Contents 511 can be automatically created with a sensor event as a result of creating contents 511 for explaining to the user the subject matter of an event generated by the sensor 481.

Failure diagnosis is now explained. For instance, in the example of the vehicle 311, a network communication function such as a CAN (Controller Area Network) for providing vehicle information is installed in recent vehicles, and, since this is often equipped with terminals, a failure diagnosis sensor is connected thereto, and connection is made with the sensor connection unit 465 of the information provision terminal device 301.

By providing a constitution of outputting the result in a format vocalizable by text when a failure diagnosis sensor discovers a malfunction, information input from the sensor connection means of the information provision terminal device 301 is stored in the contents folder designated, for example, with "failure diagnosis", and a sensor event is generated thereby. As a result of employing the foregoing constitution, when the vehicle 311 malfunctions, [failure diagnosis] is notified to the user as notification contents.

In the present invention, since the information provision sources are integrated, the user 1 only has to pay attention to one information source, and will be able to reliably receive the malfunction notice without having to diver one's attention from the main action significantly.

Further, in these contents, if the content and dealing method of the malfunction and contact information can be notified with the "explain" command, the user 1 will be able to deal with the trouble by performing standard terminal operations. Since the [user 1] will not have to read a manual when encountering trouble and be able to engage in standard operations, attention will not be diverted from the main action significantly.

Further, when the "select" command is used during the guidance of the contact information using the phone call contents of the functional contents 513, a service enabling communication with the point of contact can be provided easily.

Use of a speed sensor is now explained. The speed of the vehicle 311 can be detected with a sensor such as a speed pulse or acceleration sensor or GPS. As a result of connecting the foregoing sensor 481 via the sensor connection unit 465, the information provision terminal device 301 will be able to realize a contents service according to the speed of the vehicle 311.

Use of the sensor 481 and the actuator 491 of the external equipment 433 is now explained.

By providing a constitution of adding a CCD camera 616 as the camera image input means to the environment information detection unit 432, for example, the acceleration sensor 612 and sound pressure sensor 613 are combined to detect accidents or trouble, the image information obtained from the CCD camera 616 is stored as contents 511 reproducible by the user 1 in the contents memory unit 388, and image recorded according to the operation of the user 1 is provided thereby.

Download of the contents 511 in a hot spot is now explained. According to the method of the present invention, when the constitution is such that the portable phone carrier packet communication service and wireless LAN hot spot are combined, contents to be provided in real time can be handled with the portable phone carrier packet communication network, and large-volume contents can be handled with the wireless LAN hot spot.

Examples of handling the foregoing contents are provided below.
1. Contents 511 for downloading large-volume contents are created in advance, and distributed to the information provision terminal device 301 at a certain timing;
2. When the contents 511 are distributed, contents 511 distributed to the play list 514 of the contents to be used upon employing the hot spot are added; and
3. When the contents 511 to be used by the user 1 upon employing the hot spot are to be reproduced, large-volume contents 511 are automatically downloaded.

By creating the foregoing contents 511, the addition of a new constitution will not be particularly required other than the wireless LAN communication function.

Or, an open line event may be used to reproduce the contents 511 to be notified to the user 1 when entering the hot spot, the selection of contents 511 to be downloaded may be sought upon presenting the options among such contents 511, and the contents 511 selected by the user 1 may be downloaded thereby.

Off-line operation is now explained.

In the present invention, when the user is to start using the information provision terminal device 301 regarding of the timing thereof, the contents to be initially designated and used have already been distributed, and are available for immediate use. Further, in accordance with the previous operation of the user 1, related information is in a state of having been distributed, and stored in the terminal.

Therefore, contents 511 that have already been stored in the information provision terminal device 301 may be used normally in a state of not being connected to the network 303.

In addition, the user's operation is entirely the same for an off-line operation.

Operation not requiring a download operation is enabled.

Accordingly, an extremely functional feature of the user not having to engage in an operation for downloading the contents 511 is yielded. This point differs from various Internet services.

Operation during a bad reception is now explained.

Upon using an open line event, when the user 1 is using the information provision terminal device 301 in a communicable state, for example, when the in-car information provision terminal device 301 enters an underground parking or tunnel and is no longer communicable, operation of the contents 511 may be changed to deal with the change of status. Contrarily, when it becomes communicable, the contents 511 also be created to switch to the reproduction of the original contents 511 or being the download thereof.

This is a significant feature of the present invention.

For example, in a terminal or service provided via an open line such as with FM broadcasts or TV broadcasts, portable phones or emails and web browsers, the service is suspended when communication is disabled, and, unless the user performs some kind of operation, the service of the terminal is suspended.

According to the present invention, when the contents producer 121 is no longer able to communicate, it is possible to continue providing the service by ending the contents 511 and reproducing the subsequent contents 511, or switching to the contents 511 prepared in advance. The continuity of such service is a significant feature of the present invention.

Next, the contents registration terminal device 1101 is explained.

The contents registration terminal device 1101 can be of a simple constitution. Since the description of the contents 511 is not complicated, as the operation of the contents registration terminal device 1101, it will suffice to have a function of writing information for designating and registering the folder 501.

Accordingly, the contents registration terminal device 1101 may have an extremely simple structure only having a folder designation function, provided information file designation function and provided information acquisition function.

The contents registration terminal device 1101 may be installed at the same location as the information provision terminal device 301, but it is not a requisite to install it at the same location, and it may be installed at a different location.

Since the contents registration terminal device 1101 only needs to be connected to the information provision server 302 via the network 303, as a result of connecting the information provision server 302 and contents registration terminal device 1101 to the Internet, which is an example of the network 303, contents information provided from around the globe can be provided in an integrated and organized manner to the user 1 who is subject to numerous constrained conditions such as while driving a vehicle.

Support function of the contents producer 121 is now explained.

By providing a constitution of adding the following contents producer 121 support function to the contents registration terminal device 1101, such operations can also be conducted automatically:
1. Automatic acquisition function of renewed contents;
2. Automatic input function of contents management information; and
3. Automatic collection function of contents.

In the present invention, since the distribution of contents 511 is constituted such that all data of the designated folder 501 and below merely needs to be copied, the support function of the contents producer 121 can be realized easily.

Automatic contents generation terminal device is now explained.

For example, a device for outputting contents such as a network camera for outputting visual data may be employed as the automatic contents generation terminal device in the information provision system pertaining to the present invention.

Network event generation terminal device will now be explained.

In the present invention, since the contents 511 required by the user 1 are distributed in advance and the processing of the contents event is performed with the information provision terminal device 301, the system structure on the distributing side upon distributing information can be constituted to be extremely simple.

Since many of the conventional distribution systems are constituted to process the event generated outside the terminal for providing information to the user with the system on the distributing side, an extremely enormous system for performing event per type of event or per purpose of use of the user will be required in order to create a system capable of consolidating various types of information as in the present invention.

For example, in the display of a telop of earthquake information in a TV broadcast, when text data generated as an event is to be displayed overlappingly on the TV screen as earthquake information, telop is superposed on the program image on air in an easy-to-read format, and, in addition, since the broadcast is conducted at each TV station, it is necessary to perform event processing at each TV station. This also applies to radio stations.

The foregoing problem is more serious with the service provided via the Internet web browser, and, in a state where the user is acquiring information only from the web browser, it will not be possible to reliably provide information to the user unless all pages on the Internet display emergency information.

According to the present invention, since a part of the contents relating to the item which the user is showing interest is distributed to the information provision terminal device 301 according to the user's operation, the foregoing problem can be overcome with a simple preparatory operation of describing the processing of the corresponding event in the master designation data 515 of the distributed contents. This is a significant feature of the present invention.

In the present invention, as a result of arranging the network event generation terminal device described below, it is possible to generate a network event from any network device that can be connected via a network to the Internet and information provision server 302 and information provision terminal device 301.

By providing a constitution of adding a network event generation terminal device connectable to the Internet, the contents producer 121 will be able to utilize an event generated at any location connectable to the Internet in the contents 511.

For example, by installing a network event generation terminal device at the desk of the chief editor of the contents 511, and, upon confirming the renewal of the contents, outputting a network event used in the target contents that were confirmed, event is sent to the information provision terminal device 301 receiving the distribution of such contents when the chief editor operates the network event generation terminal device, and information that was just renewed may be downloaded.

Or, by enabling the detection of trouble or some kind of event with the sensor 481, and creating contents 511 that will reproduce notification contents when such event is generated, the terminated receiving the distribution of such contents may notify the user when such event is generated.

The portable information provision terminal device 301 is now explained.

The portable information provision terminal device 301 may employ the constitution illustrated in Fig. 29.

Operation of the portable information provision terminal device 301 is now explained.

In order to operate the information provision terminal device 301 while driving the vehicle 311, although a voice command was most suitable since the vehicle 311 is a private space, a terminal to be carried and used by a person will often be used in public places, there will be cases where a voice command cannot be used. Thus, the constitution enables to operation to be conducted via both voice command and button operation.

Buttons on the remote controller 611 or the buttons on the housing may be used to perform the operation of the following constitution.
Reproduction control by the player 453: Next, back, play/pause
Operational log control: Return, next
Contents control: Up, down, right, left, select

It is desirable that the buttons of the remote controller 611 or housing are capable of performing operations relating to the following system control.

System control: Power ON/OFF, high volume, low volume, raise screen brightness, lower screen brightness, raise screen contrast, lower screen contrast

As a result of employing the foregoing constitution, as a result of performing operation with a voice command in an environment where it is possible to speak, and performing operation with button operations in an environment where it is not possible to speak, the service of the information provision system pertaining to the present invention may be used.

By providing a constitution of adding a menu operation button described later, operation can be simplified.

The constitution may also add the operation of "return to top of contents" and "advance to end of contents" to the reproduction control of the player 453.

When the operation of up, down, right and left is not required in the contents 511, the constitution may omit the up, down, right and left buttons.

The selection button may be constituted to double with other buttons, or a plurality of buttons may be combined.

The direct designation operation of the portable information provision terminal device 301 is now explained.

In the voice command, although it is possible to directly designate the contents with a command map of dynamic command map, a direct designation operation can not be performed with only a button operation.

Thus, by adopting the following constitution, a direct designation operation can be enabled with only a button operation. According to this constitution, even in a in-car information provision terminal device 301 which is mainly operated by a voice command, an effect is yielded in that [user] does not have to remember the direct operational command.

Incidentally, the constitution may combine the respective methods.

As the first method, when an operation is made to return to the initial contents, the menu contents of the overall contents are reproduced, and contents capable of being subject to direct designation operation are listed based on the subject matter of the menu contents so as to enable a selectable operation.

As the second method, a menu button is added to the constitution, the menu contents of the overall contents are reproduced when the menu button is pushed, and contents capable of being subject to direct designation operation are listed based on the subject matter of the menu contents so as to enable a selectable operation.

As the third method, when the operation of up, down, right and left is not required in the contents, the direct designation operation can be realized even with the method of selecting the menu with the up, down, right and left buttons.

When a screen can be used, items selected as options may be displayed on the screen.

When a screen cannot be used, a direct designation operation via a button operation can be realized, even when the service is received with audio only such as via headphones, by outputting sounds or an audio guide representing the selected menu items for each button operation so as to notify the user.

The service provided by the portable information provision terminal device 301 is now explained.

As a result of employing the foregoing constitution, a small portable information provision terminal device 301 will be able to provide the same services as the in-car information provision terminal device 301.

In other words, in addition to services for distributing music contents and DJ programs, and effect is yielded in that the following services can also be provided with a single device.
- Travel guide contents may be operated before the trip to extract tourist attractions of one's interest and view the guide, realize a state of the guide (automatically) stored in the terminal to view the guide accumulated in the information provision terminal device 301 with minimal button operations at the destination of one's trip;
- Restaurants may be searched while outside with the restaurant guide contents, a call will be automatically made to the restaurant thereafter for discussing the details and making a reservation;
- Voice messages and visual images can be conveyed to the other party, emails can be read or listened to;
- A positional event is generated in the route, information provision terminal device 301 when arriving at a certain location, and contents for guiding the way to the destination can be realized pursuant thereto;
- An address book can be read out with the voice command of "address book" while walking, and a call can be made to the other party by being designated with the operation of the address book; and
- For example, when the information provision terminal device 301 is being used as business maintenance terminal device, this device may be used with button operations where the noise level is high, and with a voice command where the noise level is low.

As described in the foregoing example, in an environment where the user 1 is able to use a voice command, operation may be made via a voice command, and the operation may be succeeded with a button operation without change when the situation changes.

If the user 1 does not operate the information provision terminal device 301, as with the case of the in-car information provision terminal device 301, reproduction of the contents 511 is automatically continued according to the operation of the user 1. Accordingly, the user 1 will be able to focus on the main action on a case-by-case basis, and the object of the present invention can be achieved thereby.

An embodiment of the information provision terminal device 301 for humans is now explained.

There are many cases where a person will place the information provision terminal device 301 on one's desk or carry it around, and be engaged in another main action other than acquiring information when using such device.

When the information provision terminal device 301 of this embodiment is carried into the vehicle 311, a highly versatile information provision service can be realized by providing information according to the situation inside the vehicle.

An embodiment of switching a plurality of master control units 451 is now explained.

The constitution may also install and switch a plurality of master control units 451.

As a result of installing a plurality of master control units 451, a plurality of pointer stacks 457 can be managed simultaneously.

Thus, it will be possible to simultaneously store the state of the plurality of contents 511 during reproduction. This will yield the following advantages:
- Contents 511 can be instantaneously switched and used; and
- The operational log prior to the contents 511 being switched will be recorded separately for the respective contents 511, and will be easy to understand.

The method of switching the plurality of master control unit 451, for example, is effective in the following cases:
- When music contents, news contents and sightseeing guide contents are being used at the same time and in parallel; and
- When the plurality of users 1 use the same information provision terminal device 301 at different times.

An example of supplementing the human interface unit 431 with the auxiliary information provision device is now explained.

In many cases, since a person engages in activities using their eyes, it is strongly desirable to limit the information that cannot be obtained visually to cases that will not cause any hindrance even when the line of sight is averted.

When the [user] is focusing on the main action, there are cases where such [user] will not recognize the information provided from the information provision terminal device 301. In order to reliably provide information in the foregoing case, a method of supplementing the main human interface unit 431 with and auxiliary information provision device is described below.

For example, since the driver driving the vehicle, which is a car, is focusing on the driving operation, there may be cases where such [driver] will not recognize the information being provided form the information provision terminal device 301 installed inside the vehicle.

In such a case, information can be provided more reliably by sending a notification that can be confirmed while focusing on the road ahead, or directing the [driver's] attention to the information from the information provision terminal device 301.

According to the present invention, the foregoing methods can be easily realized since the contents are able to transmit and receive events.

According to the present invention, the contents producer 121 is able to make an effective notification according to the productive idea of the contents 511.

An example of utilizing the auxiliary information provision device in ordinary contents is shown below.

If the user is continuously reproducing other contents when the subject matter of the contents is renewed, the user will not recognize the renewal if no notification is made. For example, when an emergency notification is to be made when the user is listening to music contents, for instance, such notification may be made by interrupting the [music contents]. Nevertheless, if information such as "New move guide has arrived", which is not urgent, is notified for each renewal, this will become troublesome and may even divert the user's attention from the main action.

It is desirable that the auxiliary information provision device enables the confirmation of information while the user is engaged in an activity, without the user having to divert one's attention significantly.

For example, the auxiliary information provision device is set up in a position that is easily viewable while the [driver] is watching the road ahead from the driver's seat.

In the foregoing case, by employing a scheme of an event between contents, it will be possible to control the auxiliary information provision device from the contents.

The contents for providing the auxiliary information provision device will be provided as contents independent and separate from the audio contents as the main human interface unit 431.

For example, the auxiliary information provision device has the following states:
1. There is no information to be notified;
2. Distribution of contents is being received;
3. Contents were renewed; and
4. There is important information.

The auxiliary information provision device is able to represent such states with the color of LED, or changes in the flashing pattern.

The following methods may be employed to perform a more effective presentation.

It would be effective if the auxiliary information provision device appealing directly to the visual sense with a mechanical movement instead of sounds or images.

For example, the auxiliary information provision device can be formed into something capable of changing expressions such as a dog-shaped robot. As a result of associating the foregoing states as follows, the user will be able to instantaneously comprehend the situation be merely throwing a glance when the user is at ease while driving the vehicle.

Or, when the display (meters and the like) is not used while the vehicle is in motion, such display panel may be used as the auxiliary information provision device. Specifically, switching a display pattern on the screen which can be visually recognized from the corner of one's eyes without having to pay close attention to it, or a 3D image of a dog-shaped robot may be displayed.

In the present invention, since a function for the distributed contents generating an event in the information provision terminal device 301, function for receiving an event generated by other contents, and an actuator connection unit 466 for the information provision terminal device 301 to control external equipment 435 are provided, the contents producer 121 is able to provide the foregoing presentations.

In the present embodiment, the auxiliary information provision device is installed inside a vehicle. Nevertheless, the auxiliary information provision device may also be installed on the road or in a facility.

For example, in the case of providing information from the facility administrator to the vehicle running within a facility such as parking lot or amusement park, there may be cases where the attention of the user 1 will be diverted toward the facility, and such [user 1] may not recognize the information provided from the in-car information provision terminal device 301. In such a case, the user can be reminded that information to be notified is in the in-car information provision terminal device 301 by indicating a flashing display on the large display panel established on the roadside or on the path within the facility.

Or, information for informing the authorization of entrance with the opening or closing of the gate or lock may also be provided effectively.

For example, when an explanation is to be made to the user prior to such user entering an amusement park or a facility, by distributing the explanation contents to the portable information provision terminal device 301 in advance, and opening the automatic door, which is the gate, only after the user 1 has finished listening to such explanation, a presentation of providing information explaining that the user may automatically enter the premise after fully listening to the explanation can be realized. Further, a presentation of notifying the user that the door will open after the user listens to the explanation guide may be realized when the user tries to open the door manually before listening to the explanation contents.

Constitution of the folder 501 and download of the contents 511 are now explained in further detail.

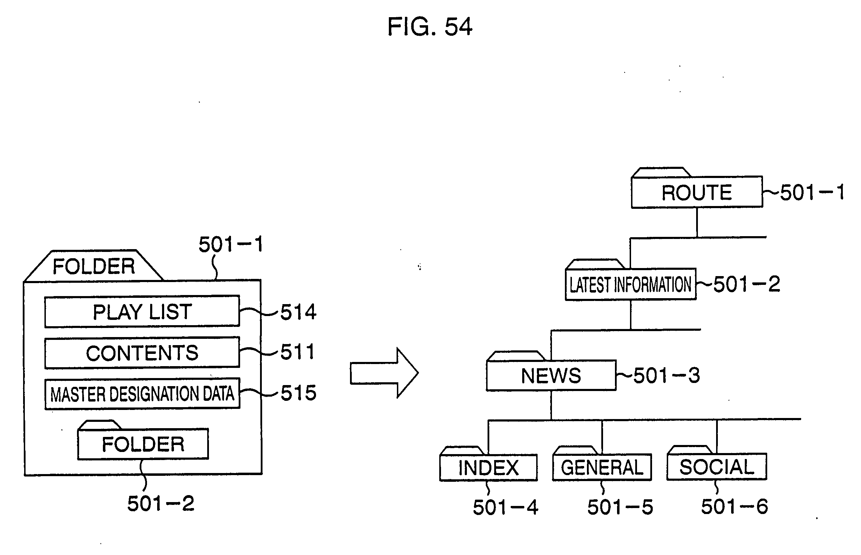

Fig. 54 is a diagram for explaining the basic constitution of the folder 501. As shown on the left side of Fig. 54, for example, logically stored in folder 501-1 are necessary contents 511, necessary play list 514, necessary master designation data 515, and folder 501-2 of the child of folder 501-1 and which is a subordinate layer of folder 501.

As shown on the right side of Fig. 54, the folder 501 has a hierarchical structure. For example, the latest information folder 501-2 is positioned as the child of the route folder 501-1. A news folder 501-3 is positioned as the child of the latest information folder 501-2. Arranged as the child of the news folder 501-3 are, for instance, an index folder 501-4, a general folder 501-5 and social folder 501-6.

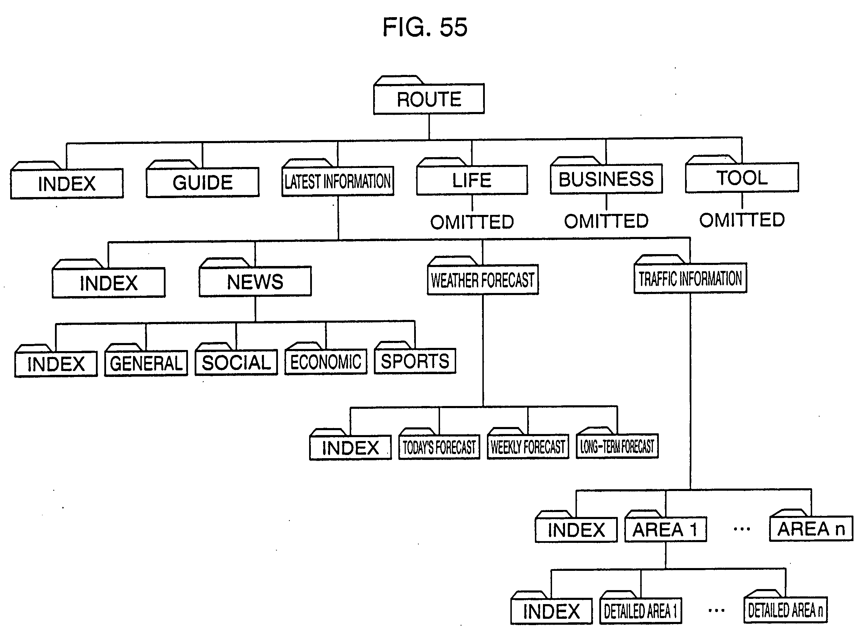

Fig. 55 is a diagram showing an example of the folder 501 having a hierarchical structure. The hierarchical structure of the folder 501, for example, may be of a tree structure.

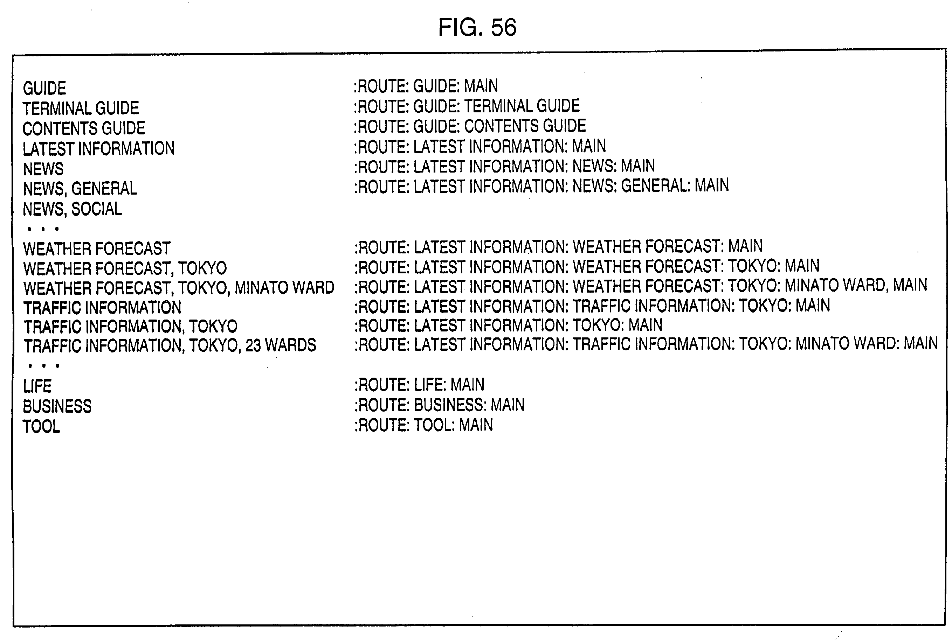

Fig. 56 is a diagram showing and example of the master designation data 515. The dynamic command map data 812 may also adopt the same constitution.

In this example, since the command is only for moving, the description thereof is omitted.

In the example shown in Fig. 56, the words indicated in the vertical row on the left side represent events (commands). In the example shown in Fig. 56, the character string indicated in the horizontal row on the right side represents the destination folder 501.

For example, when the event of "guide" is input with the master designation data 515 shown in Fig. 56, the [routine] moves to the folder 501 represented with route: guide: main (aggregate of contents 511 stored in the destination folder 501 is reproduced). When the event of "weather forecast, Tokyo" is input with the master designation data 515 shown in Fig. 56, the [routine] moves to the folder 501 represented with route: latest information: weather forecast: Tokyo: main.

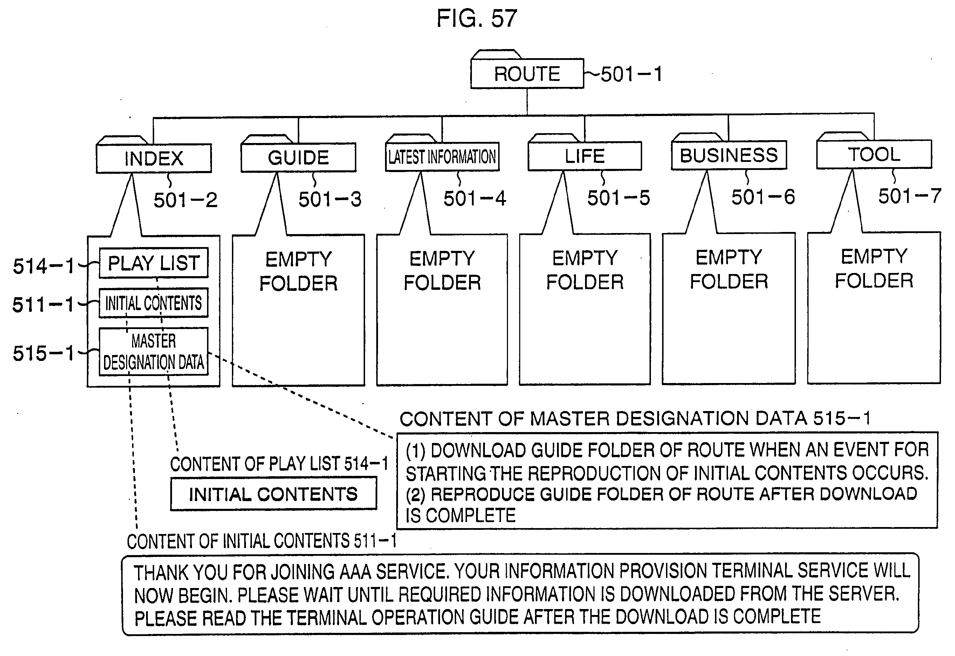

Fig. 57 is a diagram showing an example of the folder 501, play list 514, contents 511, and master designation data 515 stored in the contents memory unit 388 upon activating the information provision terminal device 301.

In the example shown in Fig. 57, stored in the contents memory unit 388 are a route folder 501-1, as well as an index folder 501-2, guide folder 501-3, latest information folder 501-4, life folder 501-5, business folder 501-6 and tool folder 501-7, which are children of the route folder 501-1. And, stored in the index folder 501-2 are a play list 514-1, initial contents 511-1 and master designation data 515-1.

When the information provision terminal device 301 is activated, since data stored in the initial pointer memory unit 458 has designated the index folder 501-2, the master control unit 451 makes the play list reader 452 read the play list 514-1. The play list 514-1 is instructed to reproduce the initial contents 511-1.

Described in the master designation data 515-1 is, for example, instructions to download the guide folder 501-3 of the route folder 501-1 when a reproduction start event of the initial contents 511-1 is generated, and, after the download is completed, to reproduce the guide folder 501-3 of the route folder 501-1.

The initial contents 511-1 are, for example, data for outputting a message such as "Thank for joining AAA service. Your information provision terminal service will now begin. Please wait until required information is downloaded from the server. Please read the terminal operation guide after the download is complete."

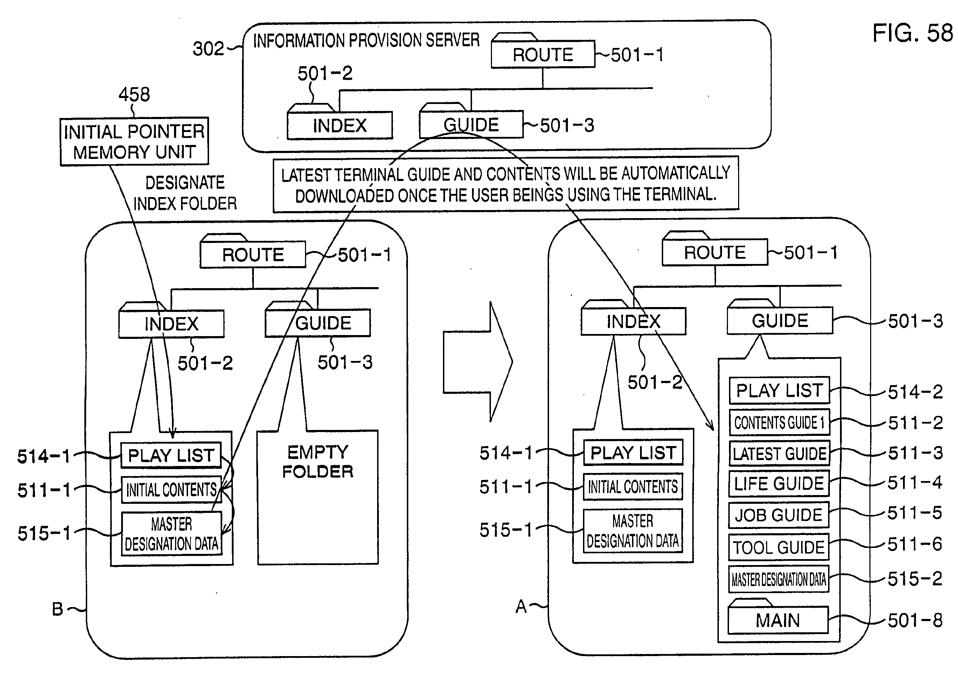

Therefore, as shown in Fig. 58, the information provision terminal device 301 automatically downloads contents of the guide folder 501-3 form the information provision server 302 upon the user 1 activating the information provision terminal device 301.

In other words, when a reproduction start event of the initial contents 511-1 is generated based on the control of the master designation data 515-1, the information provision terminal device 301 downloads the guide folder 501-3 of the route folder 501-1 from the information provision server 302, and, after the download is complete, reproduces the guide folder 501-3 of the route folder 501-1.

Therefore, after the download of the guide folder 501-3 of the route folder 501-1 is complete, stored in the guide folder 501-3 of the contents memory unit 388 are the play list 514-2, contents 511-2 as the contents guide 1, contents 511-3 as the latest guide, contents 511-4 as the life guide, contents 511-5 as the job guide, contents 511-6 as the tool guide, master designation data 515-2, and main folder 501-8 which is the child of the guide folder 501-3.

When the download of the guide folder 501-3 is complete, the master control unit 451 designates the play list reader 452 to reproduce the guide folder 501-3 of the route folder 501-1.

When there is a description in the play list 514-2 to reproduce the contents 511-2 as the contents guide 1, contents 511-3 as the latest guide, contents 511-4 as the life guide, contents 511-5 as the job guide, and contents 511-6 as the tool guide in order, the play list reader makes the player 453 reproduce the contents 511-2 as the contents guide 1, contents 511-3 as the latest guide, contents 511-4 as the life guide, contents 511-5 as the job guide, and contents 511-6 as the tool guide in order based on the description in the play list 514-2.

For example, the contents 511-2 as the contents guide 1 are data for outputting a voice message such as, "Welcome to contents guide. You can check out guides to latest information, life, job and tool contents. Enter the voice command "select" to open guide". The contents 511-3 that is a latest guide are data for example for outputting a voice message such as "Latest information on news, weather forecast and traffic information will be provided"

For example, contents 511-4 as the life guide are data for outputting a message such as, "Life information will provide information on entertainment, shopping and restaurants." For example, contents 511-5 as the job guide are data for outputting a message such as, "Job information will provide information on..."

For example, contents 511-6 as the tool guide are data for outputting a message such as, "Tool guide will show how to use the functions of the terminal."

Accordingly, for instance, output from the voice output unit 472 are audio messages such as, "Welcome to contents guide. You can check out guides to latest information, life, job and tool contents. Enter the voice command "select" to open guide"; "Latest information on news, weather forecast and traffic information will be provided"; "Life information will provide information on entertainment, shopping and restaurants"; "Job information will provide information on..."; and "Tool guide will show how to use the functions of the terminal".

Further, after the contents 511-6 as the tool guide are output, it is possible to output the contents as the command guide.

There is a description in the master designation data 515-2 to download and reproduce the command 511 of the latest information folder 501-4 when the latest guide contents 511-3 are being output and the selection command is input; to download and reproduce the contents 511 of the life information folder 501-5 when the life guide contents 511-4 are being output and the selection command is input; to download and reproduce the contents of the business information folder 501-6 when the job guide contents 511-5 are being output and the selection command is input; and to download and reproduce the contents 511 of the tool folder 501-7 when the tool contents 511-7 are being output and the selection command is been input.

Accordingly, from the description in the master designation data 515-2, the master control unit 451 designates the download of the command 511 of the latest information folder 501-4 when the latest guide contents 511-3 are being output and the selection command is input, and designates the reproduction thereof when the download is complete; designates the download of the contents 511 of the life information folder 501-5 when the life guide contents 511-4 are being output and the selection command is input, and designates the reproduction thereof when the download is complete; designates the download of the contents of the business information folder 501-6 when the job guide contents 511-5 are being output and the selection command is input, designates the reproduction thereon when the download is complete; and designates the download of the contents 511 of the tool folder 501-7 when the tool contents 511-7 are being output and the selection command is been input, and designates the reproduction thereof when the download is complete.

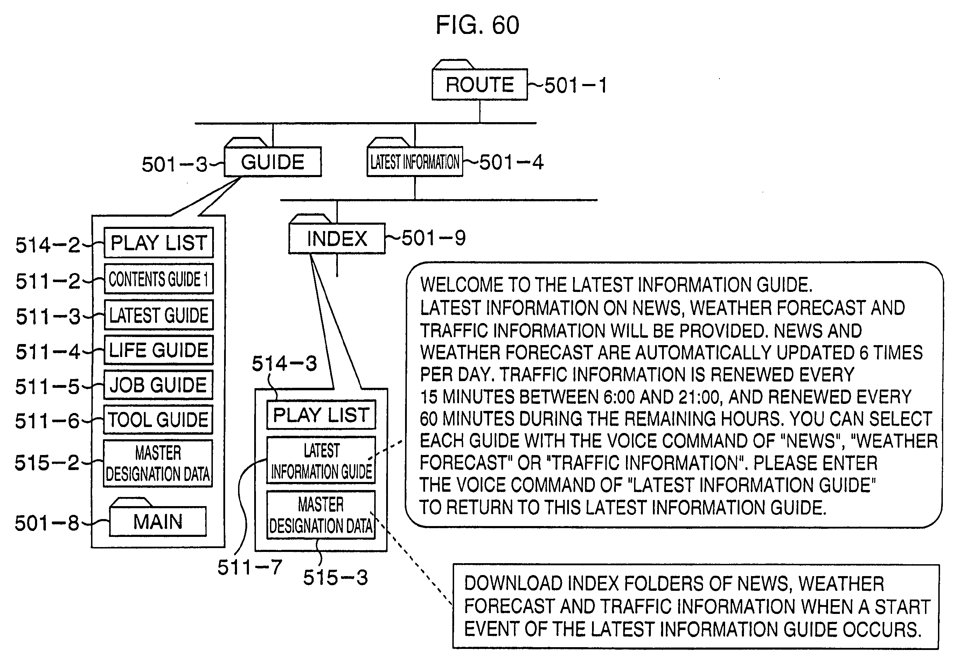

Accordingly, when the latest guide contents 511-3 are being output and the selection command is input, as shown in Fig. 60, the play list 514-3, latest information guide contents 511-7 and master designation data 515-3 stored in the index folder 501-9, which is the child of the latest information folder 501-4, are supplied from the information provision server 302 to the information provision terminal device 301.

The index folder 501-9 storing the play list 514-3, latest information guide contents 511-7 and master designation data 515-3 is stored in the latest information folder 501-4 of the contents memory unit 388.

The latest information guide contents 511-7, for example, makes the player 453 output a message such as, "Welcome to the latest information guide. Latest information on news, weather forecast and traffic information will be provided. News and weather forecast are automatically updated 6 times per day. Traffic information is renewed every 15 minutes between 6:00 and 21:00, and renewed every 60 minutes during the remaining hours. You can select each guide with the voice command of "news", "weather forecast" or "traffic information". Please enter the voice command of "latest information guide" to return to this latest information guide."

It is described in the master designation data 515-3 to download the index folder of news, weather forecast and traffic information, for example, when a start event of the latest information guide is generated.

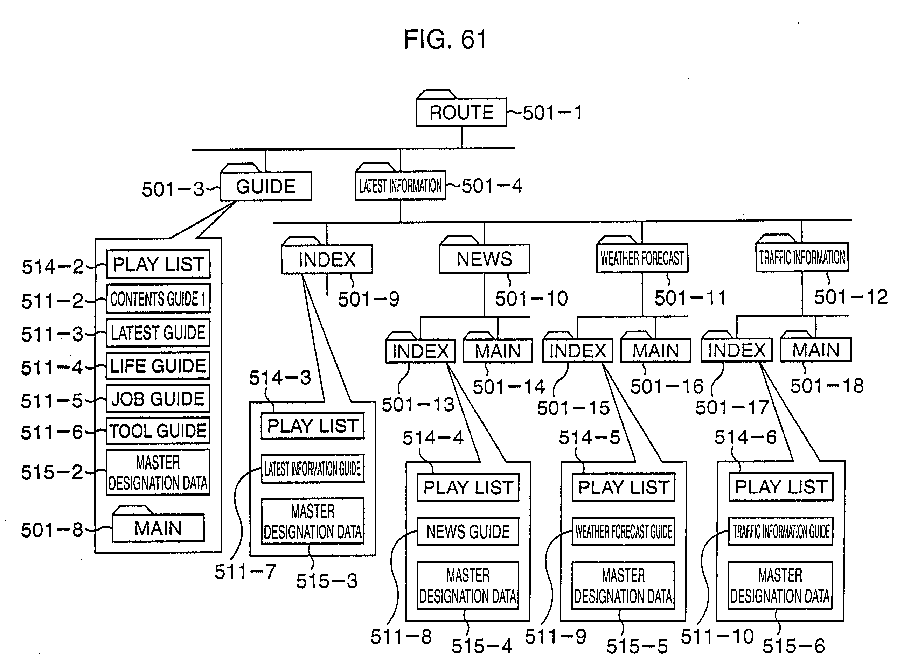

Accordingly, as shown in Fig. 61, from the description in the master designation data 515-3, the master control unit 451 downloads the news index folder 501-13, weather forecast index folder 501-15 and traffic information index folder 501-17 in the communication unit 456 when a start event of the latest information guide is generated.

The news folder 501-10, weather forecast folder 501-11 and traffic information folder 501-12, which are children of the latest information 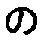 folder 501-4 are generated in the contents memory unit 388, and the news index folder 501-13 which is the child of the news folder 501-10, the weather forecast index folder 501-15 which is the child of the weather forecast folder 501-11, and the traffic information index folder 501-17 which is the child of the traffic information folder 501-12 are recorded therein.

Stored in the index folder 501-13 of the contents memory unit 388 are the play list 514-4, news guide contents 511-8 and master designation data 515-4 downloaded from the information provision server 302.

Stored in the index folder 501-15 of the contents memory unit 388 are the play list 514-5, weather forecast guide contents 511-9 and master designation data 515-5 downloaded from the information provision server 302.

Stored in the index folder 501-17 of the contents memory unit 388 are the play list 514-6, traffic information guide contents 511-10 and master designation data 515-6 downloaded from the information provision server 302.

Further, the main folder 501-14 is arranged as the child of the news folder 501-10. The main folder 501-16 is arranged as the child of the weather forecast folder 501-11. The main folder 501-18 is arranged as the child of the traffic information folder 501-12.

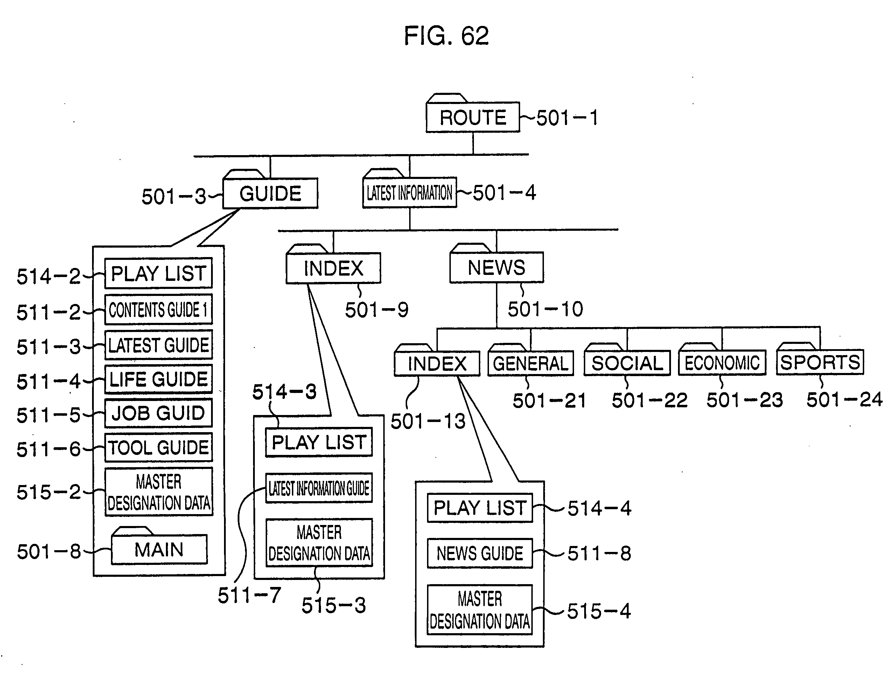

The main folder 501-14 as the child of the news folder 501-10, as shown in Fig. 62, for instance, contains a general folder 501-21, a social folder 501-22, an economic folder 501-23 and a sports folder 501-24.

Further, based on the master designation data 515, the information provision terminal device 301 downloads the play list 514-11 and general news folder 501-31 stored in the main folder 501-31 which is the child of the , general folder 501-21 from the information provision server 302, downloads the play list 514-12 and social news folder 501-32 stored in the main folder 501-32 which is the child of the social folder 501-22, downloads the play list 514-13 and economic news folder 501-33 stored in the main folder 501-33 which is the child of the economic folder 501-23, downloads the play list 514-14 and sports news folder 501-34 stored in the main folder 501-34 which is the child of the sports folder 501-24, and stores these in the contents memory unit 388.

Moreover, based on the master designation data 515, the information provision terminal device 301 downloads the play list 514-21 and news contents 511-21-1 to 511-21-n stored in the general news folder 501-31 from the information provision server 302, and stores these in the contents memory unit 388; downloads the play list 514-22 and news contents 511-22-1 to 511-22-n stored in the social news folder 501-32, and stores these in the contents memory unit 388; downloads the play list 514-23 and news contents 511-23-1 to 511-23-n stored in the economic news folder 501-33, and stores these in the contents memory unit 388; and downloads the play list 514-24 and news contents 511-24-1 to 511-24-n stored in the sports news folder 501-34 and stores these in the contents memory unit 388.

As described above, the information provision terminal device 301 sequentially downloads the contents 511, play list 514 and master designation data 515 from the information provision server 302 via the network 303, and stores the same.

As described above, in the information provision system pertaining to the present invention, the download of information is induced based on the reproduction of contents resulting from the user's operation. Data required in the contents can be designated with a single operation.

Further, the route for designating the folder and the data stored therein, including the sub-folders, are all downloaded (distributed). Moreover, as a result of reproducing the contents, the subsequent contents are automatically distributed, and the service is continuously provided.

In addition, the downloaded contents can be renewed.

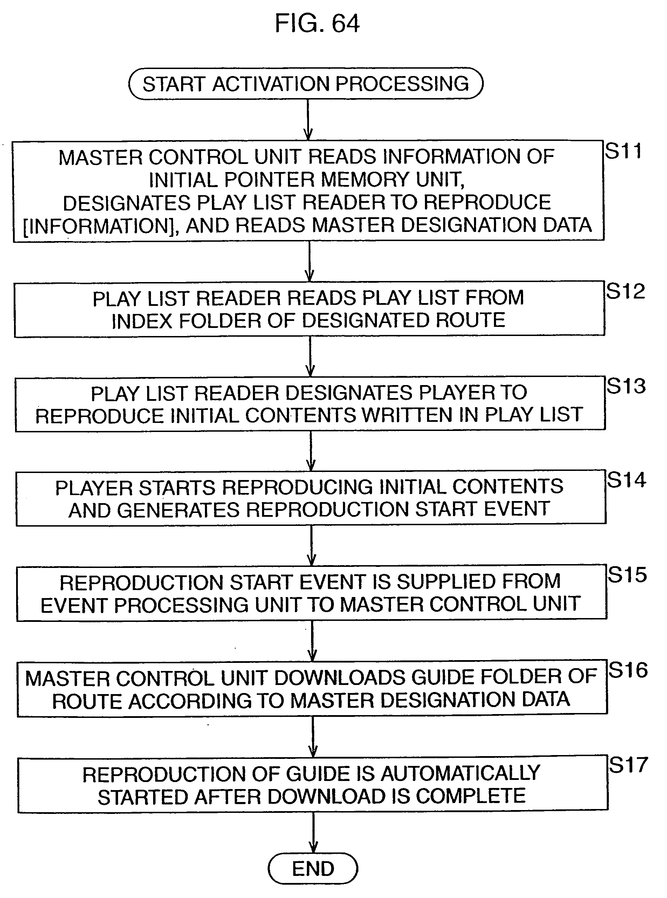

The activation processing of the information provision terminal device 301 is now explained with reference to the flowchart shown in Fig. 64.

At step S11, the master control unit 451 reads information representing the folder 501 from the initial pointer memory unit 458, designates the reproduction of the folder 501 represented with the read information to the play list reader 452, and reads the master designation data 515 stored in the folder 501 represented with the read information.

At step S12, the play list reader 452 reads the play list 514 from the index folder 501, which is the folder 501 represented with the read information.

At step S13, the play list reader 452 designates the reproduction of the initial contents written in the play list 514 to the player 453.

At step S14, the player 453 starts the reproduction of the initial contents 511, and generates a reproduction start event. The reproduction start event is supplied to the event processing unit 461.

At step S15, the event processing unit 461 supplies the reproduction start event to the master control unit 451.

At step S16, the master control unit 451, in accordance with the master designation data, downloads the guide folder, which is a child of the route folder 501, from the information provision server 302 via the network 303.

At step S17, when the master control unit 451 completes the download of the guide folder 501, it designates the reproduction of the guide folder 501 to the play list reader 452, the contents 511 of the guide folder 501 is reproduced, and the processing is ended thereby. In other words, when the download of the guide folder 501 is completed, reproduction of the guide is automatically started.

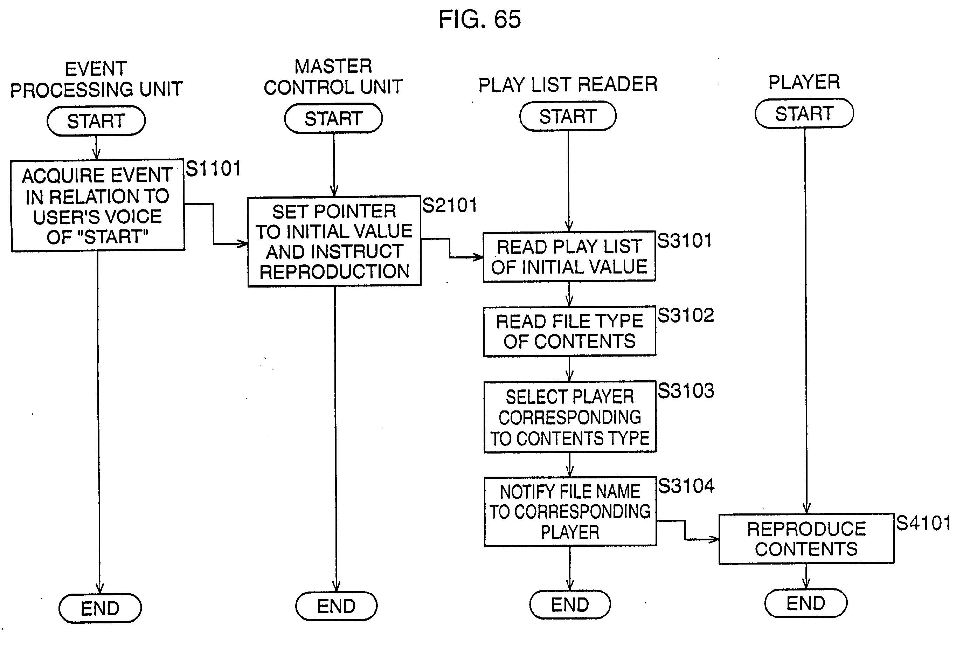

Fig. 65 is a flowchart for explaining the processing of the information provision terminal device 301 in relation to the event (command) of "start", which is the voice of the user 1.

The step S1101, the event processing unit 461 acquires an event in relation to "start", which is the voice of the user 1, supplied from the voice input unit 462, and supplies the acquired event to the master control unit 451.

At step S2101, as a result of the master control unit 451 reading the initial value stored in the initial pointer memory unit 458 and setting the read initial value in the current pointer 459, it sets the pointer to the initial value, and designates the reproduction of the folder 501 represented with the initial value to the play list reader 452.

At step S3101, the play list reader 452 reads the play list 514 of the initial value, which is the play list 514 stored in the folder 501 designated from the master control unit 451. At step S3102, the play list reader 452 determines the contents 511 to be reproduced based on the play list 514, and reads the file type of the contents 511 to be reproduced from the contents 511 stored in the contents memory unit 388.

At step S3103, the play list reader 452 selects the player 453 corresponding to the contents type. At step S3104, the play list reader 452 notifies the file name of the contents 511 to be reproduced to the player 453 selected at the processing of step S3103.

At step S4101, the player 453 reproduces the contents specified with the file name notified in the processing at step S3104, and the processing is ended thereby.

Incidentally, a pass name is contained in the file name. Unless specifically described in particular, the pass name shall be contained in the file name.

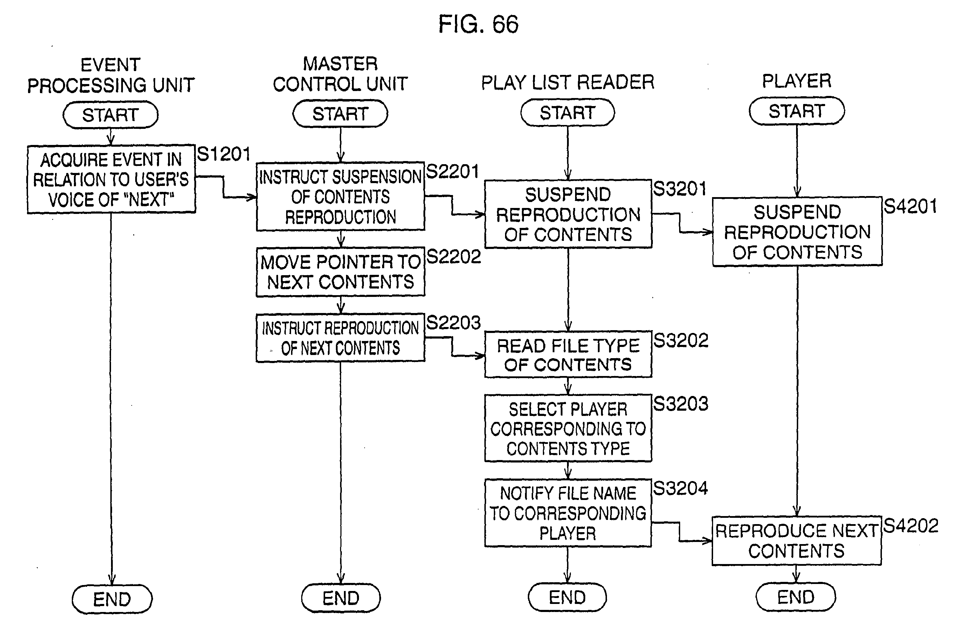

Fig. 66 is a flowchart for explaining the processing of the information provision terminal device 301 in relation to the event (command) of "next", which is the voice of the user 1.

At step S1201, the event processing unit 461 acquires an event in relation to "next", which is the voice of the user 1, supplied from the voice input unit 462, and supplies the acquired event to the master control unit 451. At step S2201, the master control unit 451 designates the suspension of reproduction of the contents to the play list reader 452.

At step S3201, the play list reader 452 designates the suspension of reproduction of the contents to the player 453. At step S4201, the player 453 suspends the reproduction of contents.

At step S2202, the master control unit 451 moves the pointer to the next contents so as to indicate the subject contents of the folder 501 represented with the information stored in the current pointer 459. At step S2203, the master control unit 451 designates the reproduction of the subsequent contents 511 indicated with the pointer to the play list reader 452.

At step S3202, the play list reader 452 reads the file type of the contents 511 in which the reproduction thereof was designated in the processing at step S2203 from the contents 511 stored in the contents memory unit 388. At step S3203, the play list reader 452 selects the player 453 corresponding to the contents type.

At step S3204, the play list reader 452 notifies the file name of the contents 511 to be reproduced to the player 453 selected in the processing at step S3203. At step S4202, the player 453 reproduces the contents specified with the file name notified in the processing at step S3204, and the processing is ended thereby.

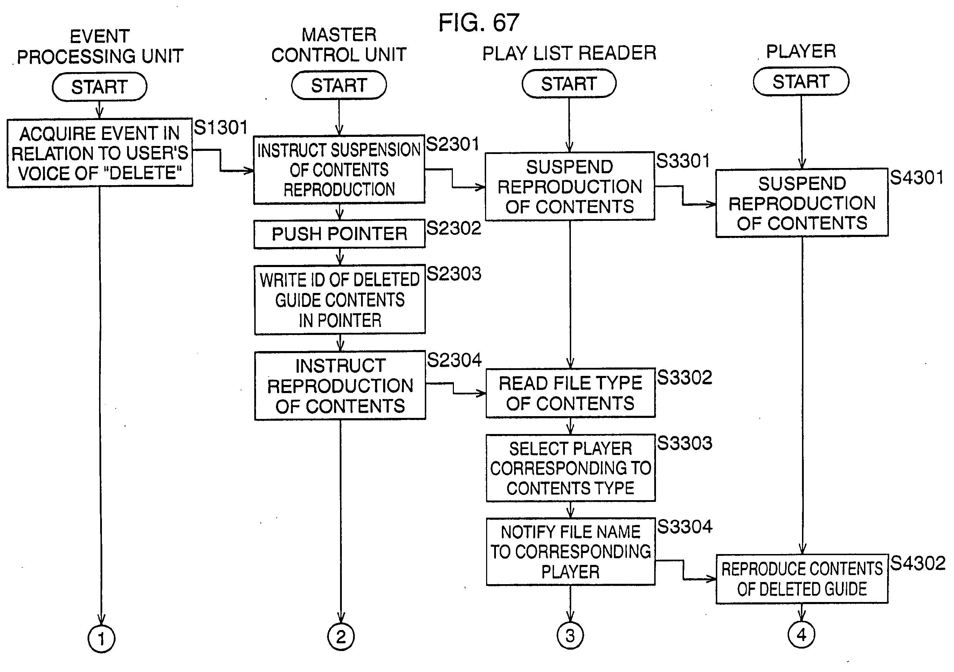

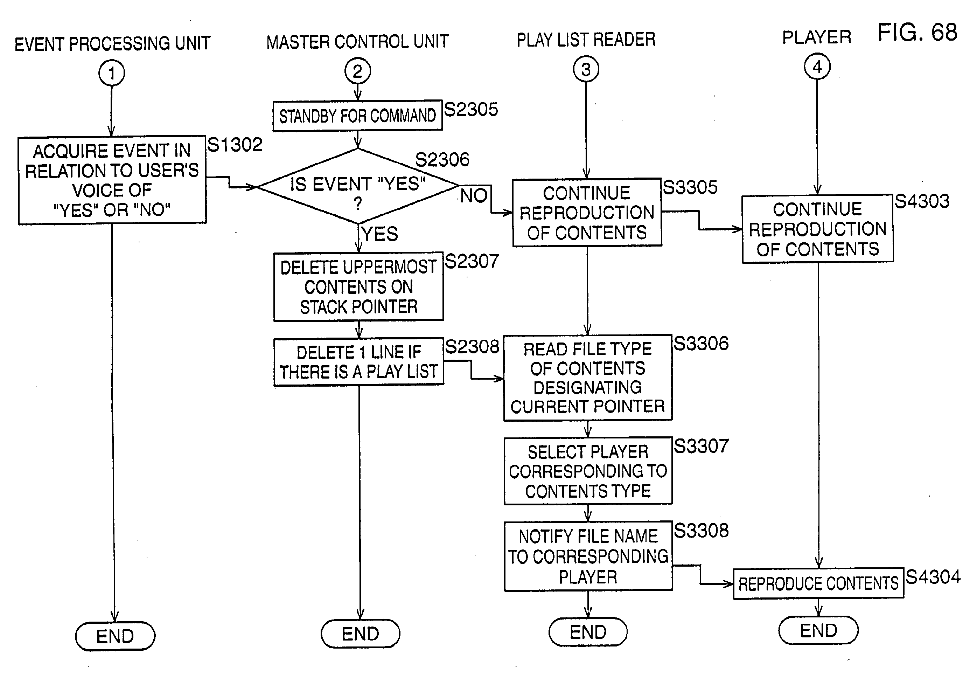

Fig. 67 and Fig. 68 are flowcharts for explaining the processing of the information provision terminal device 301 in relation to the event (command) of "delete", which is the voice of the user 1.

At step S1301, the event processing unit 461 acquires an event in relation to "delete, which is the voice of the user 1, supplied from the voice input unit 462, and supplies the acquired event to the master control unit 451.

At step S2301, the master control unit 451 designates the suspension of reproduction of the contents to the play list reader 452. At step S3301, the play list reader 452 designates the suspension of reproduction of the contents to the player 453.

At step S4301, the player 453 suspends the reproduction of contents At step S2302, the master control unit 451 pushes the value of the current pointer 459 into the pointer stack 460.

At step S2303, the master control unit 451 writes the ID (Identifier) of the deletion guide contents 511 in the current pointer 459. At step S2304, the master control unit 451 designates the reproduction of the contents 511 represented with the current pointer 459 to the play list reader 452.

At step S3302, the play list reader 452 reads the file type of the contents in which the reproduction thereof was designated in the processing at S2304 from the contents stored in the contents memory unit 388. At step S3303, the play list reader 452 selects the player 453 corresponding to the contents type.

At step S3304, the play list reader 452 notifies the file name of the contents 511 to be reproduced to the player 453 selected in the processing at step S3303. At step S4302, the player 453 reproduces the contents 511 of the deletion guide specified with the file name notified in the processing at step S3304.

At step S2305, the master control unit 451 becomes a state of standing by for a command. At step S1302, the event processing unit 461 acquires an event in relation to "yes" or "no", which is the voice of the user 1, supplied from the voice input unit 462, and supplies the acquired event to the master control unit 451.

At step S2306, the master control unit 451 determines whether the event supplied from the event processing unit 461 is "yes", and, when the event is not "yes"; in other words, when the event is "no", the [routine] proceeds to step S3305 since the user 1 is not desiring the deletion of contents and the play list reader 452 designates the continuation of reproduction of the contents 511 to the player 453.

At step S4303, the player 453 continues the reproduction of the contents 511 based on the designation of continuing the reproduction of the contents 511 from the play list reader 452. Meanwhile, at step S2306, when the event is "yes", the [routine] proceeds to S2307 since the user 1 is desiring the deletion of contents and the master control unit 451 deletes the contents represented with information stored at the uppermost part of the stack pointer 460 (information pushed immediately before) from the contents memory unit 388.

At step S2308, if there is a play list 514, the master control unit 451 deletes one line corresponding to the deleted contents 511 from the play list 514. A value designating the subsequent contents 511 on the play list 514 is set in the current pointer 459. At step S3306, the play list reader 452 reads the file type of the contents 511 designated with the current pointer 459 from the contents 511 stored in the contents memory unit 388.

At step S3307, the play list reader 452 selects the player 453 corresponding to the contents type. At step S3308, the play list reader 452 notifies the file name of the contents 511 to be reproduced to the player 453 selected in the processing at step S3307.

At step S4304, the player 453 reproduces the contents 511 specified with the file name notified in the processing at step S3308, and the processing is ended thereby.

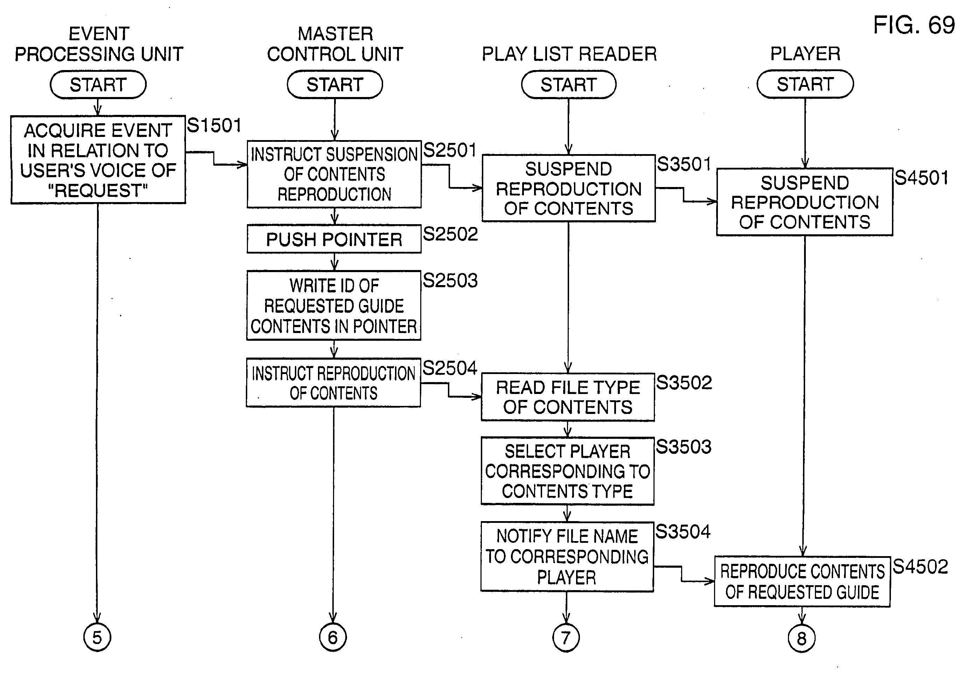

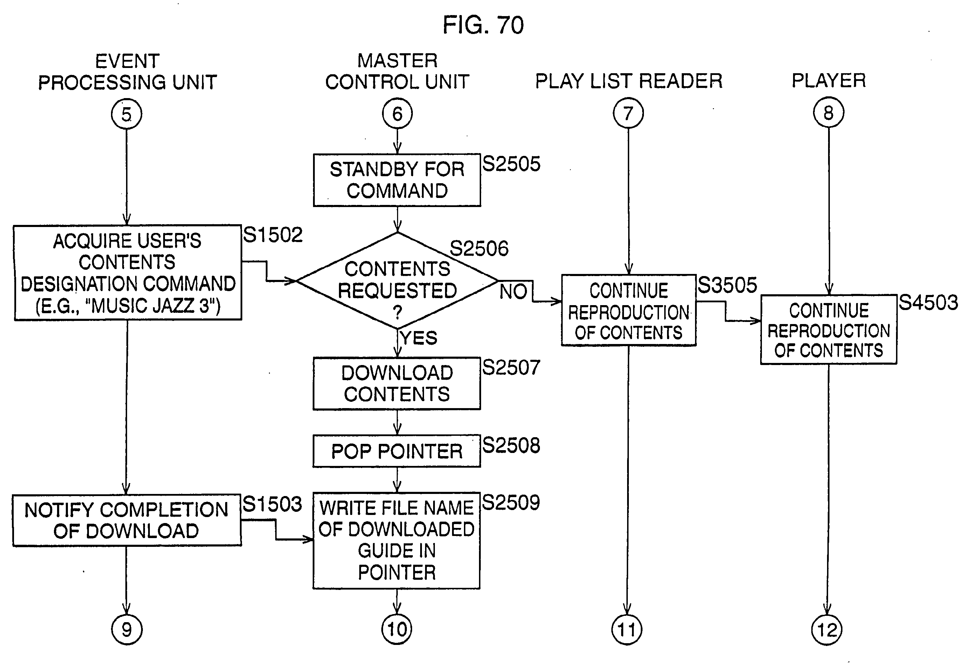

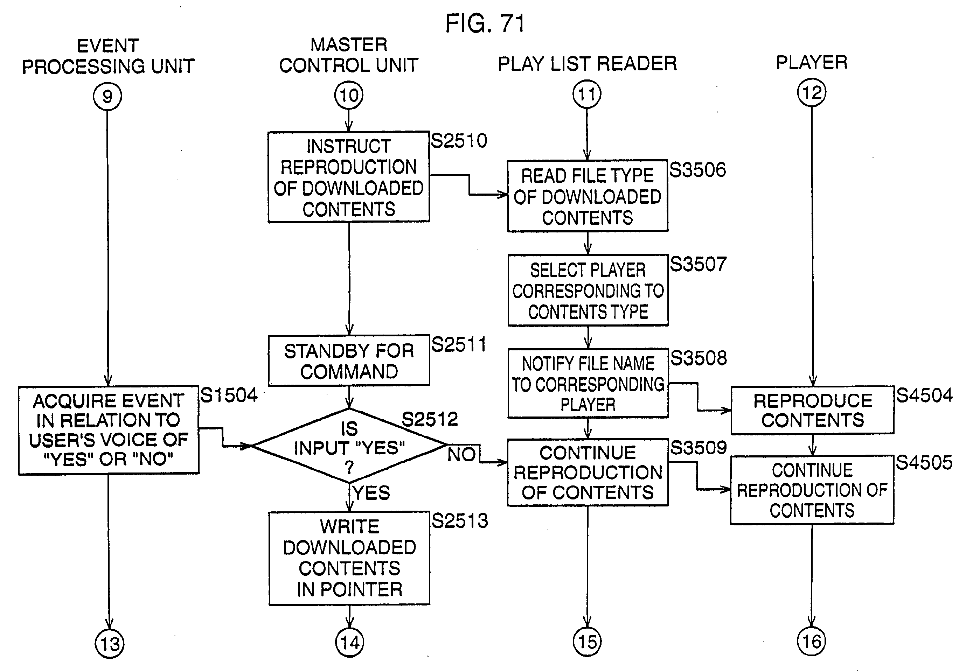

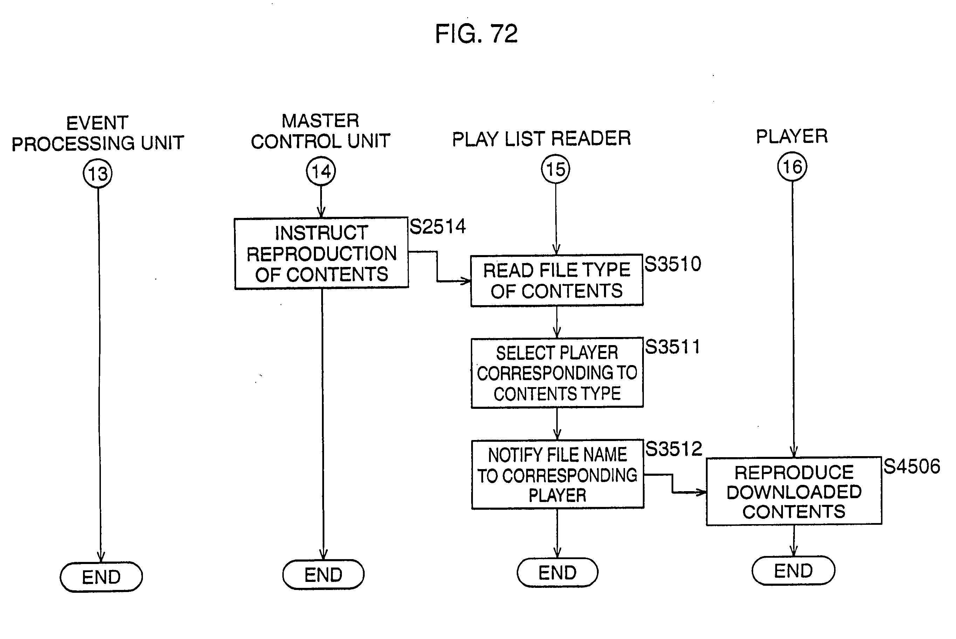

Fig. 69 to Fig. 72 are flowcharts for explaining the processing of the information provision terminal device 301 in relation to the event (command) of "request", which is the voice of the user 1.

At step S1501, the event processing unit 461 acquires an event in relation to "request", which is the voice of the user 1, supplied from the voice input unit 462, and supplies the acquired event to the master control unit 451. At step S2501, the master control unit 451 designates the suspension of reproduction of the contents to the play list reader 452.

At step S3501, the play list reader 452 designates the suspension of reproduction of the contents to the player 453. At step S4501, the player 453 suspends the reproduction of contents.

At step S2502, the master control unit 451 pushes the value of the current pointer 459 into the pointer stack 460. At step S2503, the master control unit 451 writes the ID of the request guide contents 511 in the current pointer 459.

At step S2504, the master control unit 451 designates the reproduction of the contents 511 represented with the current pointer 459 to the play list reader 452. At step S3502, the play list reader 452 reads the file type of the contents 511 in which the reproduction thereof was designated in the processing at step S2504 from the contents 511 stored in the contents memory unit 388.

At step S3503, the play list reader 452 selects the player corresponding to the contents type. At step S3504, the play list reader 452 notifies the file name of the contents 511 to be reproduced to the player 453 selected in the processing at step S3503.

At step S4502, the player 453 reproduces the contents 511 of the request guide specified with the file name notified in the processing at step S3504. At step S2505, the master control unit 451 becomes a state of standing by for a command.

At step S1502, the event processing unit 461 acquires the contents designation command, which is the event in relation to the voice of the user 1 supplied from the voice input unit 462, and supplies the acquired event to the master control unit 451.

The contents designation command, for example, is "music jazz 3" or the like.

At step S2506, the master control unit 451 determines whether the event supplied from the event processing unit 461 is a contents request, and, when the event is not a contents request, the [routine] proceeds to step S3505 since the user 1 is not desiring a contents request, and the play list reader 452 designates the continuation of reproduction of the contents 511 to the player 453.

At step S4503, the player 453 continues the reproduction of the contents 511 based on the designation of continuing the reproduction of the contents 511 from the play list reader 452.

Meanwhile, at step S2506, when the event is a contents request, the [routine] proceeds to step S2507 since the user 1 is desiring a contents request, and the master control unit 451 designates the download of the (contents 511 of the) folder 501 specified in the contents request to the communication unit 456. The master control unit 451 specifies the folder 501 subject to such download from the contents request based on the master designation data 515 or dynamic command map data 812.

The communication unit 456 requests the download of the (contents 511 of the) folder 501 requested to the information provision server 302 via the network 303, and receives the (contents 511 of the) folder 501 transmitted from the information provision server 302.

At step S2508, the master control unit 451 pops the value from the pointer stack 460 to the current pointer 459. At step S1503, the event processing unit 461 supplies the download completion event to the master control unit 451 when such download completion event is supplied from the communication unit 456, and notifies the completion of download.

At step S2509, the master control unit 451 writes the file name of the download completion guide in the current pointer 459. At step S2510, the master control unit 451 designates the reproduction of the download completion contents 511 represented with the current pointer 459 to the play list reader 452.

At step S3506, the play list reader 452 reads the file type of the contents in which the reproduction thereof was designated in the processing at step S2510 from the contents 511 stored in the contents memory unit 388. At step S3507, the play list reader 452 selects the player 453 corresponding to the contents type. At step S3508, the play list reader 452 notifies the file name of the contents 511 to be reproduced to the player 453 selected in the processing at step S3507.

At step S4504, the player 453 reproduces the download completion contents 511 specified with the file name notified in the processing at step S3508. At step S2511, the master control unit 451 becomes a state of standing by for a command.

At step S1504, the event processing unit 461 acquires an event in relation to "yes" or "no", which is the voice of the user 1 supplied from the voice input unit 462, and supplies the acquired event to the master control unit 451.

At step S2512, the master control unit 451 determines whether the event supplied from the event processing unit 461 is "yes", and, when the event is not "yes"; in other words, when the event is "no", the [routine] proceeds to step S3509 since the user 1 is not desiring the deletion of contents and the play list reader 452 designates the continuation of reproduction of the contents 511 to the player 453.

At step S4505, the player 453 continues the reproduction of the contents 511 based on the designation of continuing the reproduction of the contents 511 from the play list reader 452.

Meanwhile, at step S2512, when the event is "yes", the [routine] proceeds to S2513 since the user 1 is desiring the deletion of contents and the master control unit 451 writes information designating the contents 511 of the completely download folder 501 to the current pointer 459. At step S2514, the master control unit 451 designates the reproduction of the contents 511 represented with the current pointer 459 to the play list reader 452.

At step S3510, the play list reader 452 reads the file type of the contents 511 in which the reproduction thereof was designated in the processing at step S2514 from the contents 511 stored in the contents memory unit 388. At step S3511, the play list reader 452 selects the player 453 corresponding to the contents type.

At step S3512, the play list reader 452 notifies the file name of the contents 511 to be reproduced to the player 453 selected in the processing at step S3511. At step S4506, the player 453 reproduces the downloaded contents 511 specified with the file name notified in the processing at step S3512, and the processing is ended thereby.

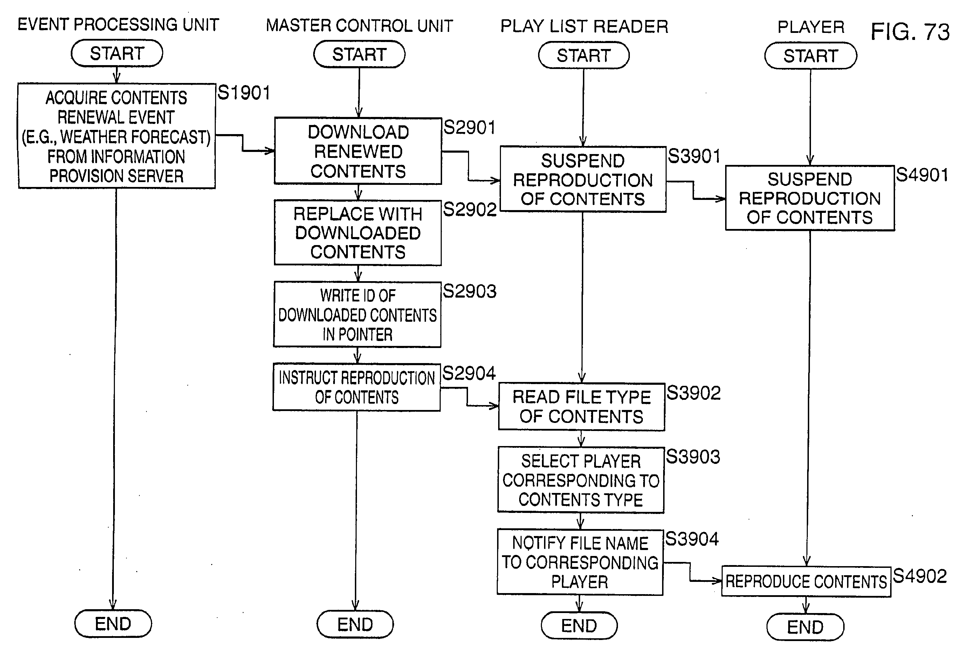

Fig. 73 is a flowchart for explaining the processing of the information provision terminal device 301 in relation to the event from the information provision server 302.

At step S1901, the event processing unit 461 acquires the contents renewal event transmitted from the information provision server 302 and supplied from the communication unit 456, and supplies the acquired contents renewal event to the master control unit 451. The contents renewal event, for instance, represents the renewal of the contents 511 of a weather forecast.

At step S2901, the master control unit 451 designates the suspension of reproduction of the contents to the play of list reader 452. At step S3901, the play list reader 452 designates the suspension of reproduction of the contents to the player 453. At step S4901, the player 453 suspends the reproduction of the contents.

Further, at step S2901, the master control unit 451 designates the download of the renewed contents to the communication unit 456. The master control unit 451 specifies the folder 501 to become the subject of download from the contents renewal event based on the master designation data 515 or dynamic command map data 812.

The communication unit 456 requests the download of the (contents 511 of the) folder 501 (here, the weather forecast contents 511) to the information provision server 302 via the network 303, and receives the (contents 511 of the) folder 501 transmitted from the information provision server 302.

At step S2902, the master control unit 451 replaces the contents 511 stored in the contents memory unit 388 with the downloaded contents 511. In other words, the contents 511 stored in the contents memory unit 388 are replaced with the new contents 511.

At step S2903, the master control unit 451 writes the ID of the downloaded contents in the current pointer 459. At step S2904, the master control unit 451 designates the reproduction of the contents 511 represented with the current pointer 459 to the play list reader 452.

At step S3902, the play list reader 452 reads the file type of the contents 511 in which the reproduction thereof was designated in the processing at step S2904 from the contents 511 stored in the contents memory unit 388. At step S3903, the play list reader 452 selects the player 453 corresponding to the contents type.

At step S3904, the play list reader 452 notifies the file name of the contents 511 to be reproduced to the player 453 selected in the processing at step S3903. At step S4902, the player 453 reproduces the downloaded contents 511 specified with the file name notified in the processing at step S3304, and the processing is ended thereby.

Next, details regarding the processing of the master control unit 451 are explained.

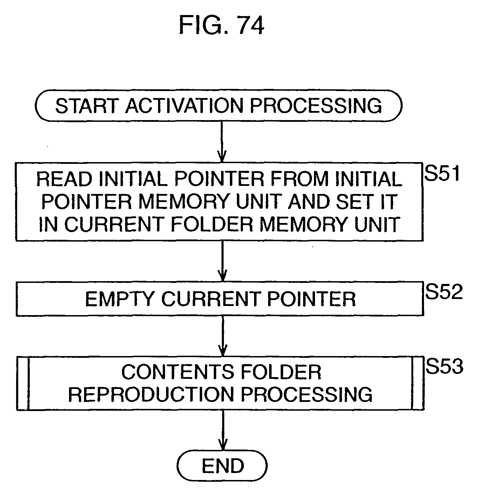

Fig. 74 is a flowchart for explaining the activation processing of the master control unit 451.

At step S51, the master control unit 451 reads the initial pointer from the initial pointer memory unit 458, and sets it in the current folder memory unit 702. At step S52, the master control unit 451 empties the current pointer 459.

At step S53, the master control unit 451 executes the contents folder reproduction processing, and the processing is ended thereby.

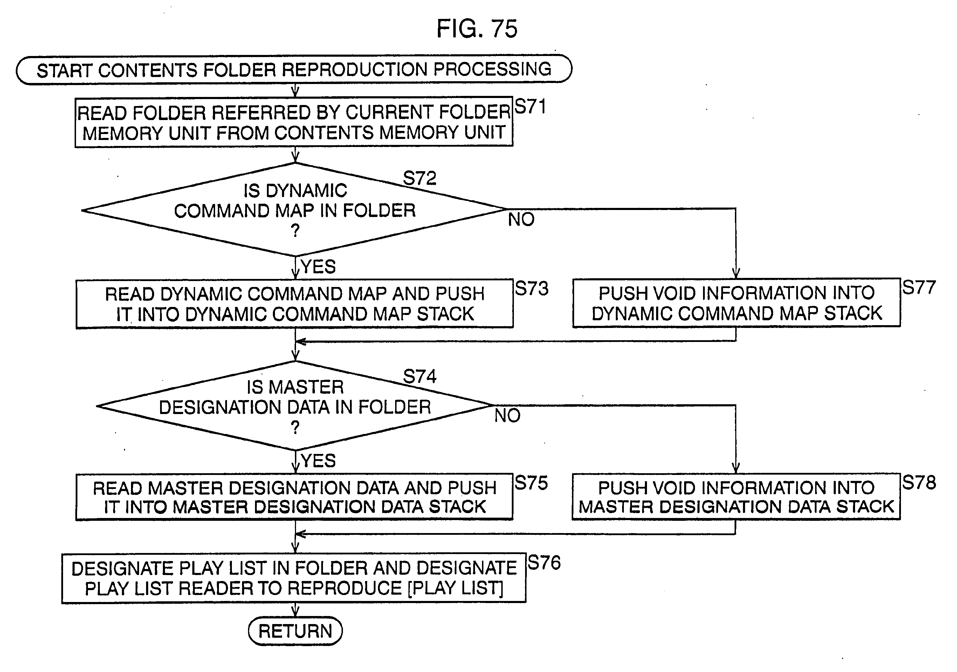

Fig. 75 is a flowchart for explaining the contents folder reproduction processing in detail.

At step S71, the master control unit 451 reads the folder 501 referred to by the current folder memory unit 702 from the contents memory unit 388.

At step S72, the master control unit 451 determines whether the folder 501 contains the dynamic command map data 812, and, when it is determined that the folder 501 contains the dynamic command map data 812, the [routine] proceeds to step S73, and the [master control unit 451] reads the dynamic command map data 812, pushes the dynamic command map data 812 into the dynamic command stack 704, and the routine proceeds to step S74.

At step S74, the master control unit 451 determines whether the folder 501 contains the master designation data 515, and, when it is determined that the folder 501 contains the master designation data 515, the [routine] proceeds to step S75, and the [master control unit 451] reads the master designation data 515, pushes the master designation data 515 into the master designation data stack 705, and the routine proceeds to step S76.

At step S76, the master control unit 451 designates the play list 501 contained in the folder 501, designates the reproduction thereof to the play list reader 452, and the processing is ended thereby.

At step S72, when it is determined that the folder 501 does not contain the dynamic command map data 812, the [routine] proceeds to step S77, the void information (information representing that it is empty) is pushed into the dynamic command stack 704, and the routine proceeds to step S74.

At step S74, when it is determined that the folder 501 does not contain the master designation data 515, the [routine] proceeds to step S78, the void information is pushed into the master designation data stack 705, and the routine proceeds to step S76.

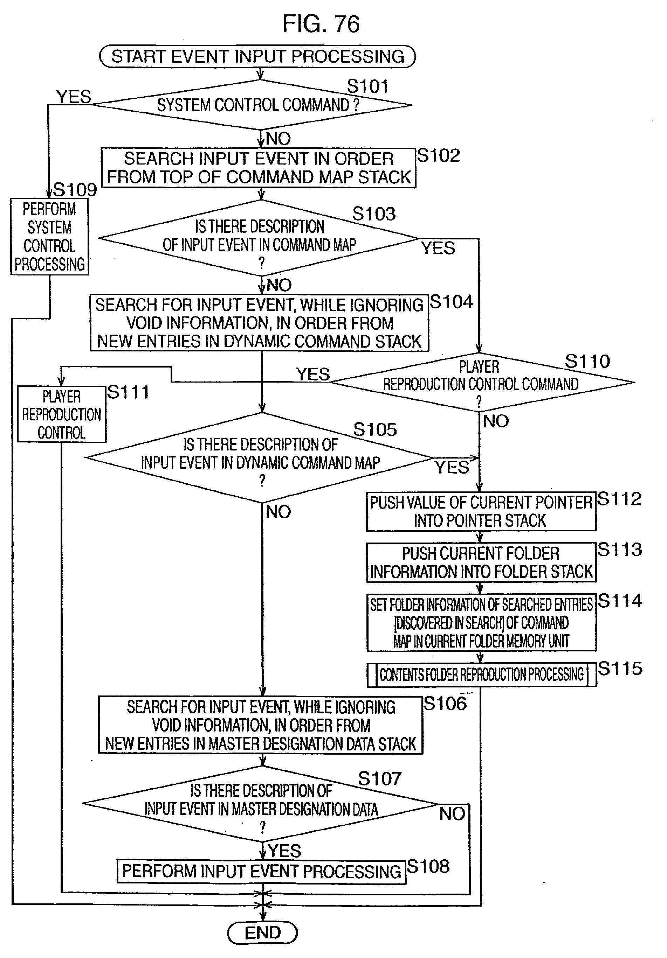

Fig. 76 is a flowchart for explaining the event input processing by the master control unit 451.

At step S101, the master control unit 451 determines whether the input event is a system control command, and, when it is determined that the event is not a system control command, the [routine] proceeds to step S102, and searches for the input event in order from the top of the command map stack.

At step S103, the master control unit 451 determines whether there is a description of the event input to the command map data 811, and, when it is determined that there is no description of the event input to the command map data 811, the [routine] proceeds to step S104, and searches for the input event, while ignoring the void information, in the order of new entry of the dynamic command stack 704.

At step S105, the master control unit 451 determines whether there is a description of the event input to the dynamic command map data 812, and, when it is determined that there is no description of the event input to the dynamic command map data 812, the [routine] proceeds to step S106, and searches for the input event, while ignoring the void information, in the order of new entry of the master designation data stack 705.

At step S107, the master control unit 451 determines whether there is a description of the event input to the master designation data 515, and, when it is determined that there is a description of the event input to the master designation data 515, the [routine] proceeds to step S108, and executes the processing of the input event based on the command described in correspondence to the event input to the master designation data 515.

At step S107, when it is determined that there is no description of the event input to the master designation data 515, since the input event is not a system control command, and not described in the command map data 811, dynamic command map data 812 and master designation data 515, the processing is ended thereby.

At step S101, when it is determined that the event is a system control command, the [routine] proceeds to step S109, and the master control unit 451 executes system control processing, and the processing is ended thereby.

At step S103, when it is determined that there is a description of the event input to the command map data 811, the [routine] proceeds to step S110, and determines whether the input event is a player reproduction control command, and, when the input event is determined to be a player reproduction control command, the [routine] proceeds to step S111, and the master control unit 451 executes the player reproduction control corresponding to the input event, which is the player reproduction control command, and the processing is ended thereby.

At step S110, when it is determined that the input event is not a player reproduction control command, the [routine] proceeds to step S112, and the master control unit 451 pushes the value of the current pointer 459 into the pointer stack 460.

At step S113, the master control unit 451 pushes the current folder information stored in the current folder memory unit 702 to the folder stack 703. At step S114, the master control unit 451 sets the entry folder information discovered in the search of the command map data 811 or dynamic command map data 812 in the current folder memory unit 702.

At step S115, the master control unit 451 executes the contents folder reproduction processing, and the processing is ended thereby. Incidentally, the contents folder reproduction processing at step S115 is the same as the processing explained with reference to the flowchart shown in Fig. 75.

At step S105, when it is determined that there is a description of the event input to the dynamic command map data 812, the [routine] proceeds to step S112, and executes the foregoing processing.

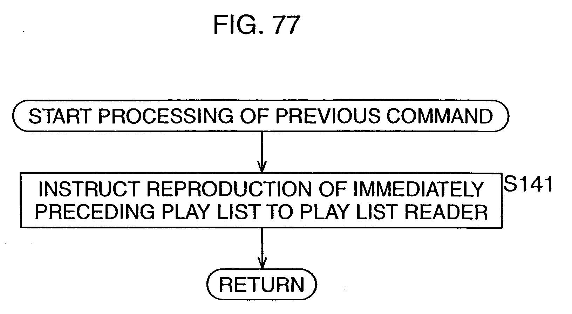

Fig. 77 is a flowchart for explaining the previous command processing.

At step S141, the master control unit 451 command the play list reader 452 to reproduce the immediately preceding contents described in the play list 514 . At step S141, the play list reader 452 which is designated by the master control unit 451 command the player 453 to reproduce the immediately preceding contents described in the play list 514 , and the processing is ended thereby.

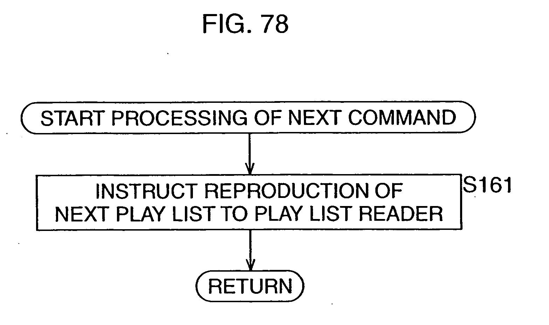

Fig. 78 is a flowchart for explaining the subsequent command processing.

At step S161, the master control unit 451 command the play list reader 452 to reproduce the subsequent contents described in the play list 514 . At step S161, the play list reader 452 which is designated by the master control unit 451 command the player 453 to reproduce the subsequent contents described in the play list 514 , and the processing is ended thereby.

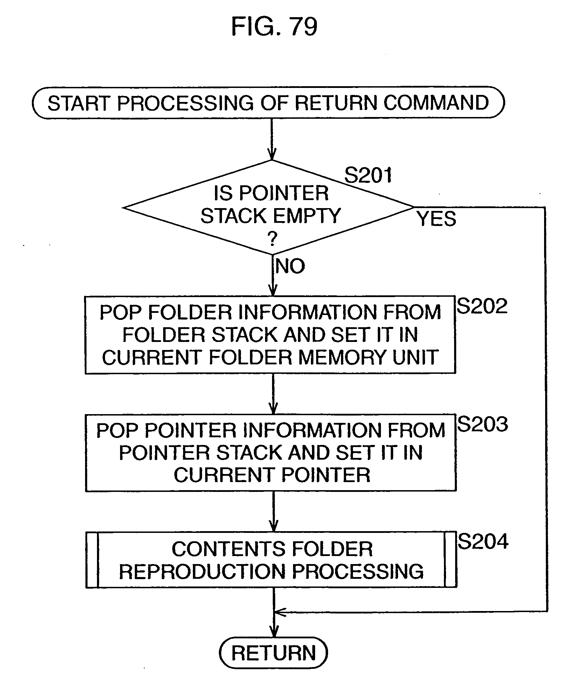

Fig. 79 is a flowchart for explaining the return command processing.

At step S201, the master control unit 451 determines whether the pointer stack 460 is empty, and, when the pointer stack 460 is not empty; that is, when the pointer information is stored in the pointer stack 460, the [routine] proceeds to step S202, and the master control unit 451 pops the folder information from the folder stack 703, and sets the popped folder information in the current folder memory unit 702.

At step S203, the master control unit 451 pops the pointer information from the pointer stack 460, and sets it in the current pointer 459. At step S204, the master control unit 451 executes the contents folder reproduction processing, and the processing is ended thereby. Incidentally, the contents folder reproduction processing at step S204 is the same as the processing explained with reference to the flowchart shown in Fig. 75.

At step S201, when it is determined that the pointer stack 460 is empty, the processing will end.

As described above, when a return command is input, the master control unit 451 is able to reproduce the contents 511 stored in the folder 501 reproduced previously.

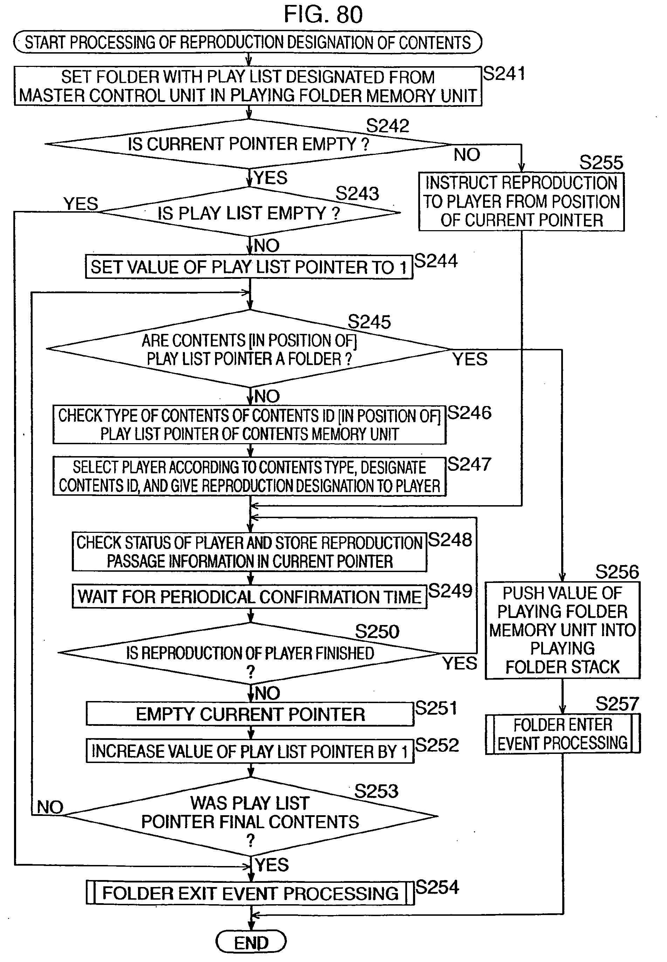

Fig. 80 is a flowchart for explaining the processing of reproduction designation of contents By the play list reader 452.

At step S241, the play list reader 452 sets the folder 501 containing the play list 514 designated from the master control unit 451 in the playing folder memory unit.

At step S242, the play list reader 452 determines whether the current pointer 459 is empty, and, when it is determined that the current pointer 459 is empty, the [routine] proceeds to step S243, and further determines whether the play list 514 is empty. At step S243, when it is determined that the play list 514 is not empty, the [routine] proceeds to step S244, and the play list reader 452 sets the value of the play list pointer to 1.

At step S245, the play list reader 452 whether the contents 511 of the play list position is a folder 501; in other words, whether the contents 511 in a position designated with the play list pointer in the play list 514 is a folder 501, and, when it is determined that it is not a folder 501, the [routine] proceeds to step S246.

At step S246, the play list reader 452 checks the type of contents 511 of the contents ID in the play list pointer position of the contents memory unit 388. In other words, the play list reader 452 acquires information representing the type of contents 511 in a position designated with the play list pointer in the play list 514 stored in the contents memory unit 388.

At step S247, the play list reader 452 selects the player 453 according to the type of contents 511, designates the contents ID, and designates the reproduction thereof to the player 453. At step S248, the play list reader 452 checks the state of the player 453, and stores the reproduction passage information in the current pointer 459.

At step S249, the play list reader 452 waits for a periodical confirmation time. At step S250, the play list reader 452 determines whether the reproduction of the player 453 has finished, and, when it is determined that the reproduction of the player 453 has not finished, the [routine] returns to step S248, and repeats the foregoing processing.

At step S250, when it is determined that the reproduction of the player 453 has finished, the [routine] proceeds to step S251, and the play list reader 452 empties the current pointer 459.

At step S252, the play list reader 452 increases the value of the play list pointer by 1. At step S253, the play list reader 452 determines whether the play list pointer was the final contents 511; that is, whether the contents 511 in a position designated with the play list pointer in the play list 514 are the final contents 511, and, when it is determined that is was not the final contents 511, the [routine] returns to step S245, and repeats the foregoing processing.

At step S253, when it is determined that it is the final contents 511, the [routine] proceeds to step S254, requests the folder exit event processing to the master control unit 451, and the processing is ended thereby. Details of the folder exit event processing will be described later.

At step S242, when it is determined that the current pointer 459 is not empty, the [routine] proceeds to step S255, and the play list reader 452 designates the reproduction from the indication of the current pointer 459 to the player 453, and the [routine] proceeds to step S248. At step S245, when it is determined to be a folder 501, the [routine] proceeds to step S256, and the play list reader 452 pushes the value of the playing folder memory unit into the playing folder stack.

At step S257, the play list reader 452 requests the folder enter event processing to the master control unit 451, and the processing is ended thereby.

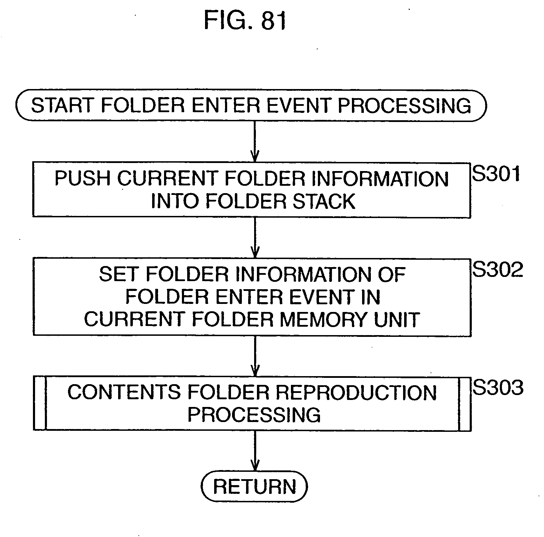

Fig. 81 is a flowchart for explaining the folder enter event processing corresponding to step S257.

At step S301, the master control unit 451 pushes the current folder information stored in the current folder memory unit 702 into the folder stack 703. At step S302, the master control unit 451 sets the folder information of the folder enter event in the current folder memory unit 702.

At step S303, the master control unit 451 executes the contents folder reproduction processing, and the processing is ended thereby. Incidentally, the contents folder reproduction processing at step S303 is the same as the processing explained with reference to the flowchart shown in Fig. 75.

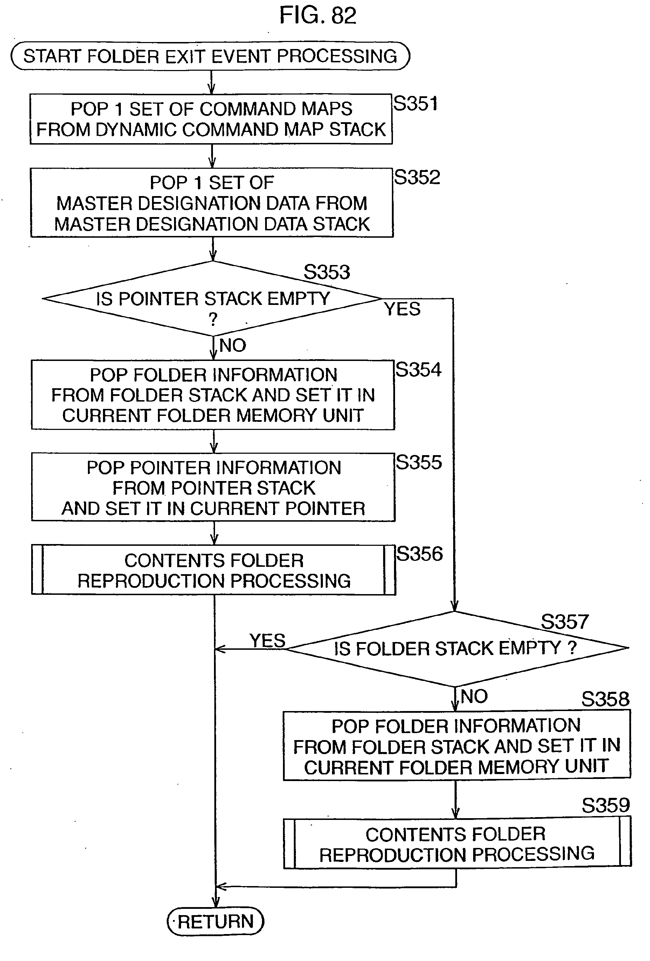

Fig. 82 is a flowchart for explaining the folder exit event processing corresponding to step S254.

At step S351, the master control unit 451 pops 1 set of command map data 811 from the dynamic command stack 704.

At step S352, the master control unit 451 pops 1 set of master designation data from the master designation data stack 705.

At step S353, the master control unit 451 determines whether the pointer stack 460 is empty, and, when it is determined that the pointer stack 460 is empty, the [routine] proceeds to step S354, pops the folder information from the folder stack 703, and sets the folder information in the current folder memory unit 702.

At step S355, the master control unit 451 pops the pointer information from the pointer stack 460, and sets it in the current pointer 459.

At step S356, the master control unit 451 executes the contents folder reproduction processing, and the processing is ended thereby. Incidentally, the contents folder reproduction processing at step S356 is the same as the processing explained with reference to the flowchart shown in Fig. 75.

At step S353, when it is determined that the pointer stack 460 is empty, the [routine] proceeds to step S357, and the master control unit 451 determines whether the folder stack 703 is empty, and, when it is determined that the folder stack 703 is empty, the processing is ended thereby.

At step S357, when it is determined that the folder stack 703 is not empty, the [routine] proceeds to step S358, and the master control unit 451 pops the folder information from the folder stack 703, and sets the folder information in the current folder memory unit 702.

At step S359, the master control unit 451 executes the contents folder reproduction processing, and the processing is ended thereby. Incidentally, the contents folder reproduction processing at step S359 is the same as the processing explained with reference to the flowchart shown in Fig. 75.

As described above, when information is output, information can be provided to a user.

Further, when the event response control program associated with an aggregate containing information being output is read, the output of such aggregate is controlled based on the read event response control program and in correspondence with an event, and the output of information containing the aggregate is controlled based on the ordinal data associated with the aggregate the output of which has been instructed, this will enable the continuous output of required information at an appropriate timing and in appropriate order with minimal operation.

When information is to be received, the received information can be output.

Moreover, when the reception of the aggregate is controlled based on an event response control program associated with the aggregate, which contains the information being output, within the event response control program having described therein a command for an event associated with each of the aggregates, and in correspondence with the event; and the transmission of the request of the aggregate, the reception of which has been designated at the aggregate reception control step, to the information provision device for providing the information is controlled, and the reception of the information belonging to the requested aggregate and the event response control program associated with the requested aggregate provided from the information provision device is controlled, this will enable the continuous reception of required information at an appropriate timing and in appropriate order with minimal operation.

In addition, when the memory of the information having a hierarchical structure with an aggregate of the information as the unit thereof and the memory of the event response control program having described therein a command for an event on the reception side associated with each of the aggregates are controlled; and the transmission of the information belonging to the requested aggregate and the event response control program associated with the requested aggregate to the information reception device when the aggregate is requested from the information reception device for receiving the information is controlled, this will enable the continuous reception of required information at an appropriate timing and in appropriate order with minimal operation.

When the program is associated with a first aggregate, which is an aggregate among the aggregates; [the program] is read into the computer for controlling the output or reception of the information when the information belonging to the first aggregate or the information belonging to the aggregate of the descendant of the first aggregate is being output; and [the program] makes the computer execute the processing in relation to at least the output of a second aggregate, which is another aggregate among the aggregates, or the reception of the second aggregate when a prescribed event occurs, it will be possible to enable the continuous output of required information at an appropriate timing and in appropriate order with minimal operation, or enable the continuous reception of required information at an appropriate timing and in appropriate order with minimal operation.

Further, in addition to information being stored, when the event response control program having described therein a command for an event on the reception side associated with each of the aggregates is stored; information belonging to the requested aggregate and the event response control program associated with the requested aggregate to the information reception device when the aggregate is requested from the information reception device for receiving the information are transmitted; reception of the aggregate is controlled based on an event response control program associated with the aggregate, which contains the information being output, within the event response control program having described therein a command for an event associated with each of the aggregates, and in correspondence with the event; request of the aggregate, the reception of which has been designated, to the information provision device is transmitted, and information belonging to the requested aggregate and the event response control program associated with the requested aggregate provided from the information provision device is received, this will enable the continuous output of required information at an appropriate timing and in appropriate order with minimal operation in the information reception device.

The foregoing series of processing may be executed with hardware, and may also be executed with software. When executing series of processing with software, the program constituting such software is installed from a recording medium into a computer built in dedicated hardware, or into a versatile personal computer capable of executing the various functions.

As shown in Fig. 22, Fig. 23 or Fig. 24, this recording medium is constituted from a package media, separate from a computer, such as a magnetic disk 391 or magnetic disk 411 (including a flexible disk), optical disk 392 or optical disk 412 (including a CD-ROM (Compact Disc-Read Only Memory) and DVD (Digital Versatile Disc)), magnetic optical disk 393 or magnetic optical disk 413, or semiconductor memory 394 or semiconductor memory 414 having a program recorded thereon and to be distributed for providing a program to a user, or may be constituted of a ROM 383 or ROM 403, or a hard disk not shown having a program recorded thereon to be provided to a user in a state of being pre-installed in a computer.

Incidentally, in the present description, the step of describing a program stored in the recording medium includes processing to be performed in chronological order along the described order, as well as processing to be performed serially or individually even if it is not processed in chronological order.

### INDUSTRIAL APPLICABILITY

As described above, according to the first present invention, information can be output to a user.

Further, according to the first present invention, appropriate information can be continuously output at an appropriate timing and in appropriate order with minimal operations.

According to the second present invention, a [user] is able to receive information.

Moreover, according to the second present invention, appropriate information can be continuously received at an appropriate timing and in appropriate order with minimal operations.

## Claims

1. An information output device for outputting information having a hierarchical structure with an aggregate of said information as the unit thereof, comprising:
aggregate output control means for controlling the output of said aggregate based on an event response control program associated with said aggregate which contains said information being output, of event response control programs having described therein a command for an event associated with each of said aggregates, and in correspondence with said event; and
information output control means for controlling the output of said information contained in said aggregate based on ordinal data associated with said aggregate, in which the output thereof has been instructed by said aggregate output control means, of ordinal data having described therein the output order of said information associated with each of said aggregates.

2. An information output device according to claim 1, wherein said aggregate output control means controls the output of said aggregate based on said event response control program associated with said aggregate containing said information being output, and said event response control program associated with said aggregate of the ancestor of said aggregate containing said information being output, and in correspondence with said event.

3. An information output device according to claim 1 or claim 2, further comprising reproduction means for reproducing said information to be output based on the control of said information output control means and in correspondence with the type of said information.

4. An information output device according to any one of claims 1 to 3, further comprising event generation means for acquiring the outside status and generating said event.

5. An information output device according to any one of claims 1 to 4, further comprising memory control means for controlling the memory of said information, said event response control program, and said ordinal data.

6. An information output device according to any one of claims 1 to 5, further comprising communication control means for controlling the transmission of a request of said aggregate, the reception of which has been instructed by said aggregate output control means, to the information provision device for providing said information, and controlling the reception of said information belonging to said requested aggregate as well as said event response control program and said ordinal data associated with said requested aggregate, provided from said information provision device.

7. An information output device according to any one of claims 1 to 6, wherein said aggregate output control means rewrites said ordinal data.

8. An information output method for outputting information having a hierarchical structure with an aggregate of said information as the unit thereof, comprising:
an aggregate output control step for controlling the output of said aggregate based on an event response control program associated with said aggregate which contains said information being output, of event response control programs having described therein a command for an event associated with each of said aggregates, and in correspondence with said event; and
an information output control step for controlling the output of said information contained in said aggregate based on ordinal data associated with said aggregate, the output of which has been instructed at said aggregate output control step, of the ordinal data having described therein the output order of said information associated with each of said aggregates.

9. A recording medium having recorded thereon a computer-readable program for making a computer execute processing for controlling the output of information having a hierarchical structure with an aggregate of said information as the unit thereof, said program comprising:
an aggregate output control step for controlling the output of said aggregate based on an event response control program associated with said aggregate which contains said information being output, of event response control programs having described therein a command for an event associated with each of said aggregates, and in correspondence with said event; and
an information output control step for controlling the output of said information contained in said aggregate based on ordinal data associated with said aggregate, the output of which has been instructed at said aggregate output control step, of the ordinal data having described therein the output order of said information associated with each of said aggregates.

10. A computer-readable program for making a computer execute processing for controlling the output of information having a hierarchical structure with an aggregate of said information as the unit thereof, said program comprising:
an aggregate output control step for controlling the output of said aggregate based on an event response control program associated with said aggregate which contains said information being output, of event response control programs having described therein a command for an event associated with each of said aggregates, and in correspondence with said event; and
an information output control step for controlling the output of said information contained in said aggregate based on ordinal data associated with said aggregate, the output of which has been instructed at said aggregate output control step, of the ordinal data having described therein the output order of said information associated with each of said aggregates.

11. An information reception device for receiving information having a hierarchical structure with an aggregate of said information as the unit thereof, comprising:
aggregate reception control means for controlling the reception of said aggregate based on an event response control program associated with said aggregate, which contains said information being output, of event response control programs having described therein a command for an event associated with each of said aggregates, and in correspondence with said event; and
communication control means for controlling the transmission of the request of said aggregate, the reception of which has been instructed by said aggregate reception control means, to the information provision device for providing said information, and controlling the reception of said information belonging to said requested aggregate and said event response control program associated with said requested aggregate provided from said information provision device.

12. An information reception device according to claim 11, wherein said aggregate reception control means controls the reception of said aggregate based on said event response control program associated with said aggregate containing said information being output, and said event response control program associated with said aggregate of the ancestor of said aggregate containing said information being output, and in correspondence with said event.

13. An information reception device according to claim 11 or claim 12, further comprising memory control means for controlling the memory of said received information and said event response control program.

14. An information reception method for receiving information having a hierarchical structure with an aggregate of said information as the unit thereof, comprising:
an aggregate reception control step for controlling the reception of said aggregate based on an event response control program associated with said aggregate which contains said information being output, of event response control programs having described therein a command for an event associated with each of said aggregates, and in correspondence with said event; and
a communication control step for controlling the transmission of the request of said aggregate the reception of which has been instructed at said aggregate reception control step, to the information provision device for providing said information, and controlling the reception of said information belonging to said requested aggregate and said event response control program associated with said requested aggregate, provided from said information provision device.

15. A recording medium having recorded thereon a computer-readable program for making a computer execute processing for controlling the reception of information having a hierarchical structure with an aggregate of said information as the unit thereof, said program comprising:
an aggregate reception control step for controlling the reception of said aggregate based on an event response control program associated with said aggregate, which contains said information being output, of event response control programs having described therein a command for an event associated with each of said aggregates, and in correspondence with said event; and
a communication control step for controlling the transmission of the request of said aggregate, the reception of which has been instructed at said aggregate reception control step, to the information provision device for providing said information, and controlling the reception of said information belonging to said requested aggregate and said event response control program associated with said requested aggregate provided from said information provision device.

16. A computer-readable program for making a computer execute processing for controlling the reception of information having a hierarchical structure with an aggregate of said information as the unit thereof, said program comprising:
an aggregate reception control step for controlling the reception of said aggregate based on an event response control program associated with said aggregate which contains said information being output, of said event response control programs having described therein a command for an event associated with each of said aggregates, and in correspondence with said event; and
a communication control step for controlling the transmission of the request of said aggregate, the reception of which has been instructed at said aggregate reception control step, to the information provision device for providing said information, and controlling the reception of said information belonging to said requested aggregate and said event response control program associated with said requested aggregate provided from said information provision device.

17. An information provision device, comprising:
memory control means for controlling the memory of said information having a hierarchical structure with an aggregate of said information as the unit thereof, and controlling the memory of event response control programs having described therein a command for an event on the reception side associated with each of said aggregates; and
transmission control means for controlling, when said aggregate is requested from said information reception device for receiving said information, the transmission of said information belonging to said requested aggregate and said event response control program associated with said requested aggregate, to said information reception device.

18. An information provision device according to claim 17, wherein said memory control means further controls the memory of ordinal data having described therein the output order of said information associated with each of said aggregates; and
when said aggregate is requested from said information reception device, said transmission control means further controls the transmission of said ordinal data associated with said requested aggregate to said information reception device.

19. An information provision method, comprising:
a memory control step for controlling the memory of said information having a hierarchical structure with an aggregate of said information as the unit thereof, and controlling the memory of event response control programs having described therein a command for an event on the reception side associated with each of said aggregates; and
a transmission control step for controlling, when said aggregate is requested from said information reception device for receiving said information, the transmission of said information belonging to said requested aggregate and said event response control program associated with said requested aggregate to said information reception device.

20. A recording medium having recorded thereon a computer-readable program, comprising:
a memory control step for controlling the memory of said information having a hierarchical structure with an aggregate of said information as the unit thereof, and controlling the memory of event response control programs having described therein a command for an event on the reception side associated with each of said aggregates; and
a transmission control step for controlling, when said aggregate is requested from said information reception device for receiving said information, the transmission of said information belonging to said requested aggregate and said event response control program associated with said requested aggregate, to said information reception device.

21. A computer-readable program, comprising:
a memory control step for controlling the memory of said information having a hierarchical structure with an aggregate of said information as the unit thereof, and controlling the memory of event response control programs having described therein a command for an event on the reception side associated with each of said aggregates; and
a transmission control step for controlling, when said aggregate is requested from said information reception device for receiving said information, the transmission of said information belonging to said requested aggregate and said event response control program associated with said requested aggregate, to said information reception device.

22. A program for controlling the output or reception of information having a hierarchical structure with an aggregate of said information as the unit thereof,
wherein said program is associated with a first aggregate, which is an aggregate among said aggregates;
said program is read into the computer for controlling the output or reception of said information when said information belonging to said first aggregate or said information belonging to the aggregate of the descendant of said first aggregate is being output; and
said program makes said computer execute at least one of of the output of a second aggregate, which is another aggregate among said aggregates and the reception of said second aggregate when a prescribed event occurs.

23. An information provision system comprising an information provision device for providing information having a hierarchical structure with an aggregate of said information as the unit thereof, and an information reception device for receiving said information;
wherein said information provision device comprises:
memory control means for controlling the memory of said information hierarchical structure, and controlling the memory of event response control programs having described therein a command for an event in the information reception device associated with each of said aggregates; and
transmission control means for controlling, when said aggregate is requested from said information reception device, the transmission of said information belonging to said requested aggregate and said event response control program associated with said requested aggregate to the information reception device; and
wherein information reception device comprises:
aggregate reception control means for controlling the reception of said aggregate based on an event response control program associated with said aggregate, which contains said information being output, of the event response control programs, and in correspondence with said event; and
communication control means for controlling the transmission of the request of said aggregate, the reception of which has been instructed by said aggregate reception control means, to the information provision device, and controlling the reception of said information belonging to said requested aggregate and said event response control program associated with said requested aggregate, provided from said information provision device.

24. An information provision method, comprising:
a memory control step for controlling the memory of said information having a hierarchical structure with an aggregate of said information as the unit thereof, and controlling the memory of event response control programs having described therein a command for an event in the information reception device associated with each of said aggregates;
a transmission control step for controlling, when said aggregate is requested from said information reception device, the transmission of said information belonging to said requested aggregate and said event response control program associated with said requested aggregate to the information reception device;
an aggregate reception control step for controlling the reception of said aggregate based on an event response control program associated with said aggregate which contains said information being output, of the event response control programs, and in correspondence with said event; and
a communication control step for controlling the transmission of the request of said aggregate, the reception of which has been instructed at said aggregate reception control step, to the information provision device, and controlling the reception of said information belonging to said requested aggregate and said event response control program associated with said requested aggregate provided from said information provision device.
